(19) Europäisches Patentamt
European Patent Office
Office européen des brevets

(11) EP 0 909 284 B1

# (12) EUROPÄISCHE PATENTSCHRIFT

(45) Veröffentlichungstag und Bekanntmachung des Hinweises auf die Patenterteilung:
**02.02.2000 Patentblatt 2000/05**

(21) Anmeldenummer: **97930482.1**

(22) Anmeldetag: **02.07.1997**

(51) Int Cl.$^7$: **C08F 10/02**

(86) Internationale Anmeldenummer:
**PCT/EP97/03462**

(87) Internationale Veröffentlichungsnummer:
**WO 98/01486 (15.01.1998 Gazette 1998/02)**

## (54) VERFAHREN ZUR HERSTELLUNG VON THERMOPLASTISCHEN ELASTOMEREN

METHOD FOR PRODUCING THERMOPLASTIC ELASTOMERS

PROCEDE POUR FABRIQUER DES ELASTOMERES THERMOPLASTIQUES

(84) Benannte Vertragsstaaten:
**AT BE CH DE ES FI FR GB IT LI NL**

(30) Priorität: **05.07.1996 DE 19627064**
**05.04.1997 DE 19714058**

(43) Veröffentlichungstag der Anmeldung:
**21.04.1999 Patentblatt 1999/16**

(73) Patentinhaber: **BAYER AG**
**51368 Leverkusen (DE)**

(72) Erfinder:
- **OSTOJA STARZEWSKI, Karl-Heinz, Aleksander**
**D-61118 Bad Vilbel (DE)**
- **KELLY, Warren, Mark**
**Airdrie, Alberta T4A 2B3 (CA)**
- **STUMPF, Andreas**
**D-51375 Leverkusen (DE)**

(56) Entgegenhaltungen:
**EP-A- 0 638 593** **DE-A- 4 420 456**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 909 284 B1

## Beschreibung

Die vorliegende Erfindung bezieht sich auf den Einsatz von π-Systemen oder von Metallocen-Verbindungen, in denen ein Übergangsmetall mit zwei π-Systemen und zwar insbesondere mit aromatischen π-Systemen, wie anionischen Cyclopentadienyl-Liganden (Carbanionen), komplexiert ist und die beiden Systeme durch mindestens eine Brücke aus einem Donor und einem Akzeptor reversibel miteinander verbunden sind, als metallorganische Katalysatoren in einem Verfahren zur Herstellung von thermoplastischen Elastomeren durch (Co)Polymerisation von Monomeren aus der Gruppe der $C_2$-$C_8$-α-Olefine, der $C_4$-$C_{15}$-Diolefine, der ein- oder zweifach halogenierten Diolefine, der Vinylester, (Meth)Acrylate und Styrol. Die zwischen dem Donoratom und dem Akzeptoratom entstehende koordinative Bindung erzeugt in der Donorgruppe eine positive (Teil)Ladung und in der Akzeptorgruppe eine negative (Teil)Ladung:

$$\overset{\Delta+}{\text{[Donorgruppe}} \rightarrow \overset{\Delta-}{\text{Akzeptorgruppe]}}$$

Metallocene und ihr Einsatz als Katalysatoren bei der Polymerisation von Olefinen sind seit langem bekannt (EP-A 129 368 und die darin zitierte Literatur). Aus EP-A '368 ist weiterhin bekannt, daß Metallocene in Kombination mit Aluminiumalkyl/Wasser als Cokatalysatoren wirksame Systeme für die Polymerisation von Ethylen darstellen (so wird beispielsweise aus 1 mol Trimethylaluminium und 1 mol Wasser Methylaluminoxan = MAO gebildet. Auch andere stöchiometrische Verhältnisse wurden schon mit Erfolg angewandt (WO 94/20506)). Es sind auch bereits Metallocene bekannt, deren Cyclopentadienylgerüste miteinander durch eine Brücke kovalent verknüpft sind. Als Beispiel für die zahlreichen Patente und Anmeldungen auf diesem Gebiet sei EP-A 704 461 erwähnt, worin die darin genannte Verknupfungsgruppe eine (substituierte) Methylengruppe oder Ethylengruppe, eine Silylengruppe eine substituierte Silylengruppe, eine substituierte Germylengruppe oder eine substituierte Phosphingruppe darstellt. Auch in EP '461 sind die verbrückten Metallocene als Polymerisationskatalysatoren für Olefine vorgesehen. Trotz der zahlreichen Patente und Anmeldungen auf diesem Gebiet besteht weiterhin der Wunsch nach verbesserten Katalysatoren, die sich durch hohe Aktivität auszeichnen, so daß die Menge des im Polymer verbleibenden Katalysators gering angesetzt werden kann, und die sich gleichermaßen für die Polymerisation und Copolymerisation von Olefinen zu Thermoplasten und zu elastomeren Produkten als auch für die Polymerisation und Copolymerisation von Diolefinen, gegebenenfalls mit Olefinen, eignen.

Es wurde nun gefunden, daß sich besonders vorteilhafte Katalysatoren aus verbrückten π-Komplex-Verbindungen und insbesondere von Metallocen-Verbindungen herstellen lassen, bei denen die Verbrückung der beiden π-Systeme durch eine, zwei oder drei reversible Donor-Akzeptor-Bindungen hergestellt wird, in denen jeweils zwischen dem Donoratom und dem Akzeptoratom eine koordinative oder sogenannte dative Bindung entsteht, der zumindest formal eine ionische Bindung überlagert ist und bei denen eines der Donor- bzw. Akzeptoratome Teil des jeweils zugehörigen π-Systems sein kann. Die Reversibilität der Donor Akzeptor-Bindung läßt neben dem durch den Pfeil zwischen D und A gekennzeichneten verbrückten Zustand auch den unverbrückten Zustand zu, in welchem die beiden π-Systeme infolge der ihnen innewohnenden Rotationsenergie sich beispielsweise um 360 Winkelgrade gegeneinander drehen können, ohne daß die Integrität des Metall-Komplexes aufgegeben wird. Nach vollendeter Drehung "schnappt" die Donor-Akzeptor-Bindung wieder ein. Bei Vorliegen mehrerer Donoren und/oder Akzeptoren kann ein solches "Einschnappen" bereits nach Durchlaufen von weniger als 360 Winkelgraden stattfinden. Erfindungsgemäße einzusetzende π-Systeme, z.B. Metallocene lassen sich daher nur durch einen Doppelpfeil und die Formelteile (Ia) und (Ib) bzw. (XIIIa) und (XIIIb) zur Umfassung beider Zustände darstellen.

Die Erfindung betrifft demnach ein Verfahren zur Herstellung von thermoplastischen Elastomeren durch (Co) Polymerisation von Monomeren aus der Gruppe der $C_2$-$C_8$-α-Olefine, der $C_4$-$C_{15}$-Diolefine, der ein- oder zweifach halogenierten $C_1$-$C_{15}$-Diolefine, der Vinylester, (Meth)Acrylate und Styrol in der Masse-, Lösungs-, Slurry- oder Gasphase in Gegenwart von metallorganischen Katalysatoren, die durch Cokatalysatoren aktiviert werden können, das dadurch gekennzeichnet ist, daß als metallorganische Katalysatoren Metallocen-Verbindungen der Formel

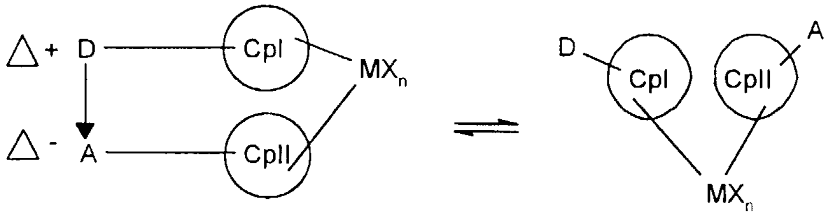

(Ia) (Ib) (I) ,

in der

Cpl und Cpll zwei gleiche oder verschiedene Carbanionen mit einer Cyclopentadienyl-haltigen Struktur darstellen, in denen eines bis alle H-Atome durch gleiche oder verschiedene Reste aus der Gruppe von linearem oder verzweigtem $C_1$-$C_{20}$-Alkyl, das 1-fach bis vollständig durch Halogen, 1-3fach durch Phenyl sowie 1-3fach durch Vinyl substituiert sein kann, $C_6$-$C_{12}$-Aryl, Halogenaryl mit 6 bis 12 C-Atomen, Organometall-Substituenten, wie Silyl, Trimethylsilyl, Ferrocenyl sowie 1- oder 2-fach durch D und A substituiert sein können,

D ein Donoratom bedeutet, das zusätzlich Substituenten tragen kann und das in seinem jeweiligen Bindungszustand mindestens über ein freies Elektronenpaar verfügt,

A ein Akzeptoratom bedeutet, das zusätzlich Substituenten tragen kann und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen,

M für ein Übergangsmetall der III., IV., V. oder VI. Nebengruppe des Periodensystems der Elemente (Mendelejew) einschließlich der Lanthaniden und Actiniden steht,

x ein Anionäquivalent bedeutet und

n in Abhängigkeit von der Ladung von M die Zahl Null, Eins, Zwei. Drei oder Vier bedeutet,

oder π-Komplex-Verbindungen und insbesondere Metallocen-Verbindungen der Formel

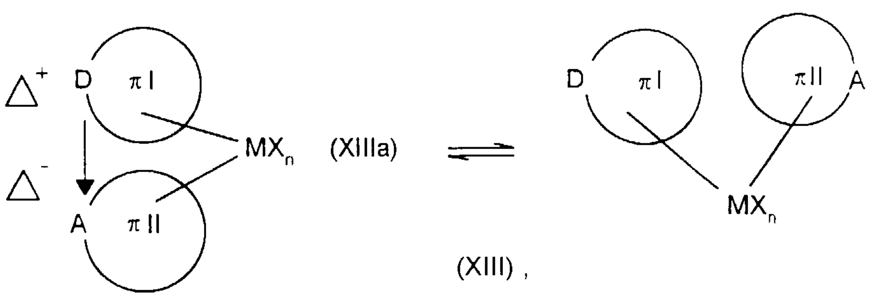

(XIIIa) (XIIIb)

(XIII) ,

in der

πI und πII voneinander verschiedene geladene oder elektrisch neutrale π-Systeme darstellen, die ein- oder zweifach mit ungesättigten oder gesättigten Fünf- oder Sechsringen kondensiert sein können,

D ein Donoratom bedeutet, das Substituent von πI oder Teil des π-Systems von πI ist und das in seinem jeweiligen

Bindungszustand mindestens über ein freies Elektronenpaar verfügt,

A ein Akzeptoratom bedeutet, das Substituent von πII oder Teil des π-Systems von πII ist und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,
wobei D und A ihrerseits Substituenten tragen können,
wobei jedes π-System bzw. jedes ankondensierte Ringsystem eines oder mehrere D oder A oder D und A enthalten kann und
wobei in πI und πII in der nicht kondensierten oder in der kondensierten Form unabhängig voneinander eines bis alle H-Atome des π-Systems durch gleiche oder verschiedene Reste aus der Gruppe von linearem oder verzweigtem $C_1$-$C_{20}$-Alkyl, das 1-fach bis vollständig durch Halogen, 1-3fach durch Phenyl sowie 1-3fach durch Vinyl substituiert sein kann, $C_6$-$C_{12}$-Aryl, Halogenaryl mit 6 bis 12 C-Atomen, Organometall-Substituenten, wie Silyl, Trimethylsilyl, Ferrocenyl sowie ein- oder zweifach durch D und A substituiert sein können, so daß die reversible koordinative D→A-Bindung (i) zwischen D und A, die beide Teile des jeweiligen π-Systems oder des ankondensierten Ringsystems sind, oder (ii) von denen D oder A Teil des π-Systems oder des ankondensierten Ringsystems und das jeweils andere Substituent des nicht kondensierten π-Systems oder des ankondensierten Ringsystems ist (sind), ausgebildet wird,
M und X die obige Bedeutung haben und

n in Abhängigkeit von den Ladungen von M sowie denen von π-I und π-II die Zahl Null, Eins, Zwei, Drei oder Vier bedeutet,

eingesetzt werden.

Erfindungsgemäße π-Systeme sind substituiertes und nicht substituiertes Ethylens Allyl, Pentadienyl, Benzyl, Butadien, Benzol, das Cyclopentadienylanion und die sich durch Ersatz mindestens eines C-Atoms durch ein Heteroatom ergebenden Spezies. Unter den genannten Spezies sind die cyclischen bevorzugt. Die Art der Koordination solcher Liganden (π-Systeme) zum Metall kann vom σ-Typ oder vom π-Typ sein.

Solche erfindungsgemäß einzusetzenden Metallocen-Verbindungen der Formel (I) können hergestellt werden, indem man entweder je eine Verbindung der Formeln (II) und (III)

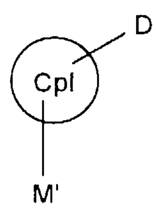 (II),

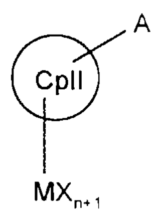 (III)

oder je eine Verbindung der Formeln (IV) und (V)

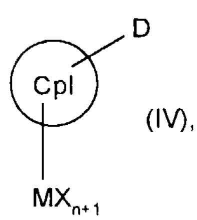 (IV),

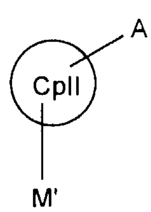 (V),

oder je eine Verbindung der Formeln (VI) und (VII)

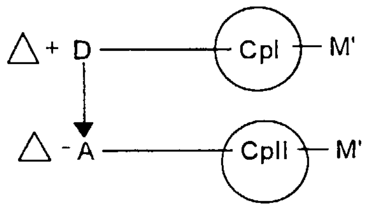

(VI) ,  $MX_{n+2}$  (VII)

unter Austritt von M'X in Gegenwart eines aprotischen Lösungsmittels oder je eine Verbindung der Formeln (VIII) und (III)

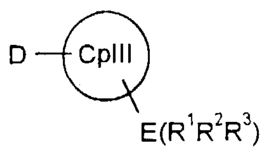

(VIII),

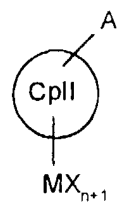

(III)

oder je eine Verbindung der Formeln (IV) und (IX)

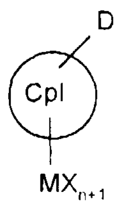

(IV),

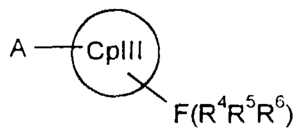

(IX)

oder je eine Verbindung der Formeln (X) und (VII)

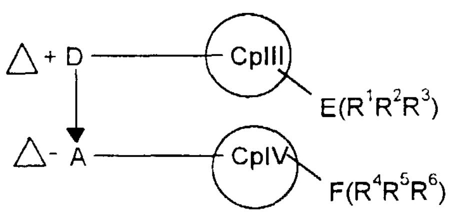

(X),  $MX_{n+2}$  (VII)

unter Austritt von $E(R^1R^2R^3)X$ und $F(R^4R^5R^6)X$ in Abwesenheit oder in Gegenwart eines aprotischen Lösungsmittels miteinander umsetzt, wobei

CpI, CpII, D, A, M, X und n die obige Bedeutung haben,

CpIII und CpIV zwei gleiche oder verschiedene ungeladene Molekülteile mit einer Cyclopentadien-haltigen Struktur darstellen, ansonsten aber CpI und CpII gleichen,

M' ein Kationaquivalent eines (Erd)Alkalimetalls oder Tl bedeutet,

E und F unabhängig voneinander eines der Elemente Si, Ge oder Sn bedeuten und

$R^1$, $R^2$, $R^3$, $R^4$, $R^5$ und $R^6$ unabhängig voneinander für geradkettiges oder verzweigtes $C_1$-$C_{20}$-Alkyl, $C_6$-$C_{12}$-Aryl sowie $C_1$-$C_6$-Alkyl-$C_6$-$C_{12}$-Aryl und $C_6$-$C_{12}$-Aryl-$C_1$-$C_6$-Alkyl, Vinyl, Alkyl oder Halogen stehen,

wobei weiterhin in den Formeln (VIII), (IX), (X) anstelle von $E(R^1R^2R^3)$ und $F(R^4R^5R^6)$ Wasserstoff stehen kann und in diesem Falle X auch für ein Amidanion vom Typ $R_2N^{\theta}$ oder ein Carbanion vom Typ $R_3C^{\theta}$ oder ein Alkoholatanion vom Typ $RO^{\theta}$ stehen kann, und wobei es weiterhin möglich ist, Verbindungen der Formeln (II) oder (VIII) in Gegenwart von Verbindungen der Formeln (V) oder (IX) direkt mit einer Übergangsmetall-Verbindung der Formel (VII) umzusetzen.

Bei der Reaktion von (VIII) mit (III) bzw. (IV) mit (IX) bzw. (X) mit (VII) bildet sich bei der zuletzt genannten Variante die Struktur (I) unter Austritt von Amin $R_2NH$ bzw. $R_2NE(R^1R^2R^3)$ bzw. $R_2NF(R^4R^5R^6)$ oder einer Kohlenwasserstoflverbindung der Formel $R_3CH$ bzw. $R_3CE(R^1R^2R^3)$ bzw. $R_3CF(R^4R^5R^6)$ oder eines Ethers $ROE(R^1R^2R^3)$ bzw. $ROF(R^4R^5R^6)$, worin die organischen Reste R gleich oder verschieden und unabhängig voneinander $C_1$-$C_{20}$-Alkyl, $C_6$-$C_{12}$-Aryl, substituiertes oder unsubstituiertes Allyl, Benzyl oder Wasserstoff sind. Beispiele für austretendes Amin oder Kohlenwasserstoff, Ether, Silan, Stannan oder German sind etwa Dimethylamin, Diethylamin, Di-(n-propyl)-amin, Di-(isopropyl)-amin, Di-(tertiarbutyl)-amin, Tertiärbutylamin, Cyclohexylamin, Anilin, Methyl-phenyl-amin, Di(allyl)-amin bzw. Methan, Toluol, Trimethylsilylamin, Trimethylsilylether, Tetramethylsilan und ähnliches.

Es ist auch möglich, Verbindungen der Formeln (II) oder (VIII) in Gegenwart von Verbindungen der Formeln (V) oder (IX) direkt mit einer Übergangsmetall-Verbindung der Formel (VII) umzusetzen.

π-Komplex-Verbindungen der Formel (XIII), in denen die π-Systeme cyclisch und aromatisch sind (Metallocene), können analog hergestellt werden, wobei sinngemäß die folgenden Verbindungen eingesetzt werden:

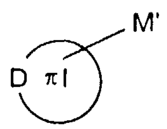 (IIa) 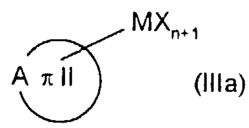 (IIIa) ,

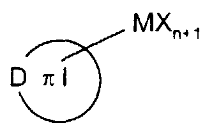 (IVa), 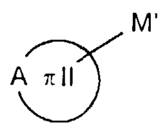 (Va),

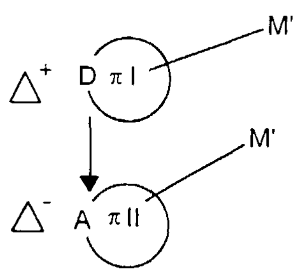 (VIa), $MX_{n+2}$ (VII) ,

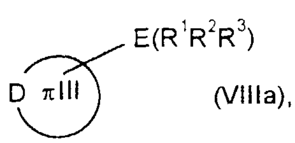 (VIIIa), 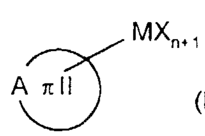 (IIIa),

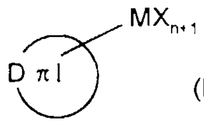 (IVa), 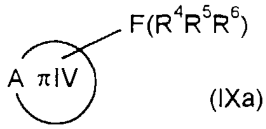 (IXa)

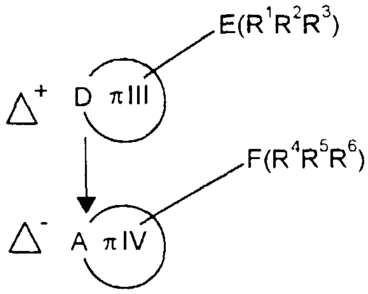 (Xa), $MX_{n+2}$ (VII) .

Die Herstellung offenkettiger π-Komplex-Verbindungen erfolgt nach den fachmännisch bekannten Verfahren unter Einbau von Donor- und Akzeptorgruppen.

Die erfindungsgemäß einsetzbaren Katalysatoren der Formeln (I) bzw. (XIII) können sowohl in monomerer als auch in dimerer oder oligomerer Form vorliegen.

Erfindungsgemäß wird in der Masse-, Lösungs-, Slurry- oder Gas-Phase bei -60 bis 250°C, bevorzugt 0 bis +200°C und 1 bis 65 bar und in Gegenwart oder Abwesenheit von gesättigten oder aromatischen Kohlenwasserstoffen oder von gesättigten oder aromatischen Halogenkohlenwasserstoffen und in Gegenwart oder Abwesenheit von Wasserstoff gearbeitet, wobei die Metallocen-Verbindungen bzw. die π-Komplex-Verbindungen als Katalysatoren in einer Menge von $10^1$ bis $10^{12}$ mol aller Monomerer pro mol Metallocen bzw. die π-Komplex-Verbindungen eingesetzt werden und wobei weiterhin in Gegenwart von Lewis-Säuren, Brönstedt-Säuren oder Pearson-Säuren oder zusätzlich in Gegenwart von Lewis-Basen gearbeitet werden kann

Solche Lewis-Säuren sind beispielsweise Borane oder Alane, wie Aluminiumalkyle, Aluminiumhalogenide, Aluminiumalkoholate, Bororganyle, Borhalogenide, Borsäureester oder Bor- bzw. Aluminium-Verbindungen, die sowohl Halogenid- als auch Alkyl- bzw. Aryl- oder Alkoholat-Substituenten enthalten, sowie Mischungen davon oder das Triphenylmethyl-Kation. Besonders bevorzugt sind Aluminoxane oder Mischungen von Aluminium-haltigen Lewis-Säuren mit Wasser. Alle Säuren wirken nach heutigen Erkenntnissen als ionisierende Agentien, die ein Metalloceniumkation ausbilden, das durch ein sperriges, schlecht koordinierendes Anion ladungskompensiert wird.

Erfindungsgemäß können weiterhin die Reaktionsprodukte solcher ionisierender Agentien mit Metallocen-Verbindungen der Formel (I) eingesetzt werden. Sie lassen sich durch die Formeln (XIa) bis (XId) beschreiben

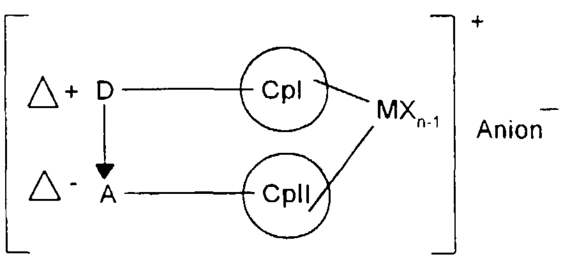 (XIa)

oder

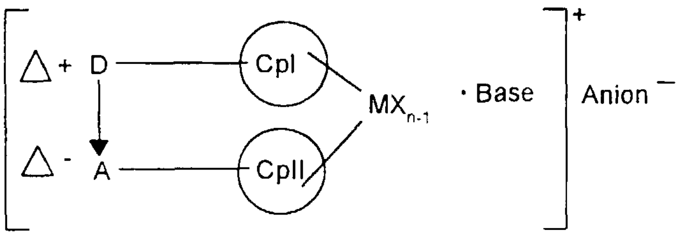

(XIb)

bzw.

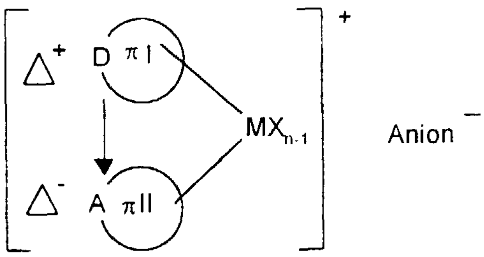

(XIc)

oder

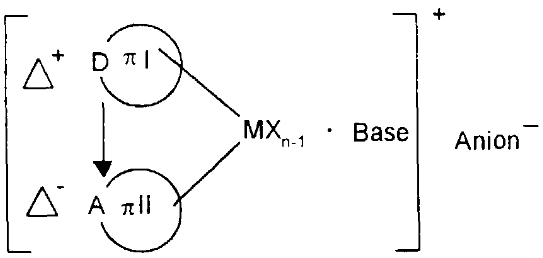

(XId) ,

in denen

Anion für das gesamte sperrige, schlecht koordinierende Anion und Base für eine Lewis-Base stehen.

Beispiele fiir solche schlecht koordinierende Anionen sind z.B.

$B(C_6H_5)_4^{\ominus}$, $B(C_6F_5)_4^{\ominus}$, $B(CH_3)(C_6F_5)_3^{\ominus}$,

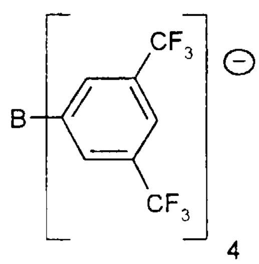

oder Sulfonate, wie Tosylat oder Triflat, Tetrafluorborate, Hexafluorphosphate oder -antimonate, Perchlorate, sowie

voluminöse Cluster-Molekülanionenn vom Typ der Carborane, beispielsweise $C_2B_9H_{12}^{\theta}$ oder $CB_{11}H_{12}^{\theta}$. Beim Vorliegen solcher Anionen können Metallocen-Verbindungen auch bei Abwesenheit von Aluminoxan als hochwirksame Polymerisationskatalystoren wirken. Das ist vor allem dann der Fall. wenn ein X-Ligand eine Alkylgruppe, Allyl oder Benzyl darstellt. Es kann aber auch vorteilhaft sein, solche Metallocen-Komplexe mit voluminösen Anionen in Kombination mit Aluminiumalkylen, wie $(CH_3)_3Al$, $(C_2H_5)_3Al$, (n-/i-Propyl)$_3$Al, (n-/t-Butyl)$_3$Al, (i-Butyl)$_3$Al, die isomeren Pentyl-, Hexyl- oder Octyl-Aluminiumalkyle, oder Lithiumalkylen, wie Methyl-Li, Benzyl-Li, Butyl-Li oder den entsprechenden Mg-organischen Verbindungen, wie Grignard-Verbindungen oder Zn-Organylen, einzusetzen. Solche Metallalkyle übertragen einerseits Alkylgruppen auf das Zentralmetall, andererseits fangen sie Wasser oder Katalysatorgifte aus dem Reaktionsmedium bzw. Monomer bei Polymerisationsreaktionen ab. Metallalkyle der beschriebenen Art können auch vorteilhaft in Kombination mit Aluminoxan-Cokatalysatoren eingesetzt werden, etwa um die benötigte Menge an Aluminoxan zu erniedrigen Beispiele für Borverbindungen, mit denen solche Anionen eingeführt werden konnen, sind:

Triethylammonium-tetraphenylborat,
Tripropylammonium-tetraphenylborat,
Tri(n-butyl)ammonium-tetraphenyborat,
Tri(t-butyl)ammonium-tetraphenylborat,
N,N-Dimethylanilinium-tetraphenylborat,
N,N-Diethylanilinium-tetraphenylborat,
N,N-Dimethyl(2,4,6-trimethylanilinium)tetraphenylborat,
Trimethylammonium-tetrakis(pentafluorophenyl)borat, Triethylammonium-tetrakis(pentafluorophenyl)borat,
Tripropylammonium-tetrakis(pentafluorophenyl)borat,
Tri(n-butyl)ammonium-tetrakis(pentafluorophenyl)borat, Tri(sec-butyl)ammonium-tetrakis(pentafluorophenyl)borat,
N,N-Dimethylanilinium-tetrakis(pentafluorophenyl)borat,
N,N-Diethylanilinium-tetrakis(pentafluorphenyl)borat, N,N-dimethyl(2,4,5-trimethylanilinium)-tetrakis(pentafluorophenyl)borat,
Trimethylammonium-tetrakis(2,3 3,4,6-tetrafluorophenyl)borat,
Triethylammonium-tetrakis (2,3,4,6-tetrafluorophenyl)borat,
Tripropylammonium-tetrakis(2,3,4,6-tetrafluorophenyl)borat,
Tri(n-butyl)ammonium-tetrakis(2,3,4,6-tetrafluorophenyl)borat,
Dimethyl(t-butyl)ammonium-tetrakis(2,3,4,6-tetrafluorophenyl)borat,
N,N-Dimethylanilinium-tetrakis(2,3,4,6-tetrafluorophenyl)borat,
N,N-Diethylanilinium-tetrakis(2,3,4,6-tetrafluorophenyl)borat,
N,N-Dimethyl-(2,4,6-trimethylanilinium)-tetrakis-(2,3,4,6-tetrafluorophenyl)borat, Dialkylammonium-Salze, wie:
Di-(i-propyl)ammonium-tetrakis(pentafluorophenyl)borat und
Dicyclohexylammonium-tetrakis(pentafluorophenyl)borat;
Tri-substituierte Phosphonium-Salze, wie:
Triphenylphosphonium-tetrakis(pentafluorophenyl)borat,
Tri(o-tolyl)phosphonium-tetrakis(pentrafluorophenyl)borat,
Tri(2,6-dimethylphenyl)phosphonium-tetrakis(pentafluorophenyl)borat, Tritolylmethyl-tetrakis(pentafluorphenyl)borat,
Triphenylmethyl-tetraphenylborat (Trityl-tetraphenylborat),
Trityl-tetrakis(pentafluorphenyl)borat,
Silber-tetrafluorborat,
Tris(pentafluorphenyl)boran,
Tris(trifluormethyl)boran.

Die erfindungsgemäß einzusetzenden Metallocen-Verbindungen bzw. die $\pi$-Komplex-Verbindungen können isoliert als Reinstoffe zur (Co)Polymerisation eingesetzt werden. Es ist aber auch möglich, sie "in situ" im (Co)Polymerisationsreaktor in einer dem Fachmann bekannten Weise zu erzeugen und zu verwenden.

Das erste und das zweite Carbanion CpI und CpII mit einem Cyclopentadienylgerüst können gleich oder verschieden sein. Das Cyclopentadienylgerüst kann beispielsweise eines aus der Gruppe von Cyclopentadien, substituiertem Cyclopentadien, Inden, substituiertem Inden, Fluoren und substituiertem Fluoren sein. Als Substituenten seien 1 bis 4 je Cyclopentadien- bzw. ankondensiertem Benzolring genannt. Diese Substituenten können $C_1$-$C_{20}$-Alkyl, wie Methyl, Ethyl, Propyl, Isopropyl, Butyl oder iso-Butyl, Hexyl, Octyl, Decyl, Dodecyl, Hexadecyl, Octadecyl, Eicosyl, $C_1$-$C_{20}$-Alkoxy, wie Methoxy, Ethoxy, Propoxy, Isopropoxy, Butoxy oder iso-Butoxy, Hexoxy, Octyloxy, Decyloxy, Dodecyloxy, Hexadecyloxy, Octadecyloxy, Eicosyloxy, Halogen, wie Fluor, Chlor oder Brom, $C_6$-$C_{12}$-Aryl, wie Phenyl, $C_1$-$C_4$-Alkylphenyl, wie Tolyl, Ethylphenyl, (i-)Propylphenyl, (i-,tert.-)Butylphenyl, Xylyl, Halogenphenyl, wie Fluor-, Chlor-,

Bromphenyl, Naphthyl oder Biphenylyl, Triorganyl-silyl, wie Trimethylsilyl (TMS), Ferrocenyl sowie D bzw. A, wie oben definiert, sein. Ankondensierte aromatische Ringe können ferner teilweise oder vollständig hydriert sein, so daß lediglich die Doppelbindung bestehen bleibt, an der sowohl der ankondensierte Ring als auch der Cyclopentadienring Anteil haben. Weiterhin können Benzolringe, wie im Inden oder Fluoren, einen oder zwei ankondensierte weitere Benzolringe enthalten. Noch weiterhin können der Cyclopentadien- bzw. Cyclopentadienylring und ein ankondensierter Benzolring gemeinsam einen weiteren Benzolring ankondensiert enthalten.

Solche Cyclopentadiengerüste sind in Form ihrer Anionen ausgezeichnete Liganden für Übergangsmetalle, wobei jedes Cyclopentadienyl-Carbanion der genannten, gegebenenfalls substituierten Form eine positive Ladung des Zentralmetalls im Komplex kompensiert. Einzelbeispiele für solche Carbanionen sind: Cyclopentadienyl, Methylcyclopentadienyl, 1,2-Dimethyl-cyclopentadienyl, 1,3-Dimethyl-cyclopentadienyl, Indenyl, 2-Phenylindenyl, 2-Methylindenyl, 2-Methyl-4-phenyl-indenyl, 2,4,7-tri-methyl-indenyl, 1,2-Diethyl-cyclopentadienyl, Tetramethyl-cyclopentadienyl, Ethylcyclopentadienyl, n-Butyl-cyclopentadienyl, n-Octyl-cyclopentadienyl, β-Phenylpropyl-cyclopentadienyl, Tetrahydroindenyl, Propyl-cyclopentadienyl, t-Butyl-cyclopentadienyl, Benzyl-cyclopentadienyl, Diphenylmethyl-cyclopentadienyl, Trimethylgermyl-cyclopentadienyl, Trimethylstannyl-cyclopentadienyl, Trimethylstannyl-cyclopentadienyl, Trifluormethyl-cyclopentadienyl, Trimethylsilyl-cyclopentadienyl, Pentamethylcyclopentadienyl, Fluorenyl, Tetrahydro- bzw. Octahydro-fluorenyl, am Sechsring benzoanellierte Fluorenyle und Indenyle, N,N-Dimethylamino-cyclopentadienyl, Dimethylphosphino-cyclopentadienyl, Methoxy-cyclopentadienyl, Dimethylboranylcyclopentadienyl, (N, N-Dimethylaminomethyl)-cyclopentadienyl. Zur Herstellung hoch isotaktischer Blöcke (Sequenzen) eignen sich beispielsweise quasi-rac-Bis(indenyl)-Metallocene mit D/A-Brücke, die zusätzlich z.B. Alkyl-, Aryl- und/oder Silyl-Substituenten bzw. Benz-anellierte Strukturen, etwa in 2-Position bzw. 4,5,6,7-Position, zur Steigerung von Molekulargewicht und Isotaktizität sowie Schmelztemperatur tragen können. Abcr auch D/A-Bis(cyclopentadienyl)-Metallocene mit Substitutionsmustern (3,3') vergleichbarer Symmetrie kommen in Frage. Entsprechend eigenen sich z.B. für die Herstellung syndiotaktischer Blöcke (Sequenzen) D/A-verbrückte (cyclopentadienyl)(fluorenyl)-Metallocene oder aber (cyclopentadienyl)(3,4-disubstituierte cyclopentadienyl)-Metallocene.

Neben der obligatorisch vorhandenen ersten Donor-Akzeptor-Bindung zwischen D und A können weitere Donor-Akzeptor-Bindungen gebildet werden, wenn zusätzliche D und/oder A als Substituenten der jeweiligen Cyclopentadiensysteme oder Substituenten oder Teile der π-Systeme vorliegen. Alle Donor-Akzeptor-Bindungen sind durch ihre oben dargestellte Reversibilität gekennzeichnet. Für den Fall mehrerer D bzw. A können diese verschiedene der genannten Positionen einnehmen. Die Erfindung umfaßt demnach sowohl die verbrückten Molekül-Zustände (Ia) bzw. (XIIIa) als auch die unverbrückten Zustände (Ib) bzw. (XIIIb). Die Anzahl der D-Gruppen kann gleich oder verschieden zur Anzahl der A-Gruppen sein. In bevorzugter Weise werden CpI und CpII bzw πI und πII über nur eine Donor-Akzeptor-Brücke verknupft.

Neben den erfindungsgemäßen D/A-Brücken können auch kovalente Brücken vorliegen. In diesem Falle verstärken die D/A-Brücken die Stereorigidität und die Thermostabilität des Katalysators. Beim Wechsel zwischen geschlossener und geöffneter D/A-Bindung werden Sequenzpolymere mit höherer und niedrigerer Stereoregularität zugänglich. Solche Sequenzen können bei Copolymeren unterschiedliche chemische Zusammensetzungen haben.

Die π-Komplex-Verbindungen sind ebenfalls gekennzeichnet durch das Vorliegen mindestens einer koordinativen Bindung zwischen Donoratom(en) D und Akzeptoratom(en) A Sowohl D als auch A können hierbei Substituenten ihrer jeweils zugehörigen π-Systeme πI bzw. πII oder Teil des π-Systems sein, wobei jedoch stets mindestens eines von D und A Teil des π-Systems ist. Als π-System wird hierbei das gesamte, gegebenenfalls ein- oder zweifach kondensierte π-System verstanden. Hieraus ergeben sich folgende Ausführungsformen:

- D ist Teil des π-Systems, A ist Substituent des π-Systems;
- D ist Substituent des π-Systems, A ist Teil des π-Systems,
- D und A sind Teile ihres jeweiligen π-Systems.

Beispielsweise seien folgende heterocyclische Ringsysteme genannt, in denen D oder A Teile des Ringsystems sind:

(a) 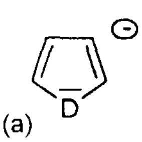 (b) 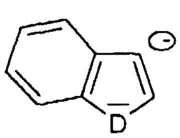 (c) 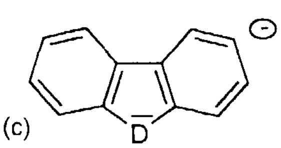 (d) 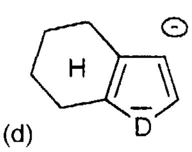

(e) 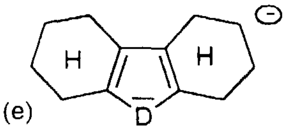 (f) 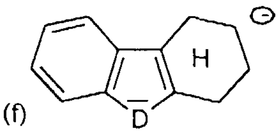 (g) 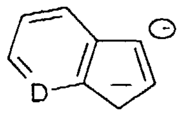 (h) 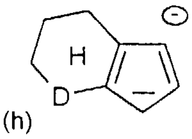

(i) 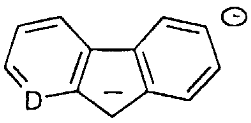 (j) 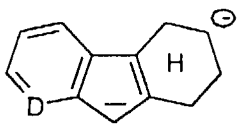 (k) 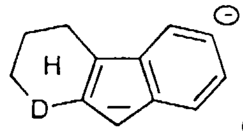 (l) 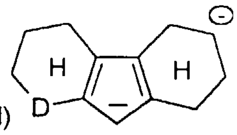

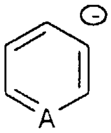
(m)

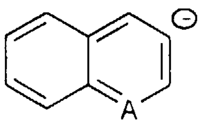
(n)

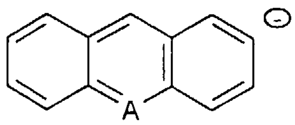
(o)

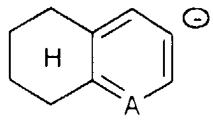
(p)

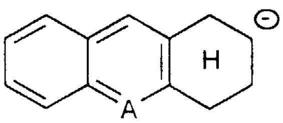
(q)

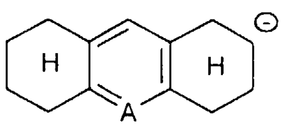
(r)

Wichtige heterocyclische Ringsysteme sind die mit (a), (b), (c), (d), (g), (m), (n) und (o) bezeichneten Systeme; besonders wichtige sind die mit (a), (b), (c) und (m) bezeichneten.

Für den Fall, daß eines von D und A Substituent seines zugehörigen Ringsystems ist, ist das Ringsystem 3-, 4-, 5-, 6-, 7- oder 8-gliedrig mit oder ohne elektrische Ladung, das in der angegebenen Weise weiter substituiert und/ oder kondensiert sein kann. Bevorzugt sind 5- und 6-gliedrige Ringsysteme. Besonders bevorzugt ist das negativ geladene Cyclopentadienyl-System.

Das erste bzw. das zweite $\pi$-System $\pi$I und $\pi$II, falls es als Ringsystem ausgebildet ist, kann für den Fall, daß eines von D und A Substituent des Ringsystems ist, CpI bzw. CpII entsprechen.

Als Donorgruppen kommen vor allem solche in Frage, bei denen das Donoratom D ein Element der 5., 6. oder 7., bevorzugt der 5, oder 6. Hauptgruppe des Periodensystems der Elemente (Mendelejew) ist und mindestens ein freies Elektronenpaar besitzt und wobei sich das Donoratom im Falle von Elementen der 5. Hauptgruppe in einem Bindungszustand mit Substituenten befindet und im Falle von Elementen der 6. Hauptgruppe in einem solchen befinden kann; Donoratome der 7. Hauptgruppe tragen keine Substituenten. Dies wird am Beispiel von Phosphor P, Sauerstoff O und Chlor Cl als Donoratome wie folgt verdeutlicht, wobei "Subst." solche genannten Substituenten und "-Cp" die Bindung an das Cyclopentadienyl-haltige Carbanion darstellen, ein Strich mit einem Pfeil, die in Formel (I) angegebene Bedeutung einer koordinativen Bindung hat und sonstige Striche vorhandene Elektronenpaare bedeuten:

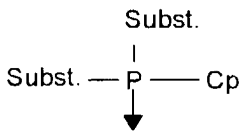 ; 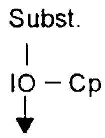 ; 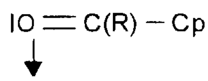 ; 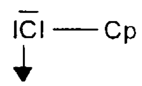

Als Akzeptorgruppen kommen vor allem solche in Frage, deren Akzeptoratom A ein Element aus der 3. Hauptgruppe des Periodensystems der Elemente (Mendeljew) wie Bor, Aluminium, Gallium, Indium und Thallium ist, sich in einem Bindungszustand mit Substituenten befindet und eine Elektronenlücke besitzt.

D und A sind durch eine koordinative Bindung verknüpft, wobei D eine positive (Teil)Ladung und A eine negative (Teil)Ladung annehmen.

Es wird demnach zwischen dem Donoratom D und der Donorgruppe bzw zwischen dem Akzeptoratom A und der Akzeptorgruppe unterschieden. Die koordinative Bindung $D \rightarrow A$ wird zwischen dem Donoratom D und dem Akzeptoratom A hergestellt. Die Donorgruppe bedeutet die Einheit aus dem Donoratom D, den gegebenenfalls vorhandenen Substituenten und den vorhandenen Elektronenpaaren; entsprechend bedeutet die Akzeptorgruppe die Einheit aus dem Akzeptoratom A, den Substituenten und der vorhandenen Elektronenlücke.

Die Bindung zwischen dem Donoratom bzw. dem Akzeptoratom und dem Cyclopentadienyl-haltigen Carbanion kann durch Spacergruppen im Sinne von D-Spacer-Cp bzw. A-Spacer-Cp unterbrochen sein. Im dritten der obigen Formelbeispiele stellt =C(R)- einen solchen Spacer zwischen O und Cp dar. Solche Spacergruppen sind beispeilsweise:

Dimethylsilyl, Diethylsilyl, Di-n-propylsilyl, Diisopropylsilyl, Di-n-butylsilyl, Di-t-butylsilyl, Di-n-hexylsilyl, Methylphenylsilyl, Ethylmethylsilyl, Diphenylsilyl, Di- (p-t-butylphenethylsilyl), n-Hexylmethylsilyl, Cyclopentamethyl ensilyl, Cyclotetramethylensilyl, Cyclotrimethylensilyl, Dimethylgermanyl, Diethylgermanyl, Phenylamino, t-Butylamino, Methylamino, t-Butylphosphino, Ethylphosphino, Phenylphosphino, Methylen, Dimethylmethylen (i-Propyliden), Diethylmethylen, Ethylen, Dimethylethylen, Diethylethylen, Dipropylethylen, Propylen, Dimethylpropylen, Diethylpropylen, 1,1-Dimethyl-3,3-dimethylpropylen, Tetramethyldisiloxan, 1,1,4,4-Tetramethyldisilylethylen, Diphenylmethylen.

In bevorzugter Weise sind D bzw. A ohne Spacer an das Cyclopentadienyl-haltige Carbanion gebunden.

D bzw. A können unabhängig voneinander am Cyclopentadien(yl)ring oder einem ankondensierten Benzolring oder einem anderen Substituenten von CpI bzw. CpII bzw. $\pi I/\pi II$ sitzen. Für den Fall mehrerer D bzw. A können diese verschiedene der genannten Positionen einnehmen

Substituenten an den Donoratomen N, P, As, Sb, Bi, O, S, Se bzw. Te und an den Akzeptoratomen B, Al, Ga, In bzw. Tl sind beispielsweise: $C_1$-$C_{12}$(Cyclo)Alkyl, wie Methyl, Ethyl, Propyl, i-Propyl, Cyclopropyl, Butyl, i-Butyl, tert.-Butyl, Cyclobutyl, Pentyl, Neopentyl, Cyclopentyl, Hexyl, Cyclohexyl, die isomeren Heptyle, Octyle, Nonyle, Decyle, Undecyle, Dodecyle; die hierzu korrespondierenden $C_1$-$C_{12}$-Alkoxy-Gruppen; Vinyl, Butenyl, Allyl; $C_6$-$C_{12}$-Aryl, wie Phenyl, Naphthyl oder Biphenylyl, Benzyl, die durch Halogen, 1 oder 2 $C_1$-$C_4$-Alkylgruppen, $C_1$-$C_4$-Alkoxygruppen, Nitro oder Halogenalkylgruppen, $C_1$-$C_6$-Alkyl-carboxy, $C_1$-$C_6$-Alkyl-carbonyl oder Cyano substituiert sein können (z.B. Perfluorphenyl, m,m'-Bis(trifluormethyl)-phenyl und analoge, dem Fachmann geläufige Substituenten); analoge Aryloxygruppen; Indenyl; Halogen, wie F, Cl, Br und 1,1-Thienyl, disubstituiertes Amino, wie ($C_1$-$C_{12}$-Alkyl)$_2$amino, Diphenylamino, ($C_1$-$C_{12}$-Alkyl)(phenyl)amino, ($C_1$-$C_{12}$-Alkylphenyl)amino, Tris-($C_1$-$C_{12}$-alkyl)-silyl, $NaSO_3$-Aryl, wie $NaSO_3$-Phenyl und $NaSO_3$-Tolyl, $C_6H_5$-C≡C-; aliphatisches und aromatisches $C_1$-$C_{20}$-Silyl, dessen Alkylsubstituenten neben den oben genannten zusätzlich Octyl, Decyl, Dodecyl, Stearyl oder Eicosyl sein können und dessen Arylsubstituenten Phenyl, Tolyl, Xylyl, Naphthyl oder Biphenylyl sein können; und solche substituierten Silylgruppen, die über $-CH_2-$ an das Donoratom bzw. das Akzeptoratom gebunden sind, beispielsweise $(CH_3)_3SiCH_2$-, $C_6$-$C_{12}$-Aryloxy mit den oben genannten Arylgruppen, $C_1$-$C_8$-Perfluoralkyl, Perfluorphenyl. Bevorzugte Substituenten sind $C_1$-$C_6$-Alkyl, $C_5$-$C_6$-Cycloalkyl, Phenyl, Tolyl, $C_1$-$C_6$-Alkoxy, $C_6$-$C_{11}$-Aryloxy, Vinyl, Allyl, Benzyl, Perfluorphenyl, F, Cl, Br, Di-($C_1$-$C_6$-alkyl)-amino, Diphenylamino.

Donorgruppen sind solche, bei denen das freie Elektronenpaar am N, P, As, Sb, Bi, O, S, Se, Te, F Cl, Br, I lokalisiert ist; bevorzugt hiervon sind N, P, O, S. Beispielhaft als Donorgruppen seien genannt: $(CH_3)_2N$-, $(C_2H_5)_2N$-, $(C_3H_7)_2N$-, $(C_4H_9)_2N$-, $(C_6H_5)_2N$-, $(CH_3)_2P$-, $(C_2H_5)_2P$-, $(C_3H_7)_2P$-, $(i\text{-}C_3H_7)_2P$-, $(C_4H_9)_2P$-, $(t\text{-}C_4H_9)P$-, (Cyclohexyl)$_2$P-, $(C_6H_5)_2P$-, $CH_3O$-, $CH_3S$-, $C_6H_SS$-, $-C(C_6H_5)=O$, $-C(CH_3)=O$, $-OSi(CH_3)_3$, $-OSi(CH_3)_2$-t-butyl, in denen N und P je ein freies Elektronenpaar und O und S je zwei freie Elektronenpaare tragen und wobei in den beiden zuletzt genannten Beispielen der doppelt gebundene Sauerstoff über eine Spacergruppe gebunden ist, sowie Systeme, wie der Pyrrolidonring, wobei die von N verschiedenen Ringglieder ebenfalls als Spacer wirken.

Akzeptorgruppen sind solche, bei denen eine Elektronenpaar-Lücke am B, Al, Ga, In oder Tl, bevorzugt B, Al vorhanden ist; beispielhaft seien genannt: $(CH_3)_2B$-, $(C_2H_5)_2B$-, $H_2B$-, $(C_6H_5)_2B$-, $(CH_3)(C_6H_5)B$-, (Vinyl)$_2$B-, (Benzyl)$_2$B-, $Cl_2B$-, $(CH_3O)_2B$-, $Cl_2Al$-, $(CH_3)_2Al$-, $(i\text{-}C_4H_9)_2Al$-, $(Cl)(C_2H_5)Al$-, $(CH_3)_2Ga$-, $(C_3H_7)_2Ga$-, $((CH_3)_3Si\text{-}CH_2)_2Ga$-,

(Vinyl)$_2$Ga-, $(C_6H_5)_2$Ga-, $(CH_3)_2$In-, $((CH_3)_3Si\text{-}CH_2)_2$In-, (Cyclopentadienyl)$_2$In-.

Weiterhin kommen solche Donor- und Akzeptorgruppen in Frage, die chirale Zentren enthalten oder in denen 2 Substituenten mit dem D- bzw. A-Atom einen Ring bilden. Beispiele hierfür sind etwa

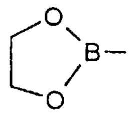 oder 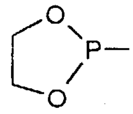

Bevorzugte Donor-Akzeptor-Brücken zwischen CpI und CpII sind beispielsweise folgende:

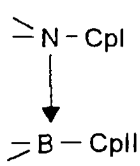 ; 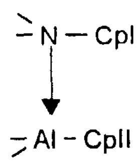 ; 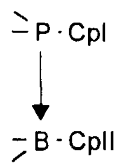 ; 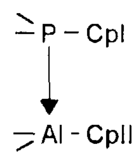 ; 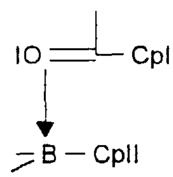 ;

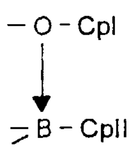 ; 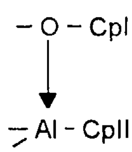 ; 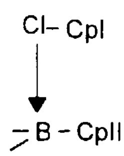 ; 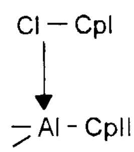 ; 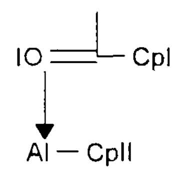 .

Eines oder beide π-Systeme πI bzw. πII kann als Heterocyclus in Form der obigen Ringsysteme (a) bis (r) vorliegen. D ist hierbei bevorzugt ein Element der 5. oder 6. Hauptgruppe des Periodensystems der Elemente (Mendelejew); A ist hierbei bevorzugt Bor. Einzelbeispiele für solche Hetero-π-Systeme, insbesondere Heterocyclen sind:

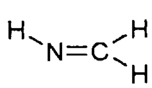 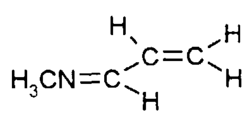

$RH_4C_6N{=}CH\text{-}HC{=}HC\text{-}C_6H_4R'$

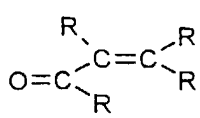 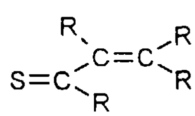 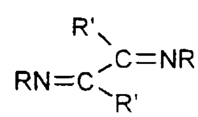

R, R' = H, Alkyl, Aryl, Alkaryl z.B. Methyl, Ethyl, t-Butyl, Phenyl, o,o'-Di-(i-Propyl)-phenyl

Beispiele für Heterocyclen sind: Pyrrolyl, Methylpyrrolyl, Dimethylpyrrolyl, Trimethylpyrrolyl, Tetramethylpyrrolyl, t-Butylpyrrolyl, Di-t-butylpyrrolyl, Indolyl, Methylindolyl, Dimethylindolyl, t-Butylindolyl, Di-t-butylindolyl, Tetramethylphospholyl, Tetraphenylphospholyl, Triphenylphospholyl, Trimethylphospholyl, Phosphaindenyl, Dibenzophospholyl (Phosphafluorenyl), Dibenzopyrrolyl.

Bevorzugte Donor-Akzeptor-Brücken zwischen πI und πII sind beispielsweise folgende: N → B, N → Al, P → B, P → Al, O → B, O → Al, Cl → B, Cl → Al, C=U→B, C=O→Al, wobei beide Atome dieser Donor-Akzeptor-Brücken

Teile eines Hetero$\pi$-Systems sein können oder ein Atom (Donor oder Akzeptor) Teil eines $\pi$-Systems ist und das andere Substituent des zweiten $\pi$-Systems ist oder wobei beide Atome Substituenten ihres jeweiligen Ringes sind und zusätzlich einer der Ringe ein Heteroatom enthält.

Die beiden Liganden-Systeme $\pi$I und $\pi$II können gemäß obiger Darstellung durch eine, zwei oder drei Donor-Akzeptor-Brücken verknüpft sein. Dies ist möglich, da erfindungsgemäß die Formel (Ia) die dargestellte D $\rightarrow$ A - Brücke enthält, die Liganden-Systeme $\pi$I bzw. $\pi$II aber weitere D und A als Substituenten oder Hetero-$\pi$-Zentren tragen können; die Zahl der sich daraus ergebenden zusätzlichen D $\rightarrow$ A - Brücken beträgt Null, Eins oder Zwei. Die Anzahl von D- bzw. A-Substituenten auf $\pi$I bzw. $\pi$II kann gleich oder verschieden sein. Die beiden Liganden-Systeme $\pi$I und $\pi$II können zusätzlich kovalent verbrückt sein. (Beispiele für kovalente Brücken sind weiter oben als Spacergruppen beschrieben.) Bevorzugt sind jedoch Verbindungen ohne kovalente Brücke, in denen demnach $\pi$I und $\pi$II über nur eine Donor-Akzeptor-Brücke verknüpft sind.

M steht für ein Übergangsmetall aus der 3, 4, 5, oder 6, Nebengruppe des Periodensystems der Elemente (Mendelejew), einschließlich der Lanthaniden und Actiniden. beispielhaft seien genannt: Sc, Y, La, Sm, Nd, Lu, Ti, Zr, Hf, Th, V Nb, Ta, Cr Bevorzugt sind Ti, Zr, Hf.

Bei der Ausbildung der Metallocen-Struktur bzw. der $\pi$-Komplex-Struktur wird je eine positive Ladung des Übergangsmetalls M durch je ein Cyclopentadienyl-haltiges Carbanion kompensiert. Noch verbleibende positive Ladungen am Zentralatom M werden durch weitere, zumeist einwertige Anionen X abgesättigt, von denen zwei gleiche oder verschiedene auch miteinander verknüpft sein können (Dianionen 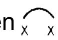), beispielsweise einwertig oder zweiwertig negative Reste aus gleichen oder verschiedenen, linearen oder verzweigten, gesättigten oder ungesättigten Kohlenwasserstoffen, Aminen, Phosphinen, Thioalkoholen, Alkoholen oder Phenolen. Einfache Anionen wie $CR_3^-$, $NR_2^-$, $PR_2^-$, $OR^-$, $SR^-$ usw. können durch gesättigte oder ungesättigte Kohlenwasserstoff- oder Silan-Brücken verbunden sein, wobei Dianionen entstehen und die Anzahl der Brückenatome 0, 1, 2, 3, 4, 5, 6 betragen kann, bevorzugt sind 0 bis 4 Brückenatome, besonders bevorzugt 1 oder 2 Brückenatome. Die Brückenatome können außer H-Atomen noch weitere KW-Substituenten R tragen. Beispiele für Brücken zwischen den einfachen Anionen sind etwa $-CH_2-$, $-CH_2-CH_2-$, $-(CH_2)_3-$, CH=CH, $-(CH=CH)_2-$, $-CH=CH-CH_2-$, $CH_2-CH=CH-CH_2-$, $-Si(CH_3)_2-$, $C(CH_3)_2-$. Beispiele für X sind: Hydrid, Chlorid, Methyl, Ethyl, Phenyl, Fluorid, Bromid, Iodid, der n-Propylrest, der i-Propylrest, der n-Butylrest, der Amylrest, der i-Amylrest, der Hexylrest, der i-Butylrest, der Heptylrest, der Octylrest, der Nonylrest, der Decylrest, der Cetylrest, Methoxy, Ethoxy, Propoxy, Butoxy, Phenoxy, Dimethylamino, Diethylamino, Methylethylamino, Di-t-Butylamino, Diphenylamino, Diphenylphosphino, Dicyclohexylphosphino, Dimethylphosphino, Methyliden, Ethyliden, Propyliden, das Ethylenglykoldianion. Beispiele für Dianionen sind 1,4-Diphenyl-1,3-butadiendiyl, 3-Methyl-1,3-pentadiendiyl, 1,4-Dibenzyl-1,3-butadiendiyl, 2,4-Hexadiendiyl, 1,3-Pentadiendiyl, 1,4-Ditolyl-1,3-butandiendiyl, 1,4-Bis(trimethylsilyl-1,3-butadiendiyl, 1,3-Butadiendiyl. Besonders bevorzugt sind 1,4-Diphenyl-1,3-butandiendiyl, 1,3-Pentadiendiyl, 1,4-Dibenzyl-1,3-butadiendiyl, 2,4-Hexandiendiyl, 3-Methyl-1,3-pentadiendiyl, 1,4-Ditolyl-1-3-butadiendiyl und 1,4-Bis(trimethylsilyl)-1,3-butadiendiyl. Weitere Beispiele für Dianionen sind solche mit Heteroatomen, etwa der Struktur

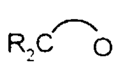, 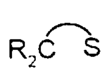, 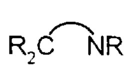 bzw. 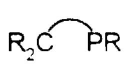,

wobei die Brücke die angegebene Bedeutung hat. Besonders bevorzugt sind darüber hinaus zur Ladungskompensation schwach oder nicht koordinierende Anionen der obengenannten Art.

Die Aktivierung durch solche voluminösen Anionen gelingt beispielsweise durch Umsetzung der D/A-$\pi$-Komplex-Verbindungen, insbesondere der D/A-Metallocene mit Tris-(pentafluorphenyl)-boran, Triphenylboran, Triphenylaluminium, Trityl-tetrakis(pentafluorphenyl)-borat oder N,N-Dialkyl-phenyl-ammonium-tetrakis-(pentafluorphenyl)-borat oder die entsprechenden Phosphonium- oder Sulfoniumsalze von Boraten oder (Erd)Alkali-, Thallium- oder Silbersalzen von Boraten, Carboranen, Tosylaten, Triflaten, Perfluorcarboxylaten wie Trifluoracetat oder den korrespondierenden Säuren. Vorzugsweise werden dabei D/A-Metallocene eingesetzt, deren Anionäquivalente X = Alkyl-, Allyl-, Aryl-, Benzylgruppen darstellt. Solche Derivate können auch "in situ" hergestellt werden, indem man D/A-Metallocene mit anderen Anionäquivalenten wie X = F, Cl, Br, OR etc. zuvor mit Aluminiumalkylen, Magnesiumorganylen, Lithiumorganylen oder Grignard-Verbindungen oder Zink-, Zinn- oder Bleialkylen umsetzt. Die daraus erhältlichen Umsetzungsprodukte können ohne vorherige Isolierung mit obengenannten Boranen oder Boraten aktiviert werden.

Der Index n nimmt in Abhängigkeit von der Ladung von M den Wert Null, Eins. Zwei, Drei oder Vier, bevorzugt Null, Eins oder Zwei an. Die oben genannten Nebengruppenmetalle können nämlich, unter anderem abhängig von ihrer Zugehörigkeit zu den Nebengruppen, Wertigkeiten/Ladungen von Zwei bis Sechs, bevorzugt Zwei bis Vier annehmen, von denen durch die Carbanionen der Metallocen-Verbindung jeweils zwei kompensiert werden. Im Falle von $La^{3+}$ nimmt demnach der Index n den Wert Eins und im Falle von $Zr^{4+}$ den Wert Zwei an; bei $Sm^{2+}$ wird n = Null.

Zur Herstellung der Metallocen-Verbindungen der Formel (I) kann man entweder je eine Verbindung der obigen Formeln (II) und (III) oder je eine Verbindung der obigen Formeln (IV) und (V) oder je eine Verbindung der obigen Formeln (VI) und (VII) oder je eine Verbindung der obigen Formeln (VIII) und (III) oder je eine Verbindung der obigen Formeln (IV) und (IX) oder je eine Verbindung der obigen Formeln (X) und (VII) unter Austritt bzw. Abspaltung von Alkalimetall-X-, Erdalkalimetall-$X_2$-, Silyl-X-, Germyl-X-, Stannyl-X- oder HX-Verbindungen in einem aprotischen Lösungsmittel bei Temperaturen von -78°C bis +120°C, vorzugsweise von -40°C bis +70°C und in einem Molverhältnis von (II):(III) bzw. (IV):(V) bzw. (VI):(VII) bzw. (VIII):(III) bzw. (IV):(IX) bzw. (X):(VII) von 1:0,5-2, vorzugsweise 1:0,8-1,2, besonders bevorzugt 1:1, miteinander umzusetzen. In den Fällen der Umsetzung von (VIII) mit (III) bzw. (IV) mit (IX) bzw. (X) mit (VII) ist es möglich, auf ein aprotisches Lösungsmittel zu verzichten, wenn (VIII), (IX) oder (X) unter Reaktionsbedingungen flüssig ist. Beispiele für solche austretenden bzw. abgespaltenen Verbindungen sind: TlCl, LiCl, LiBr, LiF, LiI, NaCl, NaBr, KCl, KF, $MgCl_2$ $MgBr_2$, $CaCl_2$, $CaF_2$, Trimethylchlorsilan, Triethylchlorsilan, Tri-(n-butyl)-chlorsilan, Triphenylchlorsilan, Trimethylchlorgerman, Trimethylchlorstannan, Dimethylamin, Diethylamin, Dibutylamin und weitere Verbindungen, die aus dem oben genannten Substitutionsmuster für den Fachmann erkennbar sind.

Verbindungen der Formel (II) bzw. (IV) stellen somit Carbanionen mit einem Cyclopentadienylgerüst oder einem heterocyclischen Gerüst dar, die zur D/A-Brückenbildung genutzte 1 bis 3 Donorgruppen kovalent gebunden oder als heterocyclische Ringglieder inkorporiert enthalten und als Gegenion zur negativen Ladung des Cyclopentadienylgerüstes ein Kation aufweisen. Verbindungen der Formel (VIII) sind ungeladene cyclische Gerüste mit ebenfalls zur D/A-Brückenbildung genutzten 1 bis 3 Donorgruppen, aber mit leicht abspaltbaren Abgangsgruppen $E(R^1R^2R^3)$, wie Silyl-, Germyl- oder Stannylgruppen oder Wasserstoff, an Stelle der ionischen Gruppen.

Die zweite Komponente zur Ausbildung der erfindungsgemäß einzusetzenden Metallocen-Verbindungen, nämlich die Verbindung der Formel (III) bzw. (V) stellt ebenfalls ein Carbanion mit einem Cyclopentadienylgerüst dar, das gleich dem Cyclopentadienylgerüst der Verbindung (II) bzw. (IV) oder verschieden von ihm ist, jedoch 1 bis 3 Akzeptorgruppen an Stelle der Donorgruppen trägt. In entsprechender Weise sind Verbindungen der Formel (IX) ungeladene Cyclopentadien-Gerüste mit 1 bis 3 Akzeptorgruppen und ebenfalls leicht abspaltbaren Abgangsgruppen F $(R^4R^5R^6)$.

In völlig analoger Weise stellen Verbindungen der Formeln (VI) bzw. (X) Ausgangsstoffe mit vorgebildeter D $\rightarrow$ A-Bindung dar, die Carbanionen-Gegenkationen-Verbindungen bzw. ungeladene Cyclopentadien-Gerüste mit insgesamt möglichen 1 bis 3 D $\rightarrow$ A-Bindungen bedeuten und durch Reaktion mit Verbindungen der Formel (VII) die Metallocen-Verbindungen (I) ergeben.

Beide Ausgangsstoffe des Herstellungsverfahrens, nämlich (II) und (III) bzw. (IV) und (V) bzw. (VI) und (VII) bzw. (VIII) und (III) bzw. (IV) und (IX) bzw. (X) und (VII) reagieren beim Zusammengeben spontan unter gleichzeitiger Ausbildung der Donor-Akzeptor-Gruppe -D $\rightarrow$ A- bzw. der Komplexierung des Metallkations M unter Austritt von M'X bzw. $E(R^1R^2R^3)X$ bzw. $F(R^4R^5R^6)X$ bzw. HX. Bei der Darstellung der Donor-Akzeptor-Gruppe wurden die Substituenten an D und A der Übersichtlichkeit halber weggelassen.

M' ist ein Kationäquivalent eines (Erd)Alkalimetalls, wie Li, Na, K, ½ Mg, ½ Ca, ½ Sr, ½ Ba, oder Thallium.

In der oben angegebenen Weise werden analog die Verbindungen der Formel (XIII a + b) hergestellt.

Lösungsmittel für das Herstellungsverfahren sind aprotische, polare oder unpolare Lösungsmittel, wie aliphatische und aromatische Kohlenwasserstoffe oder aliphatische und aromatische Halogenkohlenwasserstoffe. Im Prinzip kommen auch weitere aprotische Lösungsmittel, wie sie dem Fachmann bekannt sind, in Frage, jedoch sind wegen der einfacheren Aufarbeitung solche mit zu hohen Siedepunkten weniger bevorzugt. Typische Beispiele sind: n-Hexan, Cyclohexan, Pentan, Heptan, Petrolether, Toluol, Benzol, Chlorbenzol, Methylenchlorid, Diethylether, Tetrahydrofuran, Ethylenglykoldimethylether.

Die Ausgangsstoffe der Formeln (II), (III), (IV) und (V) können gemäß literaturbekannten Verfahren oder analog zu diesen hergestellt werden. So läßt sich beispielsweise analog zu J. of Organometallic Chem. (1971), 29, 227, das marktgängige Trimethylsilyl-cyclopentadien zunächst mit Butyl-lithium und dann mit Trimethylsilylchlorid zum Bis (trimethylsilyl)-cyclopentadien umsetzen. Dies wiederum kann mit Bortrichlorid zu Trimethylsilyl-cyclopentadienyl-dichlorboran umgesetzt werden (analog zu J. of Organometallic Chem. (1979), 169, 327), welches schließlich analog zu J. of Organometallic Chem. (1979), 169, 373 mit Titantetrachlorid zum Dichlorboryl-cyclopentadienyl-titantrichlorid umgesetzt werden kann. Diese zuletzt genannte Verbindung stellt bereits einen Prototyp der Verbindungen der Formel (III) dar; die zuletzt genannte Verbindung kann weiterhin selektiv mit Trimethylaluminium umgesetzt werden, wobei die beiden mit dem Boratom verbundenen Chloratome durch Methylgruppen ausgetauscht werden und wobei eine weitere Verbindung der Formel (III) aufgezeigt ist. Analog den Verfahrensbeschreibungen in J. Am. Chem. Soc. (1983) 105, 3882 und Organometallics (1982) 1, 1591 kann das marktgängige Cyclopentadienyl-thallium mit Chlor-diphenylphosphin und weiter mit Butyl-lithium umgesetzt werden, wobei man einen Prototyp von Verbindungen der Formel (II) erhält. Als ein weiteres Beispiel sei die Bildung von Dimethylstannyl-diphenylphosphin-inden durch Umsetzung von Inden zunächst mit Butyl-lithium, wie oben bereits genannt, und anschließend mit Chlordiphenylphosphin genannt; die weitere Umsetzung, zunächst erneut mit Butyl-lithium und dann mit Chlor-tributylzinn ergibt die genannte Verbindung, die nach weiterer Umsetzung mit Zirkontetrachlorid das Diphenylphosphino-indenyl-zirkoniumtrichlorid als einen Vertreter von Verbindungen der Formel (IV) gibt. Solche Synthesen und Herstellungsweisen sind dem auf dem Gebiet der metallorganischen und der elementorganischen Chemie tätigen Fachmann geläufig und in zahlreichen Literaturstellen veröffentlicht, von denen oben nur einige exemplarisch angeführt wurden.

Die weiter unten aufgeführten Beispiele zeigen, wie solche heterocyclischen Vorstufen bzw. erfindungsgemäßen Katalysatoren zugänglich sind. So kann Pyrrolyl-Lithium (Formel II) aus Pyrrol durch Umsetzung mit Butyl-Lithium hergestellt werden, wie etwa in J. Amer. Chem. Soc. (1982), 104, 2031 beschrieben. Trimethylstannyl-phosphol (Formel VIII) wird erhalten durch Umsetzung von 1-Phenylphosphol mit Lithium, gefolgt von Aluminiumtrichlorid, wobei Phospholyl-Lithium (Formel II) entsteht, welches seinerseits mit Trimethylchlorstannan zum Trimethylstannyl-phosphol weiterreagiert. Vgl.: J. Chem. Soc. Chem. Comm. (1988), 770. Diese Verbindung kann mit Titantetrachlorid zu Phospholyl-Titantrichlorid (Formel IV) umgesetzt werden.

Pro Mol π-Komplex-Verbindungen bzw. Metallocen-Verbindungen werden $10^1$ bis $10^{12}$ Mol Comonomere umgesetzt. Die π-Komplex-Verbindungen bzw. Metallocen-Verbindungen können zusammen mit Cokatalysatoren eingesetzt werden. Das Mengenverhältnis zwischen Metallocen-Verbindung bzw. π-Komplex-Verbindung und Cokatalysator beträgt 1 bis 100 000 mol Cokatalysator pro mol Metallocen bzw. π-Komplex-Verbindung. Cokatalysatoren sind beispielsweise Aluminoxanverbindungen. Darunter werden solche der Formel

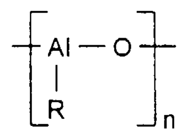 (XII)

verstanden, in der

R für $C_1$-$C_{20}$-Alkyl, $C_6$-$C_{12}$-Aryl oder Benzyl steht und

n eine Zahl von 2 bis 50, bevorzugt 10 bis 35 bedeutet.

Es ist ebenso möglich, ein Gemisch verschiedener Aluminoxane oder ein Gemisch von deren Vorläufern (Aluminiumalkylen) in Kombination mit Wasser (in gasförmiger. flüssiger, fester oder gebundener Form, etwa als Kristallwasser) einzusetzen. Das Wasser kann auch als (Rest)Feuchte des Polymerisationsmediums, des Monomers oder eines Trägers wie Silikagel zugeführt werden.

Die aus der eckigen Klammer von Formel (XI) herausragenden Bindungen enthalten als Endgruppen des oligomeren Aluminoxans R-Gruppen oder $AlR_2$-Gruppen. Solche Aluminoxane liegen in der Regel als Gemisch mehrerer von ihnen mit unterschiedlicher Kettenlänge vor. Die Feinuntersuchung hat auch Aluminoxane mit ringförmiger oder käfigartiger Struktur ergeben. Aluminoxane sind marktgängige Verbindungen Im speziellen Fall von R = $CH_3$ wird von Methylaluminoxanen (MAO) gesprochen.

Weitere Cokatalysatoren sind Aluminiumalkyle, Lithiumalkyle oder Mg-organische Verbindungen, wie Grignard-Verbindungen oder teilhydrolysierte Bororganyle. Bevorzugte Cokatalysatoren sind Aluminoxane.

Die Aktivierung mit dem Cokatalysator bzw. die Einführung des voluminösen nicht- oder schwach-kooridinierenden Anions kann in dem Autoklaven oder in einem getrennten Reaktionsgefäß (Präformierung) durchgeführt werden. Die Aktivierung kann in Gegenwart oder Abwesenheit des/der zu polymerisierenden Monomeren erfolgen. Die Aktivierung kann in einem aliphatischen oder aromatischen oder halogenierten Lösungs- oder Suspensionsmittel durchgeführt werden.

Die π-Komplex-Verbindungen bzw. Metallocen-Verbindungen und die Aluminoxane bzw. die Bor-haltigen Aktivatoren können sowohl als solche in homogener Form als auch einzeln oder gemeinsam in heterogener Form auf Trägern eingesetzt werden. Das Trägermaterial kann hierbei anorganischer oder organischer Natur sein, wie Kieselgel, $Al_2O_3$, $MgCl_2$, NaCl, Cellulosederivate, Stärke und Polymere. Hierbei kann sowohl erst die π-Komplex-Verbindung bzw. Metallocen-Verbindung als auch erst das Aluminoxan bzw. die Bor-haltigen Aktivatoren auf den Träger gebracht werden und die jeweils andere Komponente danach zugesetzt werden. Gleichermaßen kann man aber auch die π-Komplex-Verbindung bzw. Metallocen-Verbindung in homogener oder heterogener Form mit dem Aluminoxan oder einer geeigneten Borverbindung aktivieren und danach die aktivierte Metallocen-Verbindung auf den gegebenenfalls Aluminoxan-beladenen Träger bringen

Trägermaterialien werden vorzugsweise thermisch und/oder chemisch vorbehandelt um den Wassergehalt bzw. die OH-Gruppenkonzentration definiert einzustellen oder möglichst niedrig zu halten. Eine chemische Vorbehandlung kann z.B. in der Umsetzung des Trägers mit Aluminiumalkyl bestehen. Anorganische Träger werden gewöhnlich vor Verwendung auf 100°C bis 1000°C während 1 bis 100 Stunden erhitzt.

Die Oberfläche solcher anorganischer Träger, insbesondere von Silica ($SiO_2$), liegt zwischen 10 und 1000

$m^2/g$, vorzugsweise zwischen 100 und 800 $m^2/g$. Der Teilchendurchmesser liegt zwischen 0,1 und 500 Mikrometer (µ), vorzugsweise zwischen 10 und 200 µ.

Durch (Co)Polymerisation umzusetzende Olefine, Diolefine, halogenierte Diolefine, (Meth)Acrylate und Vinylester sind beispielsweise Ethylen, Propylen, Buten-1, Penten-1, Hexen-1, Octen-1, 3-Methyl-buten-1, 4-Methyl-penten-1-, 4-Methyl-hexen-1, 1,3-Butadien, Isopren, 1,4-Hexadien, 1,5-Hexadien und 1,6-Octadien, Chloropren, Vinylacetat, Vinylpropionat und weitere dem Fachmann bekannte. Solche Olefine und Diolefine können weiterhin substituiert sein, beispielsweise mit Phenyl, substituiertem Phenyl, Halogen, der veresterten Carboxylgruppe, der Säureanhydridgruppe; Verbindungen dieser Art sind beispielsweise Styrol, Methylstyrol, Chlorstyrol, Fluorstyrol, Inden, 4-Vinyl-biphenyl, Vinyl-fluoren, Vinyl-anthracen, Methylmethacrylat, Ethylacrylat, Vinylsilan, Trimethylallylsilan, Vinylchlorid, Vinylidenchlorid, Tetrafluorethylen, Vinylcarbazol, Vinylpyrrolidon, Vinylether und Vinylester. Bevorzugte Monomere sind: Ethylen, Propylen, Buten, Hexen, Octen, 1,4-Hexadien, 1,6-Octadien, Methylmethacrylat und Acetylen.

Neben den genannten Dienen seien weiter als offenkettige, mono- und polycyclische die folgenden genannt: 5-Methyl-1,4-hexadien, 3,7-Dimethyl-1,6-octadien; Cyclopentadien, 1,4-Hexadien, 1,5-Cyclooctadien; Tetrahydroinden, Methyl-tetrahydroinden. Dicyclopentadien, Bicyclo-(2,2,1)-heptadien(2,5), Norbornene mit Substituenten, wie Alkenyl, Alkyliden, Cycloalkenyl, Cycloalkyliden, so etwa 5-Methylen-2-norbornen (MNB), 5-Ethyliden-2-norbornen, 5-Isopropyliden-2-norbornen; Allylcyclohexen, Vinyl-cyclohexen.

Weitere bevorzugte Monomere neben den obengenannten sind: Dicyclopentadien, 1,4-Hexadien, 5-Methyl-2-norbornen, 5-Ethyliden-2-norbornen und 5-Vinyl-2-norbornen. Gemische mehrerer hiervor können selbstverständlich eingesetzt werden.

Das erfindungsgemäße Verfahren wird in der Masse-, Lösungs-, Slurry- oder Gas-Phase durchgeführt, je nachdem, ob ein löslicher oder ein unlöslicher Katalysator der oben beschriebenen Art eingesetzt wird. Die Lösungsphase bzw. die Slurry-Phase kann aus den Comonomeren allein, d.h. ohne Verwendung eines zusätzlichen Lösungsmittels, gebildet werden. Für den Fall, daß ein Lösungsmittel mitverwendet wird, kommen hierfür inerte Lösungsmittel, beispielsweise aliphatische oder cycloaliphatische Kohlenwasserstoffe, Benzin- bzw. Dieselölfraktionen (gegebenenfalls nach einer Hydrierung), Toluol, Chlorbenzol, o-Dichlorbenzol oder Chlornaphthalin in Frage. Bei Lösungsmitteln mit niedrigem Siedepunkt kann durch Anlegen eines ausreichenden Reaktionsdruckes für die Einhaltung der flüssigen Phase gesorgt werden; solche Zusammenhänge sind dem Fachmann bekannt. Erfindungsgemäß wird diskontinuierlich oder kontinuierlich oder im Semibatch-Verfahren gearbeitet.

Zur Anwendung gelangen die obengenannten Temperaturen und Drücke Für die Masse-, Lösungs- und Slurry-Verfahrensweise werden Temperaturen im unteren Bereich, etwa 0 bis 150°C, bevorzugt, für die Gasphase im Bereich von etwa 20 bis 100°C. Die Drücke übersteigen aus ökonomischen Gründen vielfach den Wert von 30 bar, bevorzugt 20 bar, nicht. Erfindungsgemäß wird in einem oder mehreren Reaktoren oder Reaktionszonen, z.B. in einer Reaktorkaskade, gearbeitet; im Falle mehrerer Reaktoren können verschiedene Polymerisationsbedingungen eingestellt werden

Thermoplastische Elastomere (TPE) sind gekennzeichnet durch aufeinanderfolgende Blöcke (Sequenzen), die abwechselnd von hoher Ordnung und damit hoher Kristallinität bzw. geringer Ordnung und damit niedriger oder völlig fehlender Kristallinität sind. Die kristallinen Blöcke schmelzen beim Erwärmen und machen den Stoff thermoplastisch verarbeitbar; die ungeordneten amorphen Blöcke stellen elastische Puffer zwischen den kristallinen, geordneten Blöcken dar und verleihen dem Stoff insgesamt elastomere Eigenschaften. Hierzu zählen insbesondere gute Dehnbarkeit, Flexibilität und ein geringer Restverformungsanteil bei guten mechanischen Eigenschaften, insbesondere einer hohen Schlagzähigkeit. Solche TPE's sind beispielsweise geeignet für Kabelummantelungen, Schläuche, insbesondere auch im Medizinbereich, Schrumpffolien, Fensterdichtungen u.a.

Bei der Herstellung von thermoplastischen Elastomeren müssen demnach alternierende Polymerisationsbedingungen eingestellt werden, unter denen geordnete bzw. ungeordnete Blöcke entstehen.

Bei Monomeren mit 3 oder mehr C-Atomen sind bei gleicher chemischer Zusammensetzung, also dem Einsatz nur eines Monomeren, solche Strukturen möglich. Dies sei am Beispiel von thermoplastisch-elastomerem Propylen (e-PP) formelmäßig wie folgt dargestellt.

$$\left.\begin{array}{l}(\text{i-PP}\text{---}\text{a-PP})_n \\ \\ (\text{s-PP}\text{---}\text{a-PP})_n\end{array}\right\}\ \text{stellen beide e-PP dar.}$$

i = isotaktisch, s = syndiotaktisch, a = ataktisch, n = Anzahl der wiederkehrenden Einheiten.

In beiden Fällen wechseln hochgeordnete isotaktische oder syndiotaktische und damit kristalline Blöcke mit ungeordneten ataktischen und damit elastischen Blöcken ab. e-PP ist ein wichtiger Vertreter thermoplastischer Elastomerer. In analoger Weise ergeben sich solche Blockstrukturen auch von Buten-1, Hexen-1, Styrol, 3-Methylpenten-1,4-Methyl-penten-1 und weiteren dem Fachmann bekannten Monomeren.

Der elastische Block kann jedoch auch durch Elastomer-Strukturen gebildet werden, deren Monomere oder Comonomere chemisch verschieden vom Monomer des kristallinen Blocks sind, so daß insgesamt ein Copolymer aus mindestens 2 verschiedenen Comonomeren gebildet wird. Beispiele dieses Typs sind:

$(PE - EPM)_n$
$(PE - EBM)_n$
$(PE - EHM)_n$
$(PE - EOM)_n$

mit E = Ethylen, P = Propylen, B = Buten, H = Hexen, O Octen.

Weitere Beispiele sind:

$(PE - a\text{-}PP)_n$
$(i\text{-}PP - EPM\ (bzw.\ \text{-}EBM\ oder\ \text{-}EHM\ oder\ \text{-}EOM))_n$
$(s\text{-}PP - EPM\ (bzw.\ \text{-}EBM\ oder\ \text{-}EHM\ oder\ \text{-}EOM))_n$

Die kristalline Phase kann auch auf Basis hochtaktischer (iso-, syndio-)Strukturen des Polybutens, Polyhexens, Polyoctens aufgebaut werden; umgekehrt bilden die ataktischen Strukturen dieser Polymere geeignete amorphe Phasen.

Unter Einbeziehung von Dienen erhält man z.B.:

$(PE - EPDM)_n$
$(i\text{-}PP - EPDM)_n$
$(s\text{-}PP - EPDM)_n$

In allen genannten Beispielen ist der in den Klammerausdrücken zuerste aufgeführte Block der hochkristalline Anteil und der danach aufgeführte Block der nicht-kristalline, statistisch aufgebaute Anteil, z.B. ist PE ein überwiegend oder ausschließlich Ethylen enthaltender Block (unter Einschluß von LLDPE), während etwa a-PP einen nicht-kristallinen, ataktischen und überwiegend oder ausschließlich Propen enthaltenden Block darstellt.

Die erfindungsgemäß einzusetzenden $\pi$-Komplex-Verbindungen, besonders die Metallocen-Verbindungen ermöglichen durch die Donor-Akzeptor-Brücke eine definierte Öffnung der beiden Cyclopentadienylgerüste in der Art eines Schnabels, wobei neben einer hohen Aktivität eine hohe Stereoselektivität, eine kontrollierte Molekulargewichtsverteilung und ein einheitlicher Einbau von (Co)Monomeren gewährleistet sind. Infolge einer definierten schnabelartigen Öffnung ist auch Platz für voluminöse (Co)Monomere. Eine hohe Einheitlichkeit in der Molekulargewichtsverteilung ergibt sich weiterhin aus dem einheitlichen und definierten Ort der durch Einschub (Insertion) erfolgenden Polymerisation (Single Site Catalyst) und kann durch die Wahl der Polymerisationstemperatur eingestellt werden.

Die Molekulargewichtsverteilung kann gezielt verändert (verbreitert) werden, indem man gleichzeitig mehrere D/A-Katalysatoren einsetzt, um ein bestimmtes Material-Eigenschaftsprofil einzustellen. Dementsprechend ist es auch möglich, einen oder mehrere D/A-Katalysatoren in Kombination mit anderen Metallocenen, die keine D/A-Brücke aufweisen, einzusetzen.

Der gleichzeitige Einsatz mindestens zweier Metallocen-Katalysatoren, von denen mindestens einer ein D/A-Metallocen ist und die unterschiedliche Stereoselektivitäten besitzen, etwa einer für a-PP und ein andere für i-PP, kann wirkungsvoll zur Entwicklung eines optimalen TPE durch ausgewogene Beteiligung der amorphen und kristallinen Phasen genutzt werden.

Die D/A-Struktur kann eine Extra-Stabilisierung der Katalysatoren bis hin zu hohen Temperaturen bewirken, so daß die Katalysatoren auch im Hochtemperaturbereich von 80 bis 250°C, bevorzugt 80 bis 180°C, eingesetzt werden können. Die mögliche thermische Dissoziation der Donor-Akzeptor-Bindung ist reversibel und führt durch diesen Selbstorganisations-Prozeß und Selbstreparatur-Mechanismus zu besonders hochwertigen Katalysatoreigenschaften.

Es wurde weiterhin beobachtet, daß erfindungsgemäß einzusetzendc Metallocen-Verbindungen in Abhängigkeit von der Temperatur ein unterschiedliches Copolymerisationsverhalten zeigen. Diese Erscheinung ist noch nicht vollständig untersucht, könnte jedoch in Übereinstimmung mit der Beobachtung stehen, daß koordinative Bindungen, die von einer ionischen Bindung überlagert sind, wie die Donor-Akzeptor-Bindungen in den erfindungsgemäßen Metallocen-Verbindungen, eine zunehmende Reversibilität bei höherer Temperatur zeigen. So wurde beispielsweise bei der Ethylen-Propylen-Copolymerisation beobachtet, daß bei gleichem Angebot beider Comonomerer bei tiefer Copolymerisationstemperatur ein hoch Propylen-haltiges Copolymer gebildet wird, während mit steigender Polymerisationstemperatur der Propylengehalt zurückgeht, bis schließlich bei hoher Temperatur überwiegend Ethylen enthaltende Polymere entstehen. Die reversible Dissoziation und Assoziation der D/A-Struktur und die dadurch möglich werdende gegeneinander erfolgende Rotation der π-Gerüste kann schematisch wie folgt dargestellt werden:

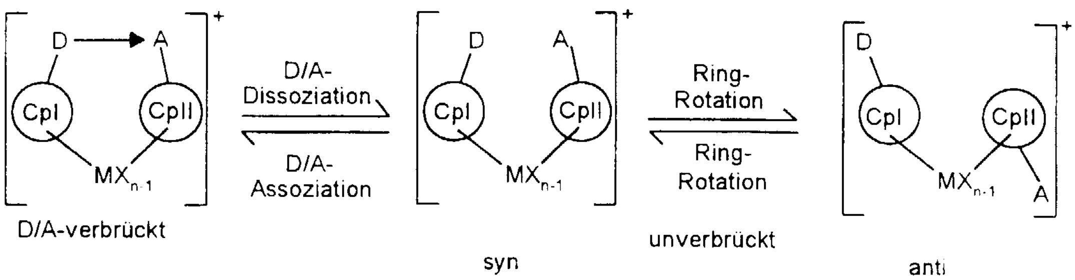


bzw.

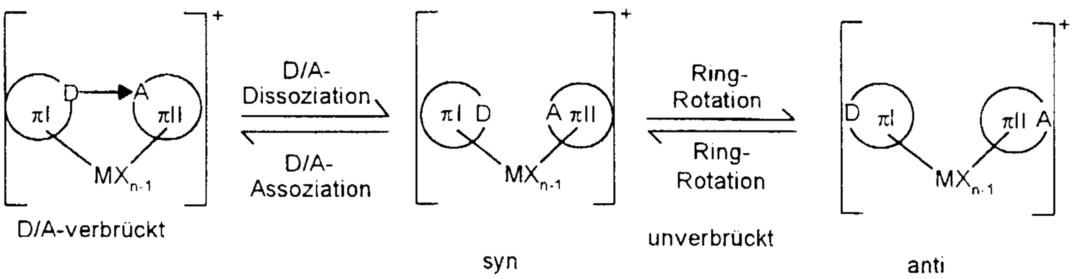


Durch den Wechsel zwischen verbrückter und unverbrückter Katalysator-Struktur stehen erstmals Katalysatoren zur Verfügung, die geeignet sind, unter wechselnden Bedingungen definiert wechselnde stereospezifische/aspezifische Liganden-Anordnungen oder auch wechselnde Substrat-Selektivität unter Benutzung nur eines Katalysators zu erzeugen.

Eine weitere wertvolle Eigenschaft der erfindungsgemäßen D/A-π-Komplex-Verbindungen, beispielsweise D/A-Metallocen-Verbindungen, besteht in der Möglichkeit zur Selbstaktivierung und damit einem Verzicht auf teure Cokatalysatoren, insbesondere im Falle von dianionischen $\widehat{X\,X}$-Derivaten

Hierbei bindet das Akzeptoratom A in der geöffneten Form der D/A-π-Komplex-Verbindungen, beispielsweise D/A-Metallocen-Verbindung einen X-Liganden, beispielsweise eine Seite eines Dianions unter Ausbildung einer zwitterionischen Metallocen-Struktur und erzeugt damit beim Übergangsmetall eine positive Ladung, während das Akzeptoratom A eine negative Ladung annimmt. Eine solche Selbstaktivierung kann intramolekular oder intermolekular erfolgen. Dies sei am Beispiel der bevorzugten Verknüpfung zweier X-Liganden zu einem Chelat-Liganden, nämlich des Butadiendiyl-Derivates, verdeutlicht:

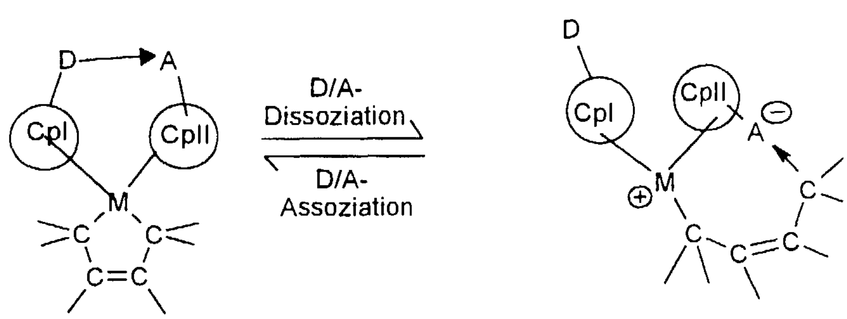


aktivierte Form

bzw.

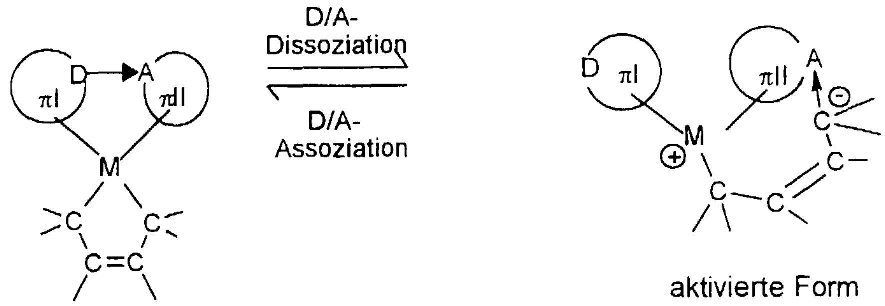

aktivierte Form

Die Bindungsstelle zwischen dem Übergangsmetall M und H oder substituiertem oder nicht substituiertem C, im Formelbeispiel substituiertem C des gezeigten Butadiendiyl-Dianions, ist sodann der Ort für die Olefin-Insertion zur Polymerisation.

Das temperaturabhängige dynamische Verhalten der erfindungsgemäßen π-Komplex-Verbindungen bzw. Metallocen-Verbindungen bei verschiedenen Temperaturen ermöglicht es demnach, bei verschiedenen Temperaturen unterschiedliche Stereoblock-Copolymerisate herzustellen, etwa solche des Typs von isotaktischem und ataktischem Polypropylen $(i\text{-}PP\text{-}a\text{-}PP)_n$, die von unterschiedlicher Zusammensetzung (a) bezüglich der relativen Mengen von isotaktischem Polypropylen (i-PP) und ataktischem Polypropylen (a-PP) und (b) bezüglich der Block- bzw Sequenzlängen sein können.

Entsprechend sind die erfindungsgemäß einzusetzenden π-Komplex-Verbindungen bzw. Metallocen-Verbindungen geeignet zur Herstellung thermoplastischer Elastomerer. Diese zeichnen sich gemäß obiger Darstellung durch Blockstrukturen aus, die abwechselnd amorphe bzw. kristalline Eigenschaften haben. Die kristallinen Bereiche können dabei durch intramolekulare und/oder intermolekulare Ordnungszustände erreicht werden. Solche kristallinen Zustände stellen reversible physikalische Vernetzungsstellen für das Elastomer dar.

**Beispiele**

Alle Reaktionen wurden unter streng anaeroben Bedingungen und unter Verwendung von Schlenk-Techniken bzw. der Hochvakuumtechnik durchgeführt. Die verwendeten Lösungsmittel waren trocken und mit Argon gesättigt. Chemische Verschiebungen δ sind in ppm angegeben, relativ zum jeweiligen Standard: $^{1}H$(Tetramethylsilan), $^{13}C$ (Tetramethylsilan), $^{31}P$(85%ige $H_3PO_4$), $^{11}B$(Bortrifluorid-Etherat-18,1 ppm). Negative Vorzeichen bedeuten eine Verschiebung zu höherem Feld.

**Beispiel 1** (Bis-(trimethylsilyl)-cyclopentadien, Verbindung 1)

14,7 g (0,106 mol) Trimethylsilyl-cyclopentadien (bezogen von Fa. Fluka) und 150 ml Tetrahydrofuran (THF) wurden in einen Reaktionskolben gegeben und auf 0°C abgekühlt. Hierzu wurden 47,4 ml einer Lösung von Butyllithium in n-Hexan (2,3 molar; Gesamtmenge 0,109 mol) tropfenweise während 20 Minuten zugefügt. Nach vollständiger Zugabe wurde die gelbe Lösung für eine weitere Stunde gerührt; danach wurde das Kältebad entfernt. Bei Raumtemperatur wurde die Lösung für eine weitere Stunde gerührt und danach auf -20°C abgekühlt. Dann wurden 14,8 ml (0,117 mol) Trimethylsilylchlorid tropfenweise während 10 Minuten zugegeben und das Reaktionsgemisch bei -10°C zwei Stunden gerührt. Danach wurde das Kältebad entfernt und die Reaktionslösung auf Raumtemperatur erwärmt und für eine weitere Stunde nachgerührt. Das Reaktionsgemisch wurde durch Celite filtriert; das Filter wurde mit Hexan gewaschen, und das Hexan wurde von den vereinigten Filtraten im Vakuum entfernt. Das Rohprodukt ergab bei einer Destillation bei 26°C unter 0,4 mbar 19 g reines Produkt der Verbindung 1 (85 % der theoretischen Ausbeute). Siedepunkt und NMR-Daten entsprechen den Literaturangaben (J. Organometallic Chem. 29 (1971), 227; ibid. 30 (1971), C 57; J. Am. Chem. Soc, 102, (1980), 4429; J. Gen. Chem. USSR, Eng. Transl. 43 (1973), 1970; J. Chem. Soc., Dalton Trans. 1980, 1156) $^{1}H$-NMR (400 MHz, $C_6D_6$): δ = 6,74 (m,2H), 6,43 (m,2H), -0,04 (s,18H).

**Beispiel 2** (Trimethylsilyl-cyclopentadienyl-dichlorboran, Verbindung 2)

In einen Rundkolben, der mit einem Trockeneis-Kühlbad ausgerüstet war, wurden 16 g (0,076 mol) der Verbindung 1 gegeben. 8,9 g (0,076 mol) $BCl_3$ wurden bei -78°C in ein Schlenk-Rohr kondensiert und danach tropfenweise

während einer Zeit von 5 Minuten in den Rundkolben gegeben. Die Reaktionsmischung wurde langsam während 1 Stunde auf Zimmertemperatur erwärmt und dann für weitere 2 Stunden auf 55 bis 60°C gehalten. Alle flüchtigen Verbindungen wurden im Vakuum (3 mm Hg = 4 mbar) entfernt. Die anschließende Destillation bei 39°C und 0,012 mbar ergab 14,1 g der Verbindung 2 (85 % der theoretischen Ausbeute). Das $^1H$-NMR stimmt mit den Literaturangaben überein und zeigte, daß eine Reihe von Isomeren hergestellt worden waren (vgl. J. Organometallic Chem. 169 (1979), 327). $^{11}B$-NMR (64,2 MHz, $C_6D_6$): δ = +31,5.

**Beispiel 3** (Dichlorboranyl-cyclopentadienyl-titantrichlorid, Verbindung 3)

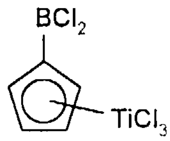

3

In ein 250 ml-Schlenk-Rohr wurden 11,4 g (0,052 mol) der Verbindung 2 und 100 ml Methylenchlorid ($CH_2Cl_2$) gegeben. Diese Lösung wurde auf -78°C gekühlt, und 9,8 g (5,6 ml, 0,052 mol) Titantetrachlorid wurden während 10 Minuten zugetropft. Die erhaltene rote Lösung wurde langsam auf Raumtemperatur erwärmt und während weiterer 3 Stunden gerührt. Das Lösungsmittel wurde im Vakuum entfernt, und man erhielt ein schmutzig-gelbes Produkt. 200 ml Hexan wurden zum rohen Feststoff gegeben, und die erhaltene gelbe Lösung wurde filtriert und über Nacht im Kühlschrank gekühlt, wobei 12,3 g (79 % der theoretischen Ausbeute) gelber Kristalle der Verbindung 3 erhalten wurden. Es sei darauf hingewiesen, daß in J. Organometallic Chem. 169 (1979), 373, 62 % der theoretischen Ausbeute erhalten wurde, wobei die Reaktion in einem Kohlenwasserstoff-Lösungsmittel, wie Petroleumether oder Methylcyclohexan ausgeführt wurde.
$^1H$-NMR (400 Mhz, $CD_2Cl_2$): δ = 7,53 (t, J = 2,6 Hz, 2H), 7,22 (t, J = 2,6 Hz, 2H) $^{11}B$-NMR (64,2 MHz, $CD_2Cl_2$): δ = +33.

**Beispiel 4** (Dimethylboranyl-cyclopentadienyl-titantrichlorid, Verbindung 4)

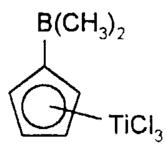

4

In einem Rundkolben wurden 2,37 g (0,0079 mol) der Verbindung 3 in 100 ml Hexan gelöst. Diese Lösung wurde auf 0°C gekühlt und tropfenweise mit 4 ml einer 2-molaren Lösung von Aluminiumtrimethyl in Toluol (0,008 mol) versetzt. Nach vollständiger Zugabe wurde das Kältebad entfernt und alle flüchtigen Anteile im Vakuum entfernt. Der verbleibende gelbe Feststoff wurde nunmehr in Pentan aufgelöst, feste Anteile wurden abfiltriert, und das klare Filtrat wurde auf -78°C abgekühlt, wobei 1,5 g (74 % der theoretischen Ausbeute) an Verbindung 4 erhalten wurden. Es sei angemerkt, daß in J. Organometallic Chem. 169 (1979), 373 eine Ausbeute von 87 % der theoretischen Ausbeuten angegeben werden, wobei Tetramethylzinn als Alkylierungsmittel verwendet wurde; es war jedoch nicht möglich, die Verbindung 4 frei vom entstehenden Trimethylzinnchlorid zu erhalten.
$^1H$-NMR (400 Mhz, $CD_2Cl_2$): δ = 7,48 (t, J = 2,5 Hz, 2H), 7,23 (t, J = 2,5 Hz, 2H). 1,17 (s, 6H). $^{11}B$-NMR (64,2 MHz, $CD_2Cl_2$): δ = +56.

**Beispiel 5** (Diphenylphosphin-cyclopentadienyl-lithium, Verbindung 6)

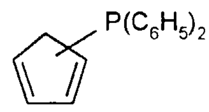

5

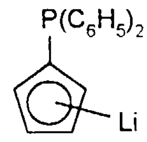

6

50 g (0,186 mol) Cyclopentadienyl-thallium (bezogen von Fa. Fluka) wurden gemeinsam mit 300 ml Diethylether in einen 500 ml-Kolben eingefüllt. Die Aufschlämmung wurde auf 0°C gekühlt und 34,2 ml (0,186 mol) Diphenylchlorphosphin innerhalb von 10 Minuten zugetropft. Die Aufschlämmung wurde danach auf Zimmertemperatur angewärmt und während einer Stunde gerührt und schließlich durch eine Fritte filtriert. Das Lösungsmittel wurde sodann im Vakuum abgezogen und hinterließ 39,5 g (85 % der theoretischen Ausbeute) des Zwischenproduktes Diphenylphosphinocyclopentadien, Verbindung 5. Ein Anteil von 18,6 g (0,074 mol) der Verbindung 5 wurde sodann mit Toluol verdünnt und auf 0°C abgekühlt. Zu dieser Lösung wurden 33,2 ml einer 2,24-molaren Lösung von Butyl-lithium in Hexan (0,074 mol) während 10 Minuten zugegeben. Nach dem Anwärmen auf Raumtemperatur und nach Rühren während 2 Stunden ergab die gelbe Lösung einen Niederschlag, der filtriert und mit Toluol und anschließend mit Hexan gewaschen wurde. Nach dem Trocknen im Vakuum wurden 13,2 g der Verbindung 6 (70 % der theoretischen Ausbeute) als bräunliches Pulver erhalten (vgl. J. Am. Chem. Soc. 105 (1983); 3882; Organometallics 1 (1982), 1591).
$^{1}H$-NMR (400 MHz, $d_8THF$): $\delta$ = 7,3 (m, 4H), 7,15 (m, 6H), 5,96 (m, 2H), 5,92 (m, 2H), $^{31}P$-NMR (161,9 MHz, $d_8THF$): $\delta$ = -20.

**Beispiel 6** ($(C_6H_5)_2P \rightarrow B(CH_3)_2$-verbrücktes Bis-(cyclopentadienyl)-titandichlorid, Verbindung 7)

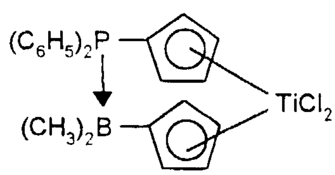

7

In einen Rundkolben wurden 0,36 g (0,00139 mol der Verbindung 6 und 20 ml Toluol gegeben. Die entstehende Lösung wurde auf -20°C gekühlt und eine Lösung von 0,36 g (0,00139 mol) der Verbindung 4 in 20 ml Toluol während 20 Minuten zugetropft. Nach Beendigung des Zutropfens wurde die Lösung innerhalb von 2 Stunden auf Raumtemperatur erwärmt und bei dieser Temperatur für eine zusätzliche Stunde gerührt. Unlösliches Material wurde über eine Fritte entfernt, und das Lösungsmittel wurde im Vakuum abdestilliert. Der rote ölige Feststoff wurde dann mit Hexan gewaschen, das abdekantiert wurde, und der Feststoff wurde erneut im Vakuum getrocknet. Dabei erhielt man 0,28 g (42 % der theoretischen Ausbeute) der Verbindung 7 als rotes Pulver.
$^{1}H$-NMR (300 MHz, $CD_2Cl_2$): $\delta$ = 7,6 - 7,3 (br, m, 10H), 6,92 (m, 2H), 6,77 (m, 4H), 6,60 (m, 2H), 0,29 (d, $J_{PH}$ = 19 Hz, 6H); $^{31}P$-NMR (161,9 MHz, $CD_2Cl_2$): $\delta$ = 17,1 (br); $^{11}B$-NMR (64,2 MHz, $CD_2Cl_2$): $\delta$ = -29 (br).

**Beispiel 7** (Tributylstannyl-diphenylphosphino-inden, Verbindung 8)

10 g (0,086 mol) Inden wurden in einen Rundkolben gegeben, mit 200 ml Diethylether verdünnt und auf -20°C gekühlt. Zu dieser Lösung wurden 36 ml einer 2,36-molaren Lösung von Butyl-lithium (0,085 mol) in n-Hexan gegeben, wobei die Lösung sofort eine gelbe Farbe annahm. Das Kältebad wurde entfernt, und man ließ das Reaktionsgemisch auf Raumtemperatur erwärmen und rührte das Reaktionsgemisch während einer weiteren Stunde. Danach wurde das Reaktionsgemisch wieder auf 0°C abgekühlt, und 19 g (15,9 ml, 0,086 mol) Diphenylchlorphosphin wurden unter Bildung eines Niederschlags zugegeben. Das Kältebad wurde wieder entfernt, und die Lösung konnte sich auf Zimmertemperatur erwärmen, während für eine weitere Stunde nachgerührt wurde. Die Lösung wurde dann erneut auf -20°C

gekühlt, und 36 ml (0,085 mol) Butyl-lithium in n-Hexan wurden zugetropft. Nach beendeter Zugabe wurde das Kältebad wieder entfernt, und die Temperatur stieg auf Raumtemperatur; die Lösung wurde für weitere 1,5 Stunden nachgerührt. Die Aufschlämmung wurde dann wiederum auf 0°C gekühlt und 28 g (0,086 mol) Tributylzinnchlorid wurden tropfenweise zugefügt. Die erhaltene Aufschlämmung wurde auf Raumtemperatur erwärmt und für weitere 1,5 Stunden gerührt, danach durch eine Fritte filtriert und das Lösungsmittel im Vakuum entfernt. Es hinterblieben 46,9 g der Verbindung 8 (92 % der theoretischen Ausbeute) als ein schweres gelbes Öl.
$^{1}$H-NMR (400 MHz, $CDCl_3$): δ = 7,5 - 7,3 (m,6H), 7,28 (br s,6H), 7,14 (pseudo-d t, 7,3 Hz/1,0 Hz, 1H), 7,08 (t, J = 7,3 Hz, 1H), 6,5 (br m, 1H), 4,24 (br s, 1H), 1,4-1,25 (m, 6H), 1,25 - 1,15 (m,6H), 0,82 (t, J = 7,2 Hz, 9H), 0,53 (t, J = 8 Hz, 6H), $^{31}$P-NMR(161,9 MHz, $CDCl_3$): δ = -20,6.

**Beispiel 8** (Diphenylphosphino-indenyl-zirkoniumtrichlorid, Verbindung 9)

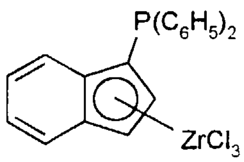

9

Eine Lösung von 37 g (0,0628 mol) der Verbindung 8 in 300 ml Toluol wurde während 3 Stunden zu einer Aufschlämmung von 14,6 g $ZrCl_4$ (99,9 %ig, 0,0628 mol, bezogen von Fa. Aldrich) in 100 ml Toluol bei Raumtemperatur gegeben. Die Lösung wurde sofort rot und ging langsam in orange und schließlich in gelb über. Nach 4-stündigem Nachrühren wurde der gelbe Niederschlag abfiltriert und mit Toluol und dann mit Hexan gewaschen. Der Feststoff wurde im Vakuum getrocknet und ergab 15,3 g (50 % der theoretischen Ausbeute) der Verbindung 9 als ein frei fließendes gelbes Pulver. Die Ausbeute ließ sich ohne weiteres auf über 70 % steigern, wenn man bei tieferer Temperatur arbeitete, z.B. 30 min bei -30°C und 5 Stunden bei 0°C. Das Produkt konnte weiter gereinigt werden, indem man restliche Zinnverbindung unter Benutzung von Pentan in einem Soxhlet-Extraktor auswusch (Extraktionszeit: 8 Stunden).

**Beispiel 9** ($(C_6H_5)_2P$-$BCl_2$-verbrücktes Indenyl-cyclopentadienyl-zirkoniumdichlorid, Verbindung 10)

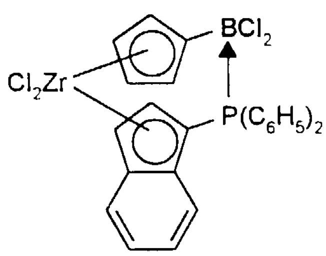

10

In ein Schlenk-Rohr wurden 4,43 g (0,0089 mol) der gereinigten Verbindung 9 und 100 ml Toluol gegeben. Zu dieser Aufschlämmung wurden 1,95 g (0,0089 mol) der Verbindung 2 gegeben. Die gelbe Aufschlämmung wurde während 6 Stunden bei Raumtemperatur gerührt; während dieser Zeit bildete sich ein blaßweißer Niederschlag. Dieser Niederschlag (4,1 g, 75 % der theoretischen Ausbeute) wurde durch Filtration gewonnen und als im wesentlichen reines Material befunden.
$^{1}$H-NMR (500 MHz, $CD_2Cl_2$): 6 = 7,86 (pseudo ddd, J = 8,5/2,5/1 Hz, 1H), 7,75 - 7,55 (m,10H), 7,35 (pseudo ddd, J = 8,5/6,9/0,9 Hz, 1H), 7,32 (br t, J = 3,1 Hz, 1H), 7,22 (pseudo ddd, J = 8,8/6,8/1,1 Hz, 1H), 7,06 (pseudo ddd, J = 3,4/3,4/0,8 Hz, 1H), 6,92 (m,1H), 6,72 (m, 1H), 6,70 (br m, 1H), 6,61 (pseudo q, J = 2,3 Hz, 1H), 6,53 (br d, 8,7 Hz,

1H); $^{31}$P-NMR (161,9 MHz, $CD_2Cl_2$): δ = 6,2 (br, m), $^{11}$B (64.2 MHz, $CD_2Cl_2$): δ = -18 (br).

**Beispiel 10** (($(C_6H_5)_2$P-B$(CH_3)_2$-verbrücktes Indenyl-cyclopentadienyl-zirkoniumdichlorid, Verbindung 11)

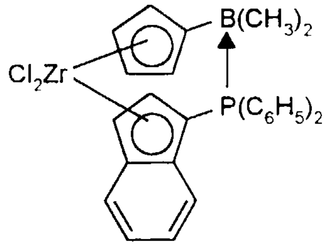

11

Zu 1,5 g (0,00247 mol) Verbindung 10 aus Beispiel 9 wurden 50 ml Toluol gegeben. Die Aufschlämmung wurde auf 0°C gekühlt, und 1,2 ml einer 2-molaren Lösung von Trimethylaluminium in Hexan (0,0024 mol) wurden während 5 Minuten dazu getropft. Nach vollständiger Zugabe wurde das Kühlbad entfernt, und die Lösung konnte sich auf Raumtemperatur erwärmen, während für 2 Stunden weiter gerührt wurde. Der restliche Niederschlag wurde abfiltriert und das Losungsmittel vom Filtrat im Vakuum abgezogen, wobei 0,37 g (26 % der theoretischen Ausbeute) der Verbindung 11 als ein bräunlicher Feststoffzurückblieben.
$^{31}$P-NMR (161,9 MHz, $CD_2Cl_2$): δ = 14,6; $^{11}$B-NMR (64,2 MHz, $CD_2Cl_2$): δ= -28

**Beispiel 11** (Trimethylsilyl-inden, Verbindung 12)

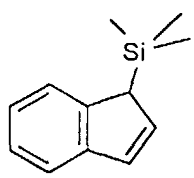

12

In einen Rundkolben, der 100 ml THF enthielt und auf 0°C gekühlt war, wurden 25 ml Inden (0,213 mol, über $CaH_2$ im Vakuum destilliert) gegeben. 94 ml einer 2,3-molaren Lösung von Butyl-lithium in Hexan (0,216 mol) wurden während 20 min zugegeben. Nach vollständiger Zugabe wurde 20 min lang gerührt, dann auf Raumtemperatur erwärmt und weitere 30 min gerührt. Nach Abkühlung auf -20°C wurden 27,5 ml (0,216 mol) Trimethylchlorsilan zugetropft, wobei eine leicht trübe orangefarbene Lösung entstand. Nach 1 h Rühren bei -10°C und 1,5 h bei 0°C wurde auf Raumtemperatur erwärmt und das Lösungsmittel im Vakuum entfernt. Nach erneuter Auflösung in Hexan wurde LiCl abfiltriert und das Hexan im Vakuum entfernt. Destillation des Produktes (0,045 mbar, 58 bis 60°C) ergab 26,6 g (66 % der theoretischen Ausbeute) 12.
$^1$H-NMR (400 MHz, $CDCl_3$): δ = 7,49 (t, J = 7,6 Hz, 1 H), 7,28 (ddd, J = 7,3/7,2/1 Hz, 1 H), 7,21 (ddd, J = 7,3/7,3/1,1 Hz, 1 H), 6,96 (dd, J = 5,6/1,2 Hz, 1 H), 6,69 (dd, J = 5,3/1,8 Hz, 1 H), 3,56 (s, 1 H), 0,0 (s, 9 H).

**Beispiel 12** (Bis-(trimethylsilyl)-inden, Verbindung 13)

25,4 g (0,135 mol) der Verbindung 12 wurden in einen Rundkolben gegeben, der 100 ml THF enthielt und auf 0°C gekühlt war. 59 ml einer 2,3-molaren Lösung von Butyl-lithium in Hexan (0,136 mol) wurden während 20 min zugegeben Nach vollständiger Zugabe wurde 20 min gerührt und dann auf Raumtemperatur erwärmt. Nach 30 min Rühren wurde auf -20°C gekühlt, und es wurden 17,3 ml Trimethylchlorsilan (0,136 mol) zugetropft, wobei eine leicht trübe orangefarbene Lösung entstand. Es wurde 1 h bei 0°C und 1 h bei Raumtemperatur gerührt und dann das

Lösungsmittel im Vakuum entfernt. Nach Wiederauflösung in Hexan wurde LiCl abfiltriert und das Hexan im Vakuum entfernt. Man erhielt 32 g (90 % der theoretischen Ausbeute) von 13 als Öl. Vergl. J. Organometal. Chem. 23 (1970), 407; dort Hexan statt THF. $^1$H-NMR (400 MHz, $CDCl_3$): δ = 7,62 (d, J = 7,6 Hz, 1 H), 7,52 (d, J = 7,5 Hz, 1 H), 7,23 (ddd, J = 7,35/7,3/0,9 Hz, 1 H), 6,9 (d, J = 1,7 Hz, 1 H), 3,67 (d, J = 1,6 Hz, 1 H), 0,38 (s, 9 H), 0,0 (s, 9 H).

**Beispiel 13** (Trimethylsilyl-dichlorboranyl-inden, Verbindung 14)

In ähnlicher Weise wie zur Herstellung von Verbindung 2 wurden 12,3 g (0.047 mol) Verbindung 13 in einen Rundkolben gegeben, der auf -30°C gekühlt war und einen mit Trockeneis gekühlten Rückflußkühler hatte. Hierzu wurden 5,6 g (0,046 mol) $BCl_3$ gegeben. Nach vollständiger Zugabe wurde das Kühlbad entfernt, und das Reaktionsgemisch erwärmte sich auf Raumtemperatur und wurde 3 h gerührt. Die Temperatur wurde dann 6 h lang auf 55°C angehoben. Nach Abkühlung und Entfernung der flüchtigen Anteile im Vakuum wurde das Rohprodukt erhalten. Destillation unter Hochvakuum lieferte das gereinigte Produkt, dessen Hauptisomer wie folgt identifiziert wurde: $^1$H-NMR (200 MHz, $CDCl_3$): δ = 8,3 (d, J = 7 Hz, 1 H), 8,1 (d, J = 1,8 Hz, 1 H), 7,5 (dd, J = 7,0/1,2 Hz, 1 H), 7,4 (m, 3 H), 4,0 (d, J = 1,8 Hz, 1 H), 0,1 (s, 9 H); $^{11}$B (64,2 MHz, $CD_2Cl_2$): δ = 38(br).

**Beispiel 14** ($(C_6H_5)_2P$-$BCl_2$-verbrücktes Bis-(indenyl)-zirkoniumdichlorid, Verbindung 15)

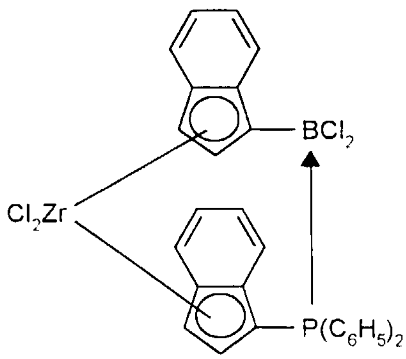

meso-15

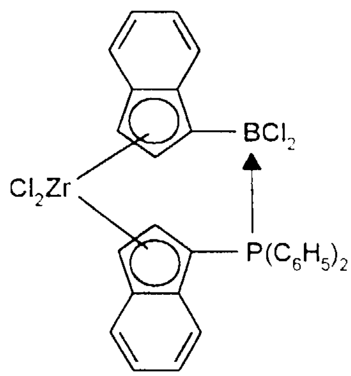

rac-15

Zu einer Aufschlämmung von 8,3 g von Verbindung 9 (0,017 mol) in 200 ml Toluol wurden 4,5 g der Verbindung 14 (0,017 mol) gegeben; das Gemisch wurde auf 50°C erwärmt und 5 h gerührt. Nach Abkühlen und Filtration wurden 200 ml Hexan zugegeben, worauf aus der klaren gelben Lösung ein Niederschlag ausfiel, der filtriert und im Vakuum getrocknet wurde. Das Produkt wurde als meso-Isomer von 15 gemäß seiner Röntgenanalyse identifiziert. Die P B-Bindungslänge der Brücke wurde zu 2,01 bestimmt. Durch Konzentration der Toluol/Hexan-Lösung auf etwa 10 ml und weitere Zugabe von 200 ml Hexan erhielt man einen zweiten Niederschlag, der als das racemische Isomer von 15 bestimmt wurde.

**Beispiel 15** (N,N-Dimethyl-O-(methylsulfönyl)-hydroxylamin, Verbindung 16)

$$(CH_3)_2NOSO_2CH_3 \qquad \underline{16}$$

9,0 g N,N-Dimethyl-O-hydroxylamin-hydrochlorid (0,092 mol) wurden in 70 ml $CH_2Cl_2$ suspendiert, das 20 g Triethylamin (0,2 mol) enthielt, und auf -10°C gekühlt. 9,5 g Methylsulfonylchlorid (0,083 mol), gelöst in 70 ml $CH_2Cl_2$, wurden langsam zur gekühlten Suspension getropft. Nach vollständiger Zugabe wurde 1 h nachgerührt. Danach wurde Eiswasser zum Reaktionsgemisch gegeben und dic organische Phase abgetrennt. Das übriggebliebene Wasser wurde

mit Ether gewaschen. Waschether und die $CH_2Cl_2$-Fraktion wurden vereinigt, über $Na_2SO_4$ getrocknet, und die Lösungsmittel wurden im Vakuum bei -10°C entfernt. Es hinterblieben 5,9 g (46 % der theoretischen Ausbeute) an Verbindung 16 als Ol, das bei -20°C aufbewahrt wurde.Vgl. Angew. Chem., Int. Ed. Engl. 17 (1978), 687.
$^1$H-NMR (400 MHz, $CDCl_3$): $\delta$ = 3,03 (s, 3H), 2,84 (s, 6H).

**Beispiel 16** (N,N-Dimethylamino-cyclopentadienyl-lithium, Verbindung 17)

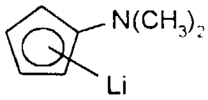

17

Eine Lösung von 3 g Cyclopentadienyl-lithium (0,042 mol) in 30 ml THF wurde bei -30°C langsam zu einer Lösung von 5,9 g der Verbindung 16 (0,042 mol) in 20 ml THF gegeben. Das Gemisch wurde dann auf -20°C erwärmt und 30 min gerührt. Dann wurde Hexan zugegeben und die Lösung filtriert. Danach wurden 1,8 ml einer 2,3-molaren Lösung von Butyl-lithium (0,042 mol) in Hexan bei -20°C zugesetzt, wodurch ein Niederschlag entstand. Der Niederschlag wurde abfiltriert und 2 mal mit je 20 ml Hexan gewaschen. Nach Trocknung im Vakuum erhielt man 2,0 g (40 % der theoretischen Ausbeute) der Verbindung 17 als weißes Pulver.Vgl. Angew. Chem., int. Ed. Engl. 19 (1980), 1010.
$^1$H-NMR (400 MHz, THF): $\delta$ = 5,34 (br d, J = 2,2 Hz, 2H), 5,15 (br d, J = 2,2 Hz, 2H), 2,56 (s, 6H).

**Beispiel 17** ($(CH_3)_2N-B(CH_3)_2$-verbrücktes Bis-(cyclopentadienyl)-titandichlorid, Verbindung 18)

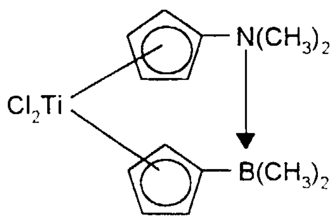

18

Eine Lösung von 0,18 g der Verbindung 4 (0,7 mmol) in 10 ml Toluol wurde bei -20°C während 10 min zu einer Suspension von 0,081g der Verbindung 17 (0,7 mmol) in 10 ml Toluol gegeben, wobei eine tiefrote Lösung entstand. Nach Anwärmen auf Raumtemperatur während 2 h wurde die Lösung filtriert und das Lösungsmittel im Vakuum entfernt. Nach Wiederauflösung des entstandenen roten Pulvers in 10 ml warmen Toluol und Abfiltrieren von unlöslichem Material wurde die Lösung über Nacht im Kühlschrank aufbewahrt, wobei sich 0, g (43 % der theoretischen Ausbeute) als rote Nadeln bildeten.
$^1$H-NMR (400 MHz, $CD_2Cl_2$): $\delta$ = 6,85 (t, J = 2,3 Hz, 2H), 6,15 (t, J = 2,3 Hz, 2H), 6,1 (t, J = 2,8 Hz, 2H), 5,57 (t, J = 2,8 Hz, 2H), 1,98 (s, 6H), 0,35 (s, 6H); $^{11}$B-NMR (64,2 MHz, $CD_2Cl_2$): $\delta$ = 2,8 (br).

**Beispiel 18** (Tributylstannyl-diisopropylphosphine-inden, Verbindung 19)

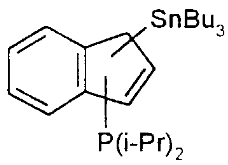

19

In einen Rundkolben, der 3,8 g (0,033 mol) Inden enthielt, wurden 100 ml Ether gegeben; es wurde auf -20°C gekühlt. Zu dieser Lösung wurden 14,4 ml einer 2,3 molaren Lösung von Butyl-lithium in Hexan (0,033 mol) innerhalb 5 Minuten gegeben, wobei eine gelbe Lösung entstand. Nach Entfernung des Kältebades wurde die Lösung auf Raumtemperatur erwärmt und 1,5 h nachgerührt. Danach wurde das Reaktionsgemisch auf 0°C abgekühlt und 5,0 g Chlordiisopropylphosphin (0,033 mol) zugegeben, wodurch ein Niederschlag entstand. Nach Entfernung des Kältebades wurde die Lösung auf Raumtemperatur erwärmt und 1 h gerührt. Danach wurde die Lösung auf -20°C gekühlt und 14,4 ml einer 2,3 molaren Lösung von Butyl-lithium in Hexan (0,033 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C wurden 10,1 g Chlortributylzinn (0,031 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. getrocknet, wobei 16.6 g der Verbindung 19 (Ausbeute. 97 %) als schweres gelbes Ol übrigblieben. Zwei Isomere wurden in einem Verhältnis von 1,5:1 erhalten. Das Hauptisomer wurde wie folgt identifiziert: $^{1}H$ NMR (400 MHz, $CD_2Cl_2$) δ 7,71 (d, J = 7,2 Hz, g H), 7,41 (d, J= 7,3 Hz, 1 H), 7,13 (m, 2 H), 6,96 (m, 1 H), 4,28 (s mit Sn Satelliten, 1 H), 2,21 (m, 1 H), 1,54 (m, 1 H), 1,45 - 0.65 (m, 39 H). $^{31}P$ NMR (161,9 MHz, $CD_2Cl_2$) δ - 11,3 ppm Das Nebenisomer wurde wie folgt identifiziert: $^{1}H$ NMR (400 MHz, $CD_2Cl_2$) δ 7,6 (d, J = 7,4 Hz, 1 H), 7,46 (d, J = 7,2 Hz, 1 H), 7, 26 (t, J = 7,5 Hz, 1 H), 7,1 (m, 1 H), 6,71 (m, 1 H), 3,48 (m, 1 H), 2,21 (m, 1 H), 1,54 (m, 1 H), 1,45 - 0,65 im, 39 H). $^{31}P$ NMR (161,9 MHz, $CD_2Cl_2$) d -11,5 ppm

**Beispiel 19** (Diisopropylphosphino-indenyl-zirkoniumtrichlorid, Verbindung 20)

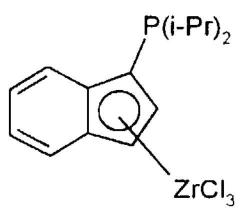

20

Eine Lösung von 15,0 g der Verbindung 19 (0,029 mol) in 50 ml Toluol wurde zu einer Aufschlämmung von 6,7 g (0,029 mol) 99,9 %igem $ZrCl_4$ in 300 ml Toluol bei -78°C gegeben. Nach vollständiger Zugabe wurde das Reaktionsgemisch 0,5 h bei -30°C und anschließend 4 h bei 0°C gerührt. Der entstehende gelbe Niederschlag wurde abfiltriert und mit Toluol und Hexan gewaschen. Die Feststoffe wurden i Vak. getrocknet, wobei 8,8 g der Verbindung 20 (Ausbeute: 71 %) als freifließendes gelbes Pulver übrigblieben. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt. Wegen der Unlöslichkeit der entstehenden Verbindung wurde kein $^{1}H$ NMR erhalten.

**Beispiel 20** (Diisopropylphosphino-dichlorboranyl-verbrücktes Indenyl-cyclopentadienyl-zirkonium-dichlorid, Verbindung 21)

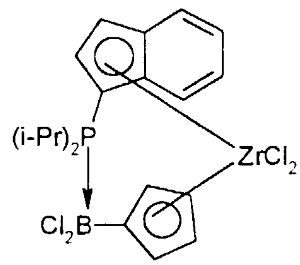

21

In ein Schlenk-Rohr wurden 0,52 g (0,0012 mol) der Verbindung 20 und 30 ml Toluol gegeben. 0,27 g (0,0012) mol der Verbindung 2 wurden innerhalb 5 Minuten zu dieser Aufschlämmung gegeben. Die gelbe Aufschlämmung wurde 3 h bei Raumtemperatur gerührt, wobei eine leicht trübe Lösung übrigblieb. Der Niederschlag wurde durch Filtration entfernt, wobei eine hellgelbe Toluollösung übrigblieb. Nach Entfernung des Toluols i. Vak. blieb das Produkt als weißlicher Feststoff in einer Menge von 0,47 g (Ausbeute: 87 %) übrig. $^1H$ NMR (400 MHz, $CD_2Cl_2$) $\delta$ 7,84 (pseudo dd, J = 8,5, 0,8 Hz, 1 H), 7,73 (d, J = 8,8 Hz, 1 H), 7,5 (pseudo dt, J 7,8, 0,8 Hz, 1 H), 7,38 (m, 2 H), 6,98 (m, 1 H), 6,67 (m, 1 H), 6,64 (m, 1 H), 6,54 (m, 1 H), 6,29 (m, 1 H), 3,39 (Septett, J = 7,1 Hz, 1 H), 2,94 (m, 1 H), 1,68 (dd, $J_{H-P}$ = 18,1 Hz, J = 7,2 Hz, 3 H), 1,64 (dd, $J_{H-P}$ = 17,4, J = 7,2 Hz, 3 H), 1,45 (dd, $J_{H-P}$ = 15 Hz, J = 7,2 Hz, 3 H), 1,33 (dd, $J_{H-P}$ = 14,6 Hz, J = 7,3 Hz, 3 H) $^{31}$ P NMR (161,9 MHz, $CD_2Cl_2$) $\delta$ 23,1 (br, m); $^{11}B$ (80 MHz, $CD_2Cl_2$) $\delta$ - 14,8 (br d, J = 110 Hz).

**Beispiel 21** (Tributylstannyl-dimethylphosphino-inden, Verbindung 22)

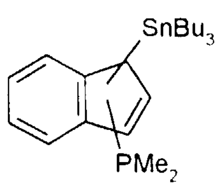

22

In einen Rundkolben, der 5,5 g (0,047 mol) Inden enthielt, wurden 150 ml Ether gegeben; es wurde auf -20°C abgekühlt. Zu dieser Lösung wurden 20,8 ml einer 2,3 molaren Lösung von Butyl-lithium in Hexan (0,048 mol) innerhalb 5 min gegeben, wobei eine gelbe Lösung entstand. Nach Entfernung des Kältebades wurde die Lösung auf Raumtemperatur erwärmt und 1 h nachgerührt. Nach Abkühlung des Reaktionsgemisches auf- -30°C wurden 4,6 g Chlordimethylphosphin (0,048 mol) in 30 ml Ether innerhalb 20 min zugegeben, wobei ein Niederschlag entstand. Nach 2-stündigem Rühren bei - 20°C wurden 20,8 ml einer 2,3 molaren Lösung von Butyl-lithium in Hexan (0,048 mol) zugetropft. Nach vollständiger Zugabe wurde das Kältebad entfernt, die Lösung langsam auf Raumtemperatur erwärmt und 1,5 h nachgerührt Nach Abkühlung der Aufschlämmung auf 0°C wurden 15,6 g Chlortributylzinn (0,048 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. getrocknet, wobei 17,4 g der Verbindung 22 (Ausbeute: 78 %) als schweres gelbes Öl übrigblieben. $^1H$ NMR (400 MHz, $CD_2Cl_2$) $\delta$ 7,67 (d, J = 7,5 Hz, 1 H), 7,47 (d, J = 7,4 Hz, 1 H), 7,18 (m, 2 H), 6,83 (m, 1 H), 4,28 (s mit Sn-Satelliten, 1 H), 1,43 - 0,78 (m, 33 H). $^{31}P$ NMR (161,9 MHz, $CD_2Cl_2$) $\delta$ - 61,6 ppm.

**Beispiel 22** (Dimethylphosphino-indenyl-zirconiumtrichlorid, Verbindung 23)

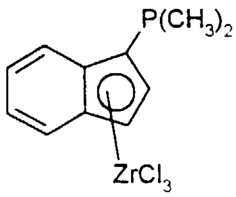

23

Zu einer Aufschlämmung von 8,5 g (0,036 mol) 99,9 %igem $ZrCl_4$ in 200 ml Toluol wurde eine Lösung von 17,0 g der Verbindung 22 (0,037 mol) in 50 ml Toluol bei -78°C gegeben. Nach vollständiger Zugabe wurde das Reaktionsgemisch 0.5 h bei - 30°C und danach 4 h bei 0°C gerührt. Der entstehende gelbe Niederschlag wurde abfiltriert und mit Toluol und Hexan gewaschen. Die Feststoffe wurden in Vak. getrocknet, wobei 8,3 g der Verbindung 23 (Ausbeute: 61 %) als freifließendes gelbes Pulver übrigblieb. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt, wobei 7,2 g (Ausbeute: 53 %) des Produktes übrigblieben. Wegen der Unlöslichkeit dieser Verbindung wurde kein $^1H$ NMR erhalten

**Beispiel 23** (Dimethylphosphino-dichlorboranyl-verbrücktes Indenyl-cyclopentadienyl-zirconiumdichlorid, Verbindung 24)

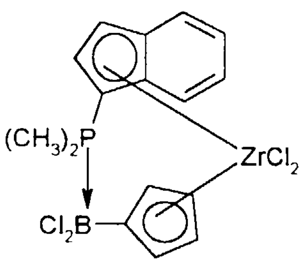

24

In ein Schlenk-Rohr wurden 30 ml Toluol und 0,55 g der Verbindung 23 (0,0015 mol) gegeben. Zu dieser Aufschlämmung wurden 0,31 g (0,0014 mol) der Verbindung 2 innerhalb 5 min gegeben. Die gelbe Aufschlämmung wurde 6,5 h bei Raumtemperatur gerührt, wobei eine leicht trübe Lösung verblieb. Der Niederschlag wurde durch Filtration entfernt, wobei eine hellgelbe Toluollösung übrigblieb. Nach Entfernung des Toluols i. Vak. verblieb das Produkt als weißlicher Feststoff. Nachdem das Produkt mit Hexan gewaschen und i. Vak. getrocknet wurde, blieb die Verbindung 24 als blaßweißer Feststoff (0,54 g; Ausbeute: 76%) übrig. $^1H$ NMR (400 MHz, $CD_2Cl_2$) $\delta$ 7,84 (pseudo dd, J = 7,4 Hz 1,0 Hz, 1 H), 7,60 (m, 2 H), 7,51 (m, 1 H), 7,38 (m, 1 H), 6,93 (m, 1 H), 6,71 (m, 1 H), 6,66 (m, 1 H), 6,49 (m, 1 H), 6,30 (br s, 1 H), 2,11 (d $J_{H-P}$ = 11,9 Hz, 3 H), 1,94 (d, $J_{H-P}$ = 11,9 Hz, 3 H). $^{31}P$ NMR (161, 9 MHz, $CD_2Cl_2$)- 5,9 (br, m), $^{11}B$ (80 MHz, $CD_2Cl_2$) $\delta$ - 14,6 (br d, $J_{B-P}$ = 126 Hz).

**Beispiel 24** (2-Methylinden, Verbindung 26)

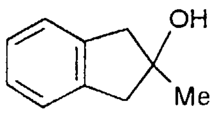

25

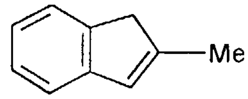

26

In einen Rundkolben wurden 38,7 g (0,29 mol) 2-Indanon und 300 ml Ether gegeben. In einen zweiten Kolben wurden 96,7 ml einer 3,0 molaren Lösung von $CH_3MgI$ in Ether (0,29 mol), die mit 150 ml Ether verdünnt war, gegeben. Danach wurde die 2-Indanon-Lösung zu der $CH_3MgI$-Lösung über eine Kanüle in einer solchen Menge gegeben, daß der Rückfluß aufrechterhalten wurde, wobei ein Niederschlag entstand. Nach vollständiger Zugabe wurde die Aufschlämmung weitere 4 h unter Rückfluß geführt und auf 0°C abgekühlt, wonach 100 ml einer gesättigten Lösung von $NH_4Cl$ langsam zugegeben wurden. Das Produkt wurde mit Ether extrahiert und über $MgSO_4$ getrocknet Nach Entfernung des Lösungsmittels i. Vak wurden 30,1 g (Ausbeute: 70 %) 2-Methyl-2-indanol (Verbindung 25) als öliger Feststoff erhalten $^1H$ NMR (400 MHz, $CDCl_3$) δ 7,15 (br m, 4 H), 3,01 (s, 2 H), 2,99 (s, 2 H), 1,5 (s, 3 H); OH variabel.

In einen Rundkolben mit einem Dean-Stark-Auffanggefäß wurden 25,5 g (0,17 mol) der Verbindung 25, 3,2 g (0,017 mol) *p*-Toluolsulfonsäure und 500 ml Hexan gegeben. Diese Aufschlämmung wurde 3 h unter Rückfluß gehalten. Nach Abkühlung wurde die Hexanfraktion von den unlöslichen Produkten dekantiert und das Lösungsmittel i. Vak. entfernt, wobei ein Öl übrigblieb, das anschließend in einer kurzen Destillationskolonne bei 45°C und 0,03 mbar destilliert wurde, wodurch 15 g (Ausbeute: 68 %) der Verbindung 26 erhalten wurden. $^1H$ NMR (400 MHz, $CDCl_3$) δ 7,33 (d, J = 7,6 Hz, 1 H), 7,21 (m, 2 H), 7,06 (pseudo d t, J = 7,2, 1,4 Hz, 1 H), 6,45 (br s, 1 H), 3,25 (s, 2 H), 2,12 (s, 3 H).

Es wird verwiesen auf:

1. Morrison, H.; Giacherio, D. *J. Org. Chem,* **1982**, *47*, 1058.
2. Ready, T. E.; Chien, J. C. W.; Rausch, M. D. *J. Organom. Chem. 519*, **1996**, 21.
3. Wilt, Pawlikowki, Wieczorek *J. Org. Chem. 37*, **1972**, 824.

**Beispiel 25** (Tributylstannyl-diisopropylphosphino-2-methylinden, Verbindung 27)

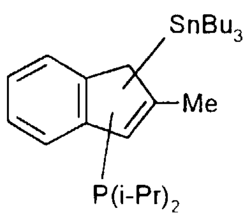

27

In einen Rundkolben, der 5,08 g (0,039 mol) 2-Methylinden 26 enthielt. wurden 150 ml Ether gegeben; es wurde auf -20°C abgekühlt. Zu dieser Lösung wurden 17,0 ml einer 2,3-molaren Lösung von Butyl-lithium in Hexan (0,039 mol) innerhalb 5 min gegeben, wobei eine gelbe Lösung entstand. Nach Entfernung des Kältebades wurde die Lösung auf Raumtemperatur erwärmt und 1 h nachgerührt. Danach wurde das Reaktionsgemisch auf - 20°C gekühlt, und es wurden 5,8 g (0,039 mol) Chlordiisopropylphosphin innerhalb 5 min zugegeben, wobei ein Niederschlag entstand. Danach wurde das Kältebad entfernt und das Reaktionsgemisch 1 h bei Raumtemperatur gerührt. Nach Abkühlung auf - 20°C wurden 17,0 ml einer 2,3 molaren Lösung von Butyl-lithium in Hexan (0,039 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C, wurden 12,4 g (0,038 mol) Chorotributylzinn zugetropft. Die entstehende Aufschlämmung wurde auf Raumtemperatur erwärmt und 1,5 h gerührt. Der Ether wurde i. Vak. entfernt

und das Rohprodukt erneut in Hexan aufgelöst, abfiltriert und das Filtrat i. Vak. getrocknet, wobei 20.4 g (Ausbeute: 98 %) der Verbindung 27 als schweres gelbes Öl übrigblieben. Zwei Isomere wurden durch $^{31}P$ NMR identifiziert $^{31}P$ NMR (161,9 MHz. $CD_2Cl_2$) δ -5,9 und -6,6 in einem Verhältnis von 2:1.

**Beispiel 26** (Diisopropylphosphino-2-methylindenyl-zirkonium-trichlorid, Verbindung 28)

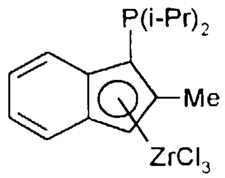

28

Eine Lösung von 17.7 g (0,033 mol) der Verbindung 27 in 100 ml Methylenchlorid wurde zu einer Aufschlämmung von 7,7 g (0,033 mol) 99,9 %igem $ZrCl_4$ in 200 ml Methylenchlorid innerhalb 10 min bei - 25°C gegeben. Nach vollständiger Zugabe wurde das Reaktionsgemisch langsam auf 10°C über einen Zeitraum von 3 h erwärmt, wonach eine klare, orangefarbene Lösung entstand. Nach 1 h bei Raumtemperatur wurde das Lösungsmittel i. Vak. entfernt und das enstehende Öl mit 2 x 50 ml Hexan gewaschen, wodurch ein öliges Rohprodukt (28) erhalten wurde, das direkt zur Herstellung der Verbindung 29 verwendet wurde. Wegen der Unlöslichkeit dieser Verbindung wurde kein $^{1}H$ NMR erhalten.

**Beispiel 27** (Diisopropylphosphino-dichlorboranyl-verbrücktes 2-Methylindenylcyclopentadienyl-zirkonium-dichlorid, Verbindung 29)

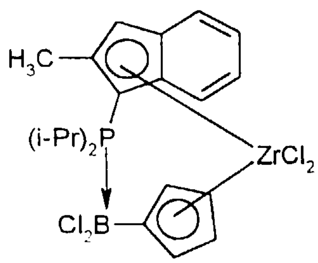

29

In einen Rundkolben, der 0,025 mol der unreinen Verbindung 28 in 200 ml Toluol bei 0°C enthielt, wurden 5,5 g (0,025 mol) der Verbindung 2 über einen Zeitraum von 5 min gegeben. Nach 1 h bei 0°C wurde das Rühren beendet und die lösliche Toluolfraktion vom entstandenem Öl dekantiert. Nach Entfernung des Toluols i Vak wurden 100 ml Hexan zu dem öligen Feststoff gegeben, wobei 7,4 g (Ausbeute: 54%) eines gelben Pulvers mit einer Reinheit von ca. 90 % entstanden. Das Produkt wurde in einem Soxhlet-Extraktionsgerät mit unter Rückfluß geführtem Pentan weitergereinigt. Das Endprodukt bestand aus einem hellgelben Pulver. $^{1}H$ NMR (400 MHz, $CD_2Cl_2$) δ 8,67 (br d, J = 7,6 Hz, 1 H), 7,71 (m, g H), 7,35 (m, 2 H), 6,62 (br s, 1 H), 6,54 (br s, 1 H), 6, 47 (m, 1 H), 6,33 (m, 1 H), 6,06 (br s, 1 H), 3,3 (br m, 1 H), 3,2 (br m, 1 H), 2,6 (s, 3 H), 1,78 (dd, J = 7,1 Hz, $J_{H-P}$ = 15,3 Hz, 3 H), 1,70 (dd, J = 7,2 Hz, $J_{H-P}$ = 15,7 Hz, 3 H). 1,57 (dd, J = 7,1 Hz, $J_{H-P}$ = 15,3 Hz, 3H), 1,12 (dd, J = 7,1 Hz, $J_{H-P}$ = 14,0 Hz, 3H) $^{31}P$ NMR (161,9 MHz, $CD_2Cl_2$) 28,4 (br m); $^{11}B$ (80 MHz, $CD_2Cl_2$) δ - 14,3 (br d, $J_{P-B}$ = 106 Hz).

**Beispiel 28** (Bistrimethylsilyl-(diphenylphosphmo)-cyclopentadien, Verbindung 30)

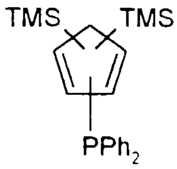

TMS = $-Si(CH_3)_3$

30

76,6 ml einer 2,5-molaren Lösung von Butyl-lithium in Hexan (0,19 mol) wurden zu einer Lösung der Verbindung 1 (40,2 g; 0,19 mol) in 500 ml Ether innerhalb 10 min bei 0°C gegeben. Nach vollständiger Zugabe wurde das Bad entfernt und die Lösung 1 h bei Raumtemperatur gerührt. Nach Abkühlung auf 0°C, wurden 42,2 g (0,19) mol) Chlordiphenylphosphin innerhalb 10 min zugegeben, wonach das Bad entfernt und die Aufschlämmung auf Raumtemperatur erwärmt wurde. Nach 1-stündigem Rühren bei Raumtemperatur wurde der Ether i. Vak. entfernt und das Produkt in Hexan erneut aufgelöst. Nach Abfiltrieren der Salze wurde das Hexan i. Vak. entfernt, wobei 69,1 g (Ausbeute: 91 %) der Verbindung 30 als Ol übrigblieben. 14 NMR (400 MHz, $CDCl_3$) $\delta$ 7,45 (m, 4H), 7,35 (m, 6 H), 6,8 (m, 1 H), 6,65 (m, 1 H), 6,6 (m, 1H), O (s, 18 H) $^{31}P$ NMR (161,9 MHz, $CDCl_3$) : $\delta$ - 19,5 ppm.

**Beispiel 29** (Trimethylsilyl-diphenylphosphino-cyclopentadienyl-zirkonium-trichlorid, Verbindung 31)

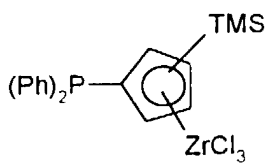

31

Eine Lösung der Verbindung 30 (69,1 g, 0,175 mol) in 200 ml Methylenchlorid wurde über eine Kanüle zu einer Suspension von 41,5 g (0,178 mol) 99,9 %igem $ZrCl_4$ in 200 ml Methylenchlorid gegeben und 8 h bei Raumtemperatur gerührt. Während dieser Zeit trübte sich die Lösung. Die Feststoffe wurden abfiltriert, mit x 20 ml Toluol und anschließend 2 x 20 ml Hexan gewaschen und i Vak. getrocknet. Das Produkt bestand aus 35 g (Ausbeute: 39 %) eines hellgelben Pulvers. Wegen der Unlöslichkeit des Produktes wurde kein $^1H$ NMR erhalten.

**Beispiel 30** (Diphenylphosphino-dichlorboranyl-verbrücktes Trimethylsilylcyclopentadienyl-cyclopentadienyl-zirkonium-dichlorid, Verbindung 32)

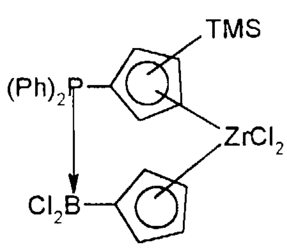

32

Eine Lösung der Verbindung 2 (2,6 g, 0,012 mol) wurde bei 0°C zu einer Aufschlämmung der Verbindung 31 (5,6 g, 0,011 mol) in 100 ml Toluol gegeben. Nach 5-stündigem Rühren bei 0°C wurde der gelbbraune Feststoff durch Filtration entfernt, wobei eine weißliche Lösung übrigblieb. Nach Entfernung des Toluols i Vak. und Waschen des übriggebliebenen Feststoffes mit Pentan, verblieb die Verbindung 32 als hochluftempfindliches weißliches Pulver (5,5 g; Ausbeute: 81 %). $^{1}H$ NMR (400 MHz, $CD_2Cl_2$) δ : 7,8 - 7,5 (m, 10 H), 7,06 (m, 1 H), 6,92 (m, 1 H), 6,83 (m, 1 H), 6,75 (m, 2 H), 6,68 (m, 1 H), 6,63 (m, 1 H), 0,26 (s, 9 H). $^{31}P$ NMR (161,9 MHz, $CD_2Cl_2$) δ O (br, m); $^{11}B$ (80 MHz, $CD_2Cl_2$) δ - 16,3 (br d, $J_{B\text{-}P}$ = 82 Hz).

**Beispiel 31** (Diisopropylphosphino-cyclopentadienyl-lithium, Verbindung 33)

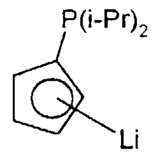

33

In einen Rundkolben, der 1,68 g (0,023 mol) Cyclopentadienyl-lithium enthielt, wurden 50 ml Ether gegeben. Nach Abkühlung des Reaktionskolbens auf - 20°C wurden 3,6 g (0,023 mol) Chlordiisopropylphosphin zugetropft. Nach vollstandiger Zugabe wurde das Kältebad auf 0°C erwärmt und das Reaktionsgemisch 1 h gerührt. Danach wurde Ether i. Vak. entfernt und das Produkt in Toluol gelöst und abfiltriert. Nach Durchspülen der Fritte mit 2 x 10 ml Toluol wurde das Reaktionsgemisch auf - 20°C abgekühlt und 9,3 ml einer 2,5 molaren Lösung von Butyllithium in Hexan (0,023 mol) zugegeben, wobei eine orangefarbene Lösung entstand. Eine kleine Fraktion wurde für NMR-Untersuchungen entnommen und nach Abtrennung des Toluols i. Vak. und Waschen des entstehenden Öls mit Hexan ein hellgelber Feststoff (33) erhalten. $^{1}H$ NMR (400 MHz, THF) δ : 5,89 (m, 2 H), 5,83 (br s, 2 H), 1,86 (m, 2 H), 1,0 - 0,8 (m, 12 H). Die Hauptmenge wurde direkt zur Herstellung der Verbindung 34 verwendet.

**Beispiel 32** (Diisopropylphosphino-dimethylboranyl-verbrücktes Bis-cyclopentadienyl-titandichlorid, Verbindung 34)

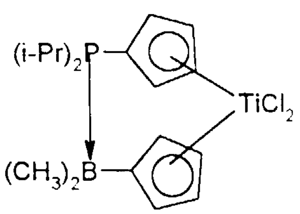

34

Eine Lösung von 6,1 g 0,023 mol) der Verbindung 4 in 50 ml Toluol wurde zu einer Toluollösung der Verbindung 33 (0,023 mol) aus der obengenannten Reaktion bei -78°C gegeben. Nach 30-minütigem Rühren bei - 78°C wurde das Kältebad entfernt und die Lösung 2 h bei Raumtemperatur nachgerührt. Danach wurden die Feststoffe durch Filtration und das Toluol i. Vak. entfernt. Anschließend wurde Hexan zu dem roten öligen Produkt gegeben, wobei ein rotes Pulver entstand, das abfiltriert, mit 2 x 20 ml Hexan gewaschen und i. Vak. getrocknet wurde, wodurch die Verbindung 34 als rotes Pulver (5,95 g, Ausbeute, bezogen auf CpLi: 61%) entstand $^{1}H$ NMR (400 MHz, $CD_2Cl_2$) δ : 6,96 (m, 2 H), 6.94 (pseudo t, J = 2,4 Hz, 2 H), 6.59 (m, 2 H), 6,42 (m, 2 H), 2,58 (m, 2 H), 1,44 (dd, J = 7,3 Hz, $J_{H\text{-}P}$ = 14,7 Hz, 6 H), 1,27 (dd, J = 7,2 Hz, $J_{H\text{-}P}$ = 13,1 Hz, 6 H), 0,31 (d, $J_{H\text{-}P}$ = 16,4 Hz, 6 H) $^{31}P$-NMR (161,9 MHz, $CD_2Cl_2$) δ 28,7 (br m); $^{11}B$-NMR (80 MHz, $CD_2Cl_2$) δ -29.7 (br m)

**Beispiel 33** (Dimethylphosphino-tributylstannyl-2-methylinden, Verbindung 35)

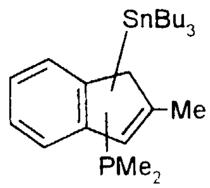

35

In einen Rundkolben, der 6,76 g (0,052 mol) 2-Methylinden (Verbindung 26) enthielt, wurden 100 ml Ether gegeben; es wurde und auf - 20°C gekühlt Zu dieser Lösung wurden 21ml einer 2,5 molaren Lösung von Butyl-lithium in Hexan (0,052 mol) innerhalb 5 min gegeben, wobei eine gelbe Lösung entstand. Nach Entfernung des Kältebades wurde die Lösung auf Raumtemperatur erwärmt und 1 Stunde nachgerührt. Nach Abkühlung des Reaktionsgemisches auf - 20°C wurden 5,0 g (0,052 mol) Chlordimethylphosphin innerhalb 5 min zugegeben, wobei ein Niederschlag entstand. Anschließend wurde das Kältebad entfernt und das Reaktionsgemisch 1 h bei Raumtemperatur gerührt. Nach Abkühlung auf - 20°C wurden 21,0 ml einer 2,5 molaren Lösung von Butyl-lithium in Hexan (0,052 mol) zugetropft Nach vollständiger Zugabe wurde das Kältebad entfernt, woraufhin die Lösung langsam auf Raumtemperatur erwärmt und 1,5 h gerührt wurde. Nach Abkühlung der Aufschlämmung auf 0°C wurden 16,9 g (0,052 mol) Chlortributylzinn zugetropft. Die entstehende Aufschlämmung wurde auf Raumtemperatur erwärmt und 1,5 h gerührt. Nach Entfernung des Ethers i. Vak. wurde das Rohprodukt erneut in Hexan aufgelöst, abfiltriert und das Filtrat i. Vak. getrocknet, wobei 24,3 g (Ausbeute: 98 %) der Verbindung 35 als schweres gelbes Öl übrigblieben. $^{31}P$ NMR (161,9 MHz, $CD_2Cl_2$) $\delta$ -68,5 (s).

**Beispiel 34** (Dimethylphosphino-2-methylindenyl-zirkoniumtrichlorid, Verbindung 36)

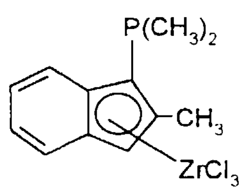

36

Eine Lösung von 17,4 g (0,036 mol) der Verbindung 35 in 100 ml Toluol wurde zu ciner Aufschlämmung von 8,5 g (0,036 mol) 99,9 %igem $ZrCl_4$ in 100 ml Toluol innerhalb 10 min bei 0°C gegeben. Nach vollständiger Zugabe wurde das Reaktionsgemisch langsam auf 10°C über einen Zeitraum von 1 h erwärmt und danach 6 h bei Raumtemperatur gerührt. Anschließend wurde der gelbe Niederschlag abfiltriert, mit 2 x 20 ml Toluol und 2 x 20 ml Hexan gewaschen und i. Vak. getrocknet. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt, wobei 5,8 g (Ausbeute: 41 %) der Verbindung 36 als leuchtend gelbes Pulver übrigblieben. Wegen der Unlöslichkeit dieser Verbindung wurde kein $^1H$ NMR erhalten.

**Beispiel 35** (Dimethylphosphino-dichlorboranyl-verbrücktes 2-Methylindenylcyclopentadienyl-zirkonium-dichlorid, Verbindung 37)

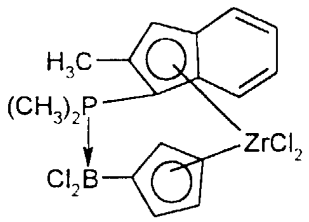

37

In einen Rundkolben, der 4,8 g (0,012 mol) der Verbindung 36 in 125 ml Toluol bei Raumtemperatur enthielt, wurden 2,7 g (0,012 mol) der Verbindung 2 innerhalb 5 min gegeben. Nach 7-stündigem Rühren wurde der dunkelgelbe Feststoff filtriert, mit 2 x 20 ml Hexan gewaschen und i. Vak. getrocknet, wobei 5,5 g (Ausbeute: 89%) der Verbindung 37 als hellgelber Feststoff erhalten wurden. $^{1}H$ NMR (400 MHz, $CD_2Cl_2$) $\delta$ 8,39 (d, J = 8,5 Hz, 1 H), 7,71 (m, 1 H), 7,4 (m, 2 H), 6,64 (m, 2 H), 6,46 (pseudo q, J = 5,3, 2,9 Hz, 1 H), 6,37 (m, 1 H), 6,08 (m, 1 H), 2,51 (s, 3 H), 2,1 (d, $J_{H-P}$ = 12 Hz, 3 H), 2,0 (d, $J_{H-P}$ = 12 Hz, 3 H); $^{31}P$ NMR (161,9 MHz, $CD_2Cl_2$) 5,3 (br m), $^{11}B$ (80 MHz, $CD_2Cl_2$) $\delta$ -16,5 (br d, $J_{B-P}$ = 116 Hz).

**Beispiel 36** (Dicyclohexylboranylcyciopentadienyl-lithium, Verbindung 39)

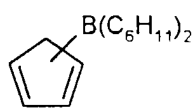

38

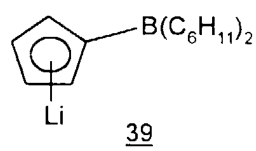

39

Verwiesen wird auf: Herberich, G. E.; Fischer, A. *Organometallics* **1996**, *15,* 58. 40 ml einer 1-molaren Lösung von Chlordicydohexylboran in Hexan (0,04 mol) wurden zu 20 ml Cyclopentadienyl-Natrium (2 M in THF; 0,04 mol) in 100 ml Hexan bei - 78°C gegeben. Nach Entfernung des Kältebades wurde das Reaktionsgemisch auf Raumtemperatur erwärmt und 1 h gerührt. Nach Filtration und Entfernung des Lösungsmittels i. Vak. blieben 9,1 g (Ausbeute: 94%) der Verbindung 38 als gelbes Ol übrig, das direkt bei der Synthese der Verbindung 39 verwendet wurde.

In einen Rundkolben, der 40 ml THF enthielt, wurden 5,3 g (0,038 mol) 2,2,6,6-Tetramethylpiperidin gegeben. Nach Abkühlung auf - 20°C und Zugabe von 15 ml einer 2,5 molaren Lösung von Butyl-lithium in Hexan (0,038 mol) wurde die Mischung 1 h bei - 20°C gerührt und danach auf- 78°C abgekühlt. Zu dieser Lösung wurden 9,1 g (0,038 mol) der Verbindung 38 in 20 ml Hexan innerhalb 10 Minuten gegeben. Das Kältebad wurde entfernt und die Lösung 1 h bei Raumtemperatur gerührt. Nach Entfernung des Lösungsmittels i. Vak. und Zugabe von Hexan wurde 2 h nachgerührt, wobei eine weiße Suspension entstand, die filtriert und i Vak. getrocknet wurde. Es enstand 4,6 g (Ausbeute: 50%) der Verbindung 39 als weißes Pulver. $^{11}B$-NMR (80 MHz, THF) $\delta$ 43,9.

**Beispiel 37** (Diphenylphosphino-dicyclohexylboranyl-verbrücktes Trimethylsilylcyclopentadienyl-cyclopentadienyl-zirkonium-dichlorid, Verbindung 40)

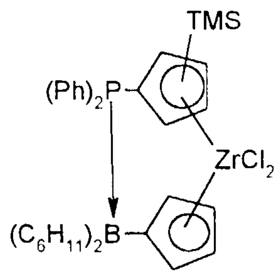

40

Nach Abkühlung eines Schlenk-Kolbens, der 1,4 g (0,0056 mol) der Verbindung 39 und 2,9 g (0,0056 mol) der Verbindung 31 enthielt, auf- 20°C wurden 100 ml Toluol zugegeben. Nach Entfernung des Bades wurde die Aufschlämmung 6 h bei Raumtemperatur gerührt und anschließend filtriert Das Lösungsmittel wurde i Vak. entfernt, wobei ein öliger Feststoff übrigblieb, der mit Hexan gewaschen und filtriert wurde. Nach Trocknung des Feststoffes i. Vak. verblieben 1,9 g (Ausbeute. 48%) der Verbindung 40 als rosafarbener Feststoff. $^1H$ NMR (400 MHz, $CD_2Cl_2$) δ 7,6 - 7,2 (br m, 10 H), 7,04 (br s, 1 H), 6,95 (m, 1 H), 6,82 (m, 1 H), 6,76 (br s, 1 H), 6,66 (m, 1 H), 6,63 (m, 1 H), 6,52 (m, 1 H), 1,6 - 1,1 (br m, 22 H), 0,26 (s, 9 H); $^{31}P$ NMR (161,9 MHz, $CD_2Cl_2$) δ 16,3; $^{11}B$-NMR (80 MHz, $CD_2Cl_2$) δ -13,8.

**Beispiel 38** (4,7-Dimethylinden, Verbindung 41)

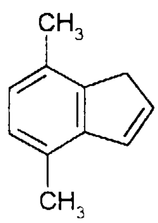

41

Verwiesen wird auf: Erker, G. et al. *Tetrahedron* **1995**, *51*, 4347.

Eine 30 %ige Lösung von 153 g (2,8 mol) Natriummethoxid in Methanol wurde mit 60 ml Methanol verdünnt und auf 0°C abgekühlt. Zu dieser Lösung wurden 34 g (0,52 mol) Cyclopentadien gegeben. Nach 15 min wurden 39 g (0,34 mol) 2,5-Hexandion zugetropft, wonach das Kältebad entfernt und das Reaktionsgemisch 2 h bei Raumtemperatur gerührt wurde. Anschließend wurden 200 ml Wasser und 200 ml Ether zugegeben. Die Etherschicht wurde entfernt, mit Wasser und Kochsalzlösung gewaschen und anschließend über $Na_2SO_4$ getrocknet. Nach Entfernung des Lösungsmittels i. Vak. und Destillation bei 65°C und 0,1 mbar verblieb die Verbindung 41 als orangefarbenes Öl (40 g; Ausbeute: 81 %). $^1H$ NMR (400 MHz, $CDCl_3$) δ 7,35 - 7,27 (m, 2 H), 7,23 (d, J = 7,6 Hz, 1 H), 6,82 (m, 1 H), 3,51 (s, 2 H), 2,75 (s, 3H), 2,63 (s, 3 H).

**Beispiel 39** (Diisopropylphosphino-tributylstannyl-4,7-dimethylinden, Verbindung 42)

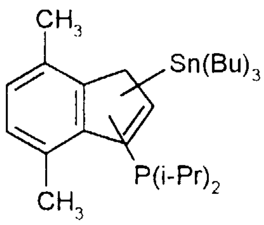

42

In einen Rundkolben, der 5,0 g (0,035 mol) 4,7-Dimethylinden (Verbindung 41) enthielt, wurden 100 ml Ether gegeben; es wurde auf - 20°C abgekühlt. Zu dieser Lösung wurden 14 ml einer 2,5 molaren Lösung von Butyl-lithium in Hexan (0,035 mol) innerhalb 5 min gegeben, wobei eine gelbe Lösung entstand. Nach Entfernung des Kältebades wurde die Lösung auf Raumtemperatur erwärmt und g h nachgeruhrt. Nach Abkühlung des Reaktionsgemisches auf - 20°C wurden 5,3 g (0,035 mol) Chlordiisopropylphosphin innerhalb 5 min zugegeben, wobei ein Niederschlag entstand. Danach wurde das Kältebad entfernt und das Reaktionsgemisch 1 h bei Raumtemperatur gerührt. Nach Abkühlung auf - 20°C wurden 14,0 ml einer 2,5 molaren Lösung von Butyl-lithium in Hexan (0,035 mol) zugetropft Nach vollständiger Zugabe wurde das Kältebad entfernt, die Lösung langsam auf Raumtemperatur erwärmt und 1,5 h gerührt. Nach Abkühlung der Aufschlämmung auf 0°C wurden 11.4 g Chortributylzinn (0,035 mol) zugetropft. Die entstehende Aufschlammung wurde auf Raumtemperatur erwärmt und 1,5 h gerührt. Der Ether wurde i Vak entfernt und das Rohprodukt erneut in Hexan aufgelöst, filtriert und das Filtrat i. Vak. eingeengt wobei 16 g (Ausbeute: 83%) der Verbindung 42 als schweres gelbes Öl übrigblieben $^{31}P$ NMR (161,9 MHz, $CD_2Cl_2$) $\delta$ - 9 ppm.

**Beispiel 40** (Diisopropylphosphino-4,7-dimethylindenyl-zirkonium-trichlorid, Verbindung 43)

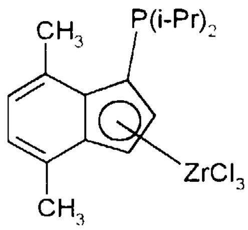

43

Eine Lösung von 16,0 g (0,029 mol) der Verbindung 42 in $CH_2Cl_2$ (100 ml) wurde zu einer Aufschlämmung von 6,4 g (0,029 mol) 99,9 %igem $ZrCl_4$ in 100 ml $CH_2Cl_2$ bei - 20°C innerhalb 10 min gegeben. Nach vollständiger Zugabe wurde das Reaktionsgemisch langsam über einen Zeitraum von zwei Stunden auf Raumtemperatur erwärmt und anschließend weitere 2 h bei Raumtemperatur gerührt. Danach wurden die Feststoffe durch Filtration entfernt und das Lösungsmittel i. Vak. entfernt, wobei die Rohverbindung 43 als Öl übrigblieb, das direkt zur Herstellung der Verbindung 44 verwendet wurde.

**Beispiel 41** (Diisopropylphosphino-dichlorboranyl-verbrücktes 4,7-Dimethylindenyl-cyclopentadienyl-zirkonium-dichlorid, Verbindung 44)

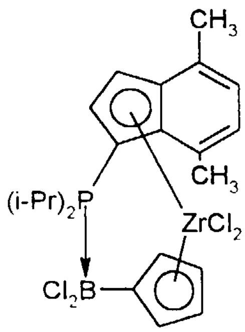

44

In einen Rundkolben, der 10,6 g (0,023 mol) der Verbindung 43 in 125 ml Toluol bei 0°C enthielt, wurden 5,0 g (0,023 mol) der Verbindung 2 innerhalb 5 min gegeben Nach 1,5-stündigem Rühren bei 0°C wurde das Kältebad entfernt und die Aufschlämmung weitere 3 Stunden bei Raumtemperatur gerührt. Danach wurde die to-luollösliche Fraktion vom schweren Öl, das sich während der Reaktion gebildet hatte, dekantiert und i. Vak. zur Trockne eingeengt, wobei ein schweres Öl übrigblieb. Nach Zugabe von 100 ml Hexan zu diesem Öl wurde nachgerührt und ein dunkelgelbes Pulver abfiltriert, das i. Vak. getrocknet wurde. Nach diesem Verfahren verblieben 6,3 g (Ausbeute: 48 %) der Verbindung 44 als dunkelgelbes Pulver. Das Produkt kann durch Ausfällung einer $CH_2Cl_2$-Lösung der Verbindung 44 in einem Kohlenwasserstoff-Lösungsmittel weitergereinigt werden. $^1$H NMR (400 MHz, $CD_2Cl_2$) δ 8,03 (pseudo t, J = 8,5 Hz, 1 H), 7,22 (d, J = 7 Hz, 1 H), 7,08 (d, J = 7,1 Hz, 1 H), 7,02 (m, 1 H), 6,77 (m, 1 H), 6,70 (m, 1 H), 6,58 (m, 1 H), 6,44 (br s, 1 H), 3,51 (m, 1 H), 2,82 (m, 1 H), 2,64 (s, 3 H), 2,50 (s, 3 H), 1,77 (dd, J = 7,2 Hz, $J_{H-P}$ = 16,3 Hz, 3 H), 1,69 (dd, J = 7,1 Hz, $J_{H-P}$ = 15,2 Hz, 3 H), 1,58 (dd, J = 7,1 Hz, $J_{H-P}$ = 15,5 Hz, 3 H), 1,28 dd, J = 7,2 Hz, $J_{H-P}$ = 14,5 Hz, 3 H), $^{31}$P-NMR (161,9 MHz, $CD_2Cl_2$) δ 28,4 (br, m), $^{11}$B-NMR (80 MHz, $CD_2Cl_2$) δ -15,3 (d, $J_{P-B}$ = 107 Hz).

**Beispiel 42** (Pyrrol-lithium, Verbindung 45)

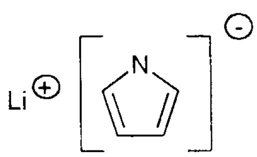

45

59 ml einer Lösung von Butyl-lithium (2,5 molar in Hexan, 0,148 mol) wurden langsam bei -20°C zu einer Lösung von 9,9 g Pyrrol (0,148 mol) in 200 ml Hexan gegeben, wobei sich ein weißer Festkörper bildete. Es wurde 2 Stunden bei Zimmertemperatur nachgerührt und der Festkörper durch Filtration gewonnen, 2 mal mit je 20 ml Hexan gewaschen und im Vakuum getrocknet. Dies Verfahren ergab 6 g der Verbindun 45 (56 % der theoretischen Ausbeute). $^1$H-NMR (400 MHz. THF): δ = 6,71 (s, 2H), 5,95 (s, 2H)

**Beispiel 43** (Dimethylboranyl-verbrücktes Cyclopentadienyl-pyrrol-titandichlorid, Verbindung 46)

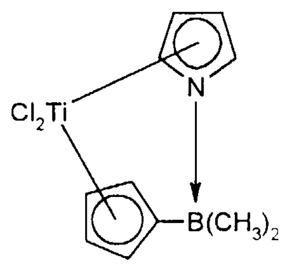

46

Eine Lösung von 1,34 g (0,005 mol) der Verbindung 4 in 20 ml Toluol wurde während 5 Minuten bei -78°C zu 0,38 g (0,005 mol) der Vebindung 45 gegeben. Das Kältebad wurde danach entfernt, und es wurde 2 Stunden bei Raumtemperatur weitergerührt. Danach wurde der gebildete rote Festkörper abfiltriert; das gelbe Filtrat wurde verworfen. Der rote Festkörper wurde mit Toluol gewaschen und im Vakuum getrocknet. Man erhielt 1,14 g mit einem geringen Anteil an LiCl.
$^{1}$H-NMR (400 MHz, THF), δ = 6.89 (pseudo-t, J = 2,3 Hz, 2 H), 6,64 (m, 2 H), 6,59 (pseudo-t, J = 2.35 Hz, 2 H), 5,73 (pseudo-t, J = 1,7 Hz, 2 H), 0,06 (s, 6 H). $^{11}$B NMR (80 MHz, THF) δ = -26 ppm.

**Beispiel 44** (1-Phenyl-2,3,4,5-tetramethyl-phosphol, Verbindung 47)

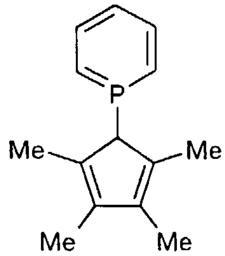

47

In Anlehnung an Organometallics 7 (1988), 921 wurde eine Lösung von 11,7 g (0,216 mol) 2-Butin in 150 ml $CH_2Cl_2$ langsam zu 15,3 g (0,115 mol) $AlCl_3$ in $CH_2Cl_2$ gegeben (0°C; 30 Min.). Es wurde 45 Minuten bei 0°C nachgerührt, dann das Kältebad entfernt und eine weitere Stunde nachgerührt. Danach wurde die Lösung auf -50°C gekühlt und eine Lösung von 21,4 g (0,12 mol) Phenyl-dichlorphosphin in $CH_2Cl_2$ während 20 Minuten zugegeben. Das Kältebad wurde danach entfernt, die dunkelrote Lösung eine Stunde nachgerührt und dann bei -30°C zu einer Lösung von 27 g (0,13 mol) Tributylphosphin in 100 ml $CH_2Cl_2$ gegeben. Die rote Farbe verschwand sofort; es hinterblieb eine gelbe Lösung. Nachdem die Zugabe beendet war, wurde das Lösungsmittel im Vakuum entfernt; es blieb ein dickes gelbes Öl. Das Öl wurde in Hexan aufgenommen und unter Ar-Atmosphäre mit gesättigter wäßriger $NaHCO_3$-Lösung und $H_2O$ gewaschen. Nach Trocknung über $MgSO_4$ wurde das Hexan im Vakuum entfernt. Es hinterblieben 18,2 g als klares Öl (Ausbeute 78 %) $^{1}$H-NMR (400 Mhz, $CDCl_3$) δ: 7,3 (m, 5H), 2,0 (m, 12H), $^{31}$P-NMR (161,9 MHz, $CDCl_3$) δ: 16,8 ppm.

**Beispiel 45** (Lithium-2,3,4,5-tetramethyl-phosphol, Verbindung 48)

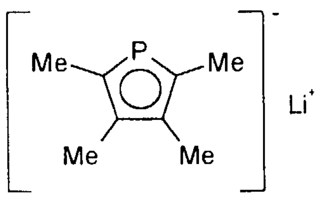

48

In Anlehnung an Organometallics 7 (1988), 921 wurden 0,52 g (0,074 mol) Lithium zu einer Lösung von 7 g (0,032 mol) der Verbindung 47 in 150 ml Tetrahydrofuran (THF) gegeben und über Nacht gerührt. Die erhaltene rote Lösung wurde zur Entfernung restlicher Feststoffe durch eine Fritte filtriert und das Filtrat auf 0°C gekühlt. Danach wurde eine Lösung von 1,45 g (0,01 mol) $AlCl_3$ in 20 ml THF zugetropft und die Lösung auf Raumtemperatur gebracht. Eine aliquate Menge wurde zur Analyse entnommen und die restliche Lösung direkt zur Herstellung der Verbindung 49 benutzt. $^{31}$P-NMR (161,9 MHz, THF) δ. 63,7 ppm.

**Beispiel 46** (Dimethylboranyl-cyclopentadienyl-tetramethylphosphol-titandichlorid, Verbindung 49)

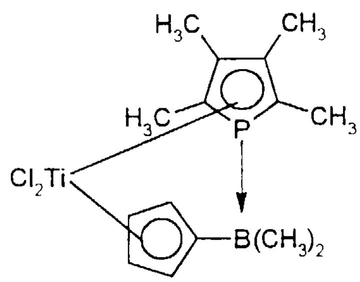

49

Die THF-Lösung aus Beispiel 45 mit 1,46 g (0,01 mol) der Verbindung 48 wurde in einen Rundkolben gegeben; TH.F wurde im Vakuum entfernt. Nach Zugabe von Toluol und Abkühlung auf -78°C wurde eine Lösung von 2,6 g (0,01 mol) der Verbindung 44 in 20 ml Toluol langsam unter Rühren zugegeben, wobei eine rote Aufschlämmung entstand. Nachdem die Zugabe beendet war, wurde die Aufschlämmung auf Raumtemperatur gebracht und 1 Stunde nachgerührt. Nach Abfiltrieren von ungelöst gebliebenem Feststoff wurde das Toluol im Vakuum entfernt; zum zurückgebliebenen öligen Feststoff wurde Hexan gegeben. Die Hexan-Lösung wurde ebenfalls von ungelöst gebliebenem Feststoff abfiltriert und über Nacht bei -20°C aufbewahrt. Nach Abdekantieren des Hexans wurden 0,5 g eines grünen Feststoffs erhalten, der als Verbindung 49 identifiziert wurde (Ausbeute 14 %). $^{1}$H-NMR (200 MHz, $CD_2Cl_2$) δ: 6,64 (m,2H), 6,57 (m,2H), 2,11 (d, $J_{H-P}$ = 10 Hz, 6H), 2,09 (s,6H), 0,87 (d, $J_{H-P}$ = 5,3 Hz, 6H). $^{31}$P-NMR (161,9 MHz, THF) δ: 95,6 ppm, $^{11}$B-NMR (80 MHz. $CD_2Cl_2$) δ : 39 (br, m) ppm.

**Beispiel 47** (Diphenylphosphino-dichlorboranyl-verbrücktes Bis(indenyl)-zirkonium-dichlorid, Verbindung 50)

0,011 Mol Trimethylsilyl-dichlorboranyl-inden wurden bei Raumtemperatur zu einer Suspension von 0,012 Mol Diphenylphosphino-indenyl-zirkoniumtrichlorid in 150 ml Toluol gegeben. Das Reaktionsgemisch wurde sodann 1 Stunde bei 75°C gerührt. Nach Abkühlen und Filtration wurden zur klaren orangefarbenen Lösung 150 ml Hexan gegeben, worauf sich ein schweres rotes Öl und ein hellgelber Niederschlag bildeten; der Niederschlag wurde abfiltriert, mit Hexan gewaschen und im Vakuum getrocknet. Der hellgelbe Festkörper wurde durch $^{1}$H-NMR-Spektroskopie als reine meso-Verbindung identifiziert. Das Filtrat mit dem roten Öl wurde auf 30 ml konzentriert und tropfenweise zu 200

ml Hexan gegeben, worauf sich ein zweiter hellgelber Niederschlag bildete, der abfiltriert und im Vakuum getrocknet wurde. Dieses Produkt wurde mit Hilfe der Röntgenstrahlen-Strukturanalyse als das reine rac-Isomer identifiziert. Hierzu geeignete Kristalle waren durch langsame Diffusion von Hexan in eine gesättigte $CH_2Cl_2$-Lösung bei Umgebungstemperatur gezüchtet worden. Die Donor-Akzeptor-Bindung P→B hat eine Länge von 2,02 Å. Die Ausbeute betrug 40 %, das meso/rac-Verhältnis 1:1. Wurde das Reaktionsgemisch 5 Stunden (statt 1 h) bei 75°C gerührt, erhielt man eine erhöhte Menge des gewünschten rac-Isomer; das meso/rac-Verhältnis betrug 1:4. Gleichzeitig stieg die Gesamtausbeute leicht von 40 % auf45 %.

Elementaranalyse: 56,05 % C (theoretisch 55,90 %), 4,35 % H (4,38 %)

Spektrum meso-Isomer: $^1$H-NMR (400 MHz, $CD_2Cl_2$, Raumtemperatur RT): 8,01ppm (1H, d, 8,8Hz); 7,8-7,0 ppm (mehrere überlappende Multiplets, 28H); 6,94 ppm (1H, t, 3,3 Hz); 6,77 ppm (1H, d, 3,44 Hz); 6,31 ppm (1H, d, 8,7 Hz) $^{31}$P-NMR (161,9 MHz, $CD_2Cl_2$): 5,6 ppm.$^{11}$B-NMR (80,2 MHz, $CD_2Cl_2$): -17,0 ppm (72 Hz).

Spektrum rac-Isomer: $^1$H-NMR (400 MHz, $CD_2Cl_2$, RT): 8,39 ppm (1H, d, 8,5 Hz), 7,68-7,05 ppm (27H, verschiedene überlappende Multiplets); 6,65 ppm (1H, d. 2,9Hz); 6,59 ppm (1H, t, 3,5 Hz); 6,51 ppm (1H, t, 2,8Hz); 6,40ppm (1H, d, 3,5 Hz). $^{31}$P-NMR (161,9 MHz, $CD_2Cl_2$): 8,1 ppm. $^{11}$B-NMR (80,2 MHz, $CD_2Cl_2$): -14,0 ppm ($J_{P\text{-}B}$ = 74 Hz).

**Beispiele 48 bis 50** (Dialkylphosphino-dichlorboranyl-verbrücktes Bis(indenyl)zirkonium-dichlorid; Alkyl =i-Propyl = Verbindung 51; Ethyl = Verbindung 52; Methyl = Verbindung 53)

0,016 Mol Trimethylsilyl-dichlorboranyl-inden in 50 ml Toluol wurden bei Raumtemperatur zu einer Suspension von 0,0157 Mol Dialkylphosphinoindenyl-zirkoniumtrichlorid in 250 ml Toluol gegeben. Das Reaktionsgemisch wurde dann unter Rühren für einige Stunden erhitzt. Nach Abkühlen und Filtration wurden zur klaren orangefarbenen Lösung 300 ml Hexan gegeben, worauf sich ein schweres rotes Ol und eine klare gelbe Lösung bildeten. Die Trennung der meso- und rac-Isomere wurde durch fraktionierte Kristallisation aus Toluol/Hexan-Lösungen erreicht.

Charakterisierung der Verbindungen (NMR-Spektren in $CD_2Cl_2$ bei RT; $^1$H-NMR 400 MHz, $^{31}$P-NMR: 161,9 MHz, $^{11}$B-NMR; 80,2 MHz):

rac-Verbindung 51 (i-Pr):

$^1$**H-NMR**: 8,41 ppm (1H, d, 9,0 Hz); 8,31 ppm (1H, d, 8,4 Hz): 7,84 ppm (1H, d. 8,5 Hz); 7,64 bis 7,24 ppm (6H, verschiedene überlappende Multiplets); 6,70 ppm (2H, m); 6,60 ppm (1H, m); 3,78 ppm (1H, m, $P(C\mathbf{H}(CH_3)_2)_2$); 3,21 ppm (1H, m, $P(C\mathbf{H}(CH_3)_2)_2$); 1,81 ppm (61-1, m, $P(CH(C\mathbf{H}_3)_2)_2$, 1,72 ppm (3H, dd. $P(CH(C\mathbf{H}_3)_2)_2$, 14,9 Hz, 7,3 Hz), 1,32 ppm (3H, dd, $P(CH(C\mathbf{H}_3)_2)_2$, 14,1 Hz, 7.4 Hz). $^{31}$**P-NMR**: 22,7 ppm. $^{11}$**B-NMR**: -14,1 ppm (100 Hz).

Elementaranalyse: 49,4 % C (theoretisch 48,9 %), 4,6 % H (4,4 %).

meso-Verbindung 52 (Et):

$^1$**H-NMR**: 7,83 ppm (1H, d, 9,0 Hz); 7,76 ppm (1H, m); 7,63 ppm (1H, d, 7,2 Hz); 7,47 ppm (1H, d, 8,5 Hz); 7,33 ppm (2H, m); 7,20 bis 7,03 ppm (4H, verschiedene überlappende Multiplets); 6,76 ppm (2H, m); 2,68 ppm (2H, m, $P(C\mathbf{H}_2(CH_3)_2)$; 2,44 ppm (2H, m, $P(C\mathbf{H}_2(CH_3)_2)$; 1,62 ppm (3H, m, $P(C\mathbf{H}_2(CH_3)_2)$; 1,27 ppm (3H, m, $P(CH_2(C\mathbf{H}_3)_2)$. $^{31}$**P-NMR**: 7,1 ppm. $^{11}$**B-NMR**: -15,8 ppm (100 Hz).

rac-Verbindung 52 (Et):

$^1$**H-NMR**: 8,28 ppm (1H, d, 8,6 Hz); 8,10 ppm (1H, d, 8,6 Hz); 7,62 ppm (1H, d. 8,4 Hz); 7,46 ppm (1H, d, 8,5 Hz); 7,41 bis 7,10 ppm (4H, verschiedene überlappende Multiplets); 6,81 ppm (1H, m); 6,47 ppm (2H, m); 6,38 ppm (1H, d, 3,4 Hz); 2,68 ppm (2H, m, $P(C\mathbf{H}_2CH_3)_2$); 2,35 ppm (2H, m, $P(C\mathbf{H}_2CH_3)_2$); 1,30 ppm (6H, m. $P(CH_2(C\mathbf{H}_3)_2)$. $^{31}$**P-NMR**: 12,3 ppm. $^{11}$**B-NMR**: -15,7 ppm.

Elementaranalyse: 47,6 % C (theoretisch 47,1 %), 4,3 % H (4,0 %).

meso-Verbindung 53 (Me):

$^1$**H-NMR**: 7,84 ppm (1H, d); 7,75 ppm (1H, d, 8,2 Hz); 7,68 ppm (1H, d, 7,7 Hz); 7,51 ppm (1H, d, 8,5 Hz); 7,40 bis 7,10 ppm, (6H, verschiedene überlappende Multiplets); 6,77 ppm (2H, br); 2,13 ppm (3H, $P(C\mathbf{H}_3)_2$, d, 11,8

Hz); 1,92 ppm (3H, P(C**H**$_3$)$_2$, d, 11,8 Hz). $^{31}$**P-NMR**: 8,4 ppm. $^{11}$**B-NMR**: -16,1 ppm (103 Hz).

rac-Verbindung <u>53</u> (Me):

$^1$**H-NMR**: 8,21 ppm (1H, d, 8,7 Hz); 8,15 ppm (1H, d. 8,6 Hz); 7,63 ppm (1H, d. 8,5 Hz); 7,44 bis 7,07 ppm (6H, verschiedene überlappende Multipletts); 6,40 ppm (3H. br); 2,03 ppm (3H, d, P(C**H**$_3$)$_2$, 11,9 Hz); 1,98 ppm (3H, d, P(C**H**$_3$)$_2$, 11,6 Hz). $^{31}$**P-NMR**: -1,5 ppm. $^{11}$**B-NMR**: -16,0 ppm (119 Hz).

**<u>Beispiel 51</u>** (1,3-Bis(trimethylsilyl)-2-methylinden, <u>Verbindung 54)</u>

500 ml Hexan und 70 ml Butyllithium (als 2,5 molare Lösung in Hexan) wurden in einen 1000 ml-Kolben gegeben. Hierzu wurden 0,175 Mol 2-Methylinden bei Umgebungstemperatur getropft; das Gemisch wurde weitere 10 Stunden gerührt. Dann wurden 0,18 Mol Trimethylsilylchlorid bei Raumtemperatur zugetropft; es wurde weitere 10 Stunden gerührt. LiCl wurde abfiltriert, und 70 ml Butyllithium (als 2,5 molare Lösung in Hexan) wurden zum klaren Filtrat gegeben. Nach weiterem Rühren für 10 Stunden wurden erneut 0,18 Mol Trimethylsilylchlorid zugegeben, und es wurde weitere 10 Stunden gerührt. LiCl wurde abfiltriert und das Lösungsmittel im Vakuum entfent. Verbindung <u>54</u> hinterblieb als farbloses Öl. Ausbeute: 85 % der theoretischen Ausbeute.

$^1$**H-NMR** ($CD_2Cl_2$). 7,51 ppm (1H, d, 7,7 Hz); 7,38 ppm (1H, d, 7,5 Hz); 7,19 ppm (1H, t, 7,4Hz); 7,08 ppm (1H, t, 7,3 Hz); 3,54ppm (1H, s); 2,32 ppm (3H, s); 0,41 ppm (9H, s, Si(C**H**$_3$)$_3$); 0,0 ppm (9H, s, Si(C**H**$_3$)$_3$).

**<u>Beispiel 52</u>** (Trimethylsilyl-dichlorboranyl-2-methylinden, <u>Verbindung 55</u>)

0,096 Mol der Verbindung <u>54</u> wurden in einen 250 ml-Kolben gegeben, der mit einem Trockeneis-Kondensator (-30°C) ausgerüstet war. Dann wurden 0,096 Mol $BCl_3$ zugegeben und das Gemisch bei Umgebungstemperatur 3 Stunden und bei 55°C 6 Stunden gerührt. Das Nebenprodukt $(CH_3)_3SiCl$ wurde entfernt; es hinterblieb als Rohprodukt ein braunes Öl. Eine Destillation von Kältefalle zu Kältefalle ergab die Verbindung <u>55</u> in 75 %iger Ausbeute als klebrigen Feststoff.

$^1$**H-NMR** ($CD_2Cl_2$): 8,09 ppm (1H, d, 7,9 Hz); 7,37 ppm (1H, d, 7,6 Hz); 7,26 ppm (1H, t, 7,5 Hz); 7,16 ppm (1H, t, 7,5 Hz); 3,89 ppm (1H, s); 2,61 ppm (3H, s,), 0,0 ppm (9H, s, Si(C**H**$_3$)$_3$). $^{11}$**B-NMR** ($CD_2Cl_2$): 31,9 ppm.

**<u>Beispiel 53</u>** (Tnbuylstannyl-diethylpliosphino-2-methylinden, <u>Verbindung 56</u>)

Es wurde analog Beispiel 7 gearbeitet.

**<u>Beispiel 54</u>** (Diethylphosphino-2-methylindenyl-zirkoniumtrichlorid, <u>Verbindung 57</u>)

Es wurde analog Beispiel 8 gearbeitet, jedoch wurde statt Toluol $CH_2Cl_2$ als Lösungsmittel benutzt. Die Reaktionstemperatur war 25°C. Die Reinigung erfolgte durch Soxhlet-Extraktion mit $CH_2Cl_2$. Verbindung <u>57</u> wurde als unlöslicher gelber Feststoff in 78 % der theoretischen Ausbeute erhalten.

**<u>Beispiel 55</u>** (($C_2H_5)_2P$-$BCl_2$-verbrücktes Bis-(2-methylindenyl )-zirkoniumdichlorid, <u>Verbindung 58)</u>

0,019 Mol Verbindung <u>55</u> in 50 ml Toluol wurden bei Raumtemperatur zu einer Suspension von 0,019 Mol Verbindung <u>57</u> in 350 ml Toluol gegeben.

Das Reaktionsgemisch wurde dann auf 80°C erhitzt und 24 Stunden gerührt Nach Abkühlen und Filtration wurden 300 ml Hexan zur klaren orangefarbenen Lösung gegeben, worauf sich ein schweres orangefarbenes Öl und eine klare gelbe Lösung bildeten. Konzentrierung und Abkühlen auf -25°C ergab die Verbindung rac-<u>58</u> als hellgelbes Pulver.

$^1$**H-NMR**: 8,14 ppm (1H, d, 8,6 Hz); 7,96 ppm (1H, d, 8,9 Hz); 7,47 bis 7.05 ppm (6H, verschiedene überlappende Multiplets); 6,53 ppm (1H, d, 1,9 Hz); 6,47 ppm (1H, s); 3,0 ppm bis 2,55 ppm (4H, verschiedene überlappende Multiplets), P(C<u>**H**</u>$_2$CH$_3$)$_2$); 2,21 ppm (3H, s, C<u>**H**</u>$_3$); 2,08 ppm (3H, s, C<u>**H**</u>$_3$), 1,44 ppm (3H, m, P(CH$_2$C<u>**H**</u>$_3$)$_2$); 1,07 ppm (3H, m, PCH$_2$C<u>**H**</u>$_3$)$_2$. $^{31}$**P-NMR**: 21,4 ppm. $^{11}$**B-NMR**: -14,7 ppm.

**<u>Beispiel 56</u>** (Ethen-Propen-Copolymerisation)

In einen trockenen, Sauerstoff-freien 300 ml V4A-Autoklaven wurden 100 ml trockenes, unter Inertgas destilliertes Toluol und 10 g Propen vorgelegt. Der Autoklav wurde auf 40°C temperiert und der Katalysator unter Druck mittels einer Druckschleuse zugegeben und sofort der Innendruck mit Ethen auf konstant 10 bar eingestellt. Als Katalysator dienten 5 x $10^{-7}$ mol [(cp)$Ph_2PBMe_2$(cp)$TiCl_2$], die mit 5 x $10^{-3}$ mol MAO während 15 Minuten bei Raumtemperatur präformiert (aktiviert) worden waren. Die Innentemperatur stieg auf 60°C. Die Polymerisation wurde nach 30 Minuten abgebrochen. Nach Aufarbeitung (Ausfällen und Waschen) mit Ethanol/Salzsäure und Ethanol wurden 0,9 g eines E-P-Copolymers isoliert.

| | |
|---|---|
| Katalysator-Aktivität | ca. 3,5 Tonnen pro mol Katalysator und Stunde |
| IR-Analyse | 42 Gew.-% Propen, 58 Gew.-% Ethen |
| DSC-Analyse | teilkristallines Copolymer, Schmelzpeaks: $T_{m1}$ = -31°, $T_{m2}$ = 106°C Glasübergangstemperatur: $T_g$ = -55°C |
| Grenzviskosität in ortho-Dichlorbenzol bei 140°C | [η] = 2,88 dl/g |

**Beispiel 57** (Ethen-Propen-Copolymerisation)

Es wurde wie im vorstehenden Beispiel verfahren, wobei die Innentemperatur des Autoklaven auf 60°C und der Innendruck um 6 bar mit Ethen auf konstant 11 bar eingestellt wurde. Als Katalysator dienten 5 x $10^{-7}$ mol

$$[((CH_3)_3Si\text{-}cp)Ph_2PBCl_2(cp)ZrCl_2],$$

die mit 5 x $10^{-3}$ mol MAO während 15 Minuten bei Raumtemperatur präformiert worden waren. Die Innentemperatur stieg von 60° auf 78°C.

| | |
|---|---|
| Polymer-Ausbeute nach 30 Minuten | 9,8 g. |
| Katalysator-Aktivität | 39,2 Tonnen Copolymer pro mol Katalysator und Stunde |
| IR-Analyse | 31 Gew.-% Propen, 69 Gew.-% Ethen |
| DSC-Analyse | teilkristallines Copolymer, Schmelzpeaks: -2°, +62°, 102°C Glasübergangstemperatur: $T_g$ = -55°C |
| Grenzviskosität in ortho-Dichlorbenzol bei 140°C | [η] = 0,88 dl/g |

In einem Vergleichsversuch bei 40°C (exotherm bis ca. 50°C) bildete sich ein völlig amorphes Copolymer mit einem Propen-Gehalt von 46 Gew -% und einem [η]-Wert von 0,87 dl/g.

**Beispiel 58** (Ethen-Propen-Copolymerisation)

Es wurde wie im vorstehenden Beispiel verfahren, wobei bei gleichen Katalysator- und Cokatalysatormengen wie dort als D/A-Metallocen [r-(ind)i-$Pr_2PBCl_2$(ind)$ZrCl_2$] verwendet wurde und der Druck bei 80° um 2 bar mit Ethen auf konstant 8,5 bar erhöht wurde. Die Innentemperatur stieg auf 82°C.

| | |
|---|---|
| Katalysator-Aktivität | 4,4 Tonnen Copolymer pro mol Katalysator und Stunde |
| DSC-Analyse | teilkristallines Copolymer<br>$T_m$ = +37°C<br>$T_g$ = -49°C |
| Grenzviskosität in ortho-Dichlorbenzol bei 140°C | [η] = 1,41 dl/g |

**Beispiel 59** (Propen-Polymerisation)

In einen trockenen, Sauerstoff-freien 300 ml V4A-Stahlautoklaven wurde ca. g Mol Propen vorgelegt und bei 20°C die Polymerisation in Masse durch Katalysatorzugabe mittels einer Druckschleuse gestartet. Als Katalysator dienten 1 x $10^{-6}$ Mol [($Me_3Si$-cp)$Ph_2PBCl_2$(cp)$ZrCl_2$] und 1 x $10^{-2}$ Mol MAO in 9 ml Toluol.

Die Innentemperatur stieg von 20° auf 24°C. Nach einer Stunde konnten nach Aufarbeitung mit Ethanol/Salzsäure und Trocknung 3,2 g eines kautschukartigen Polypropylens isoliert werden.

| | |
|---|---|
| Katalysator-Aktivität | 3,2 Tonnen pro mol·h |
| DSC | amorphes PP, Tg = -4°C |
| GPC (Polystyrol-Eichung) | $M_w$ = 143 kg/mol |

(fortgesetzt)

| | |
|---|---|
| | $M_n$ = 28 kg/mol |
| Grenzviskosität (o-$Cl_2$-benzol, 140°C) | η = 0,66 dl/g |
| NMR (Triadenanalyse) | 37 % isotaktisch |
| | 42 % ataktisch |
| | 21 % syndiotaktisch |

**Beispiel 60** (Propen-Polymerisation)

Ein ausgeheizter 300ml-V4A-Stahlautoklav wurde mit 100 ml trockenem, Sauerstoff-freien Toluol und 0,5 ml eine 1 molaren Triisobutylaluminium/Toluol-Lösung beschickt. Anschließend wurde ca. 1 mol Propen in den Autoklaven übergeführt. 3,1 ml einer 30 Minuten bei RT präformierten toluolischen Katalysator-Lösung, die g x $10^{-6}$ mol rac[(2-Me-ind)$Et_2PBCl_2$(2-Me-ind)$ZrCl_2$] und 0,1 mmol Triisobutylaluminium (TiBA) enthielt, wurden in einer Druckschleuse mit 1 ml einer Chlorbenzol-Lösung, die 4 x $10^{-6}$ mol Dimethylanilinium-tetrakis(pentafluor-phenyl)borat enthielt, versetzt und mit Toluol auf 5 ml aufgefüllt. Nach Überführung der Katalysator-Lösung unter Druck in den Autoklaven stieg die Innentemperatur trotz Außenkühlung mit Trockeneis/Aceton von 20°C auf 48°C.
20 Minuten nach Katalysatorzugabe wurde die Polymerisation abgebrochen und der Autoklaveninhalt in 500 ml Ethanol und 50 ml konzentrierter wäßriger Salzsäure 2 Stunden ausgerührt. Anschließend wurde das weiße Polypropylenpulver durch Filtration isoliert, mit Ethanol gewaschen und bei 115°C getrocknet.
Polymerausbeute: 11,6 g
Katalysator-Aktivität: 34,8 Tonnen: i-PP pro Mol Katalysator und Stunde
Die DSC-Messung ergab in der 2. Aufheizung eine Schmelztemperatur $T_m$ = 155°C
Die NMR-Messung ergeb einen Isotaktizitätsindex 1.1. = 88 %
Die Grenzviskosität, gemessen in o-Dichlorbenzol bei 140°C, betrug [η] = 3,60 dl/g, entsprechend einer Molmasse $M_{visk}$ = 798 kg/mol.
In weiteren Versuchen bei ansteigender Temperatur wurde ein zunehmender Anteil an ataktischen Sequenzen beobachtet. Dies wird in der DSC-Messung durch eine zunehmend ausgeprägte Glasübergangsstufe im Temperaturbereich von 0 bis -20°C sichtbar.

## Patentansprüche

1. Verfahren zur Herstellung von thermoplastischen Elastomeren durch (Co)Polymerisation von Monomeren aus der Gruppe der $C_2$-$C_8$-α-Olefine, der $C_4$-$C_{15}$-Diolefine, der ein- oder zweifach halogenierten $C_4$-$C_{15}$-Diolefine, der Vinylester, (Meth)Acrylate und Styrol in der Masse-, Lösungs-, Slurry- oder Gasphase in Gegenwart von metallorganischen Katalysatoren. die durch Cokatalysatoren aktiviert werden können, dadurch gekennzeichnet, daß als metallorganische Katalysatoren Metallocen-Verbindungen der Formel

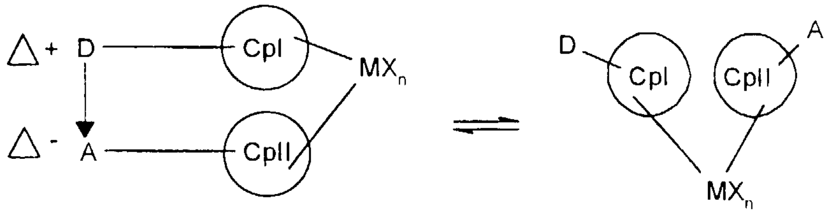

(Ia) (Ib) (I) ,

in der

CpI und cpII zwei gleiche oder verschiedene Carbanionen mit einer Cyclopentadienyl-haltigen Struktur darstellen, in denen eines bis alle H-Atome durch gleiche oder verschiedene Reste aus der Gruppe von linearem oder verzweigtem $C_1$-$C_{20}$-Alkyl, das 1fache bis vollständig durch Halogen, 1-3fach durch Phenyl, sowie 1-3fach durch Vinyl substituiert sein kann, $C_6$-$C_{12}$-Aryl, Halogenaryl mit 6

bis 12 C-Atomen, Organometall-Substituenten, wie Silyl, Trimethylsilyl, Ferrocenyl sowie 1-oder 2fach durch D und A substituiert sein können,

D ein Donoratom bedeutet, das zusätzlich Substituenten tragen kann und das in seinem jeweiligen Bindungszustand mindestens über ein freies Elektronenpaar verfügt,

A ein Akzeptoratom bedeutet, das zusätzlich Substituenten tragen kann und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen,

M für ein Übergangsmetall der III., IV., V. oder VI. Nebengruppe des Periodensystems der Elemente (Mendelejew) einschließlich der Lanthaniden und Actiniden steht,
X ein Anionäquivalent bedeutet und
n in Abhängigkeit von der Ladung von M die Zahl Null, Eins, Zwei, Drei oder Vier bedeutet,

oder
π-Komplex-Verbindungen und insbesondere Metallocen-Verbindungen der Formel

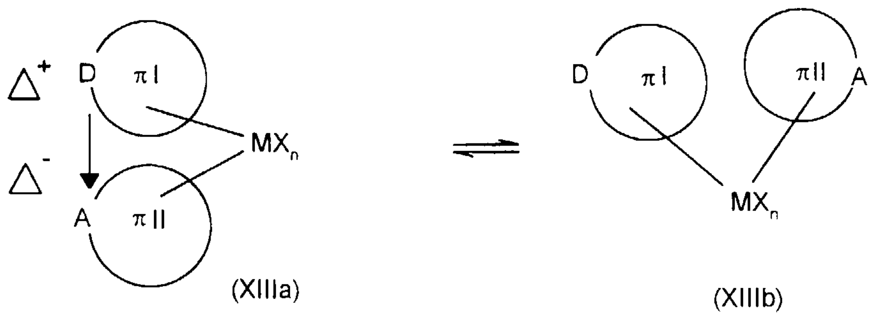

(XIIIa) (XIIIb) (XIII) ,

in der

πI und πII voneinander verschiedene geladene oder elektrisch neutrale π-Systeme darstellen, die ein- oder zweifach mit ungesättigten oder gesättigten Fünf- oder Sechsringen kondensiert sein können,
D ein Donoratom bedeutet, das Substituent von πI oder Teil des π-systems von πI ist und das in seinem jeweiligen Bindungszustand mindestens über ein freies Elektronenpaar verfilgt,
A ein Akzeptoratom bedeutet, das Substituent von πII oder Teil des π-Systems von πII ist und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,
wobei D und A ihrerseits Substituenten tragen können,
wobei jedes π-System bzw. jedes ankondensierte Ringsystem eines oder mehrere D oder A oder D und A enthalten kann und
wobei in πI und πII in der nicht kondensierten oder in der kondensierten Fom unabhängig voneinander eines bis alle H-Atome des π-Systems durch gleiche oder verschiedene Reste aus der Gruppe von linearem oder verzweigtem $C_1$-$C_{20}$-Alkyl, das 1-fach bis vollständig durch Halogen, 1- bis 3-fach durch Phenyl sowie 1- bis 3-fach durch Vinyl substituiert sein kann, $C_6$-$C_{12}$-Aryl, Halogenaryl mit 6 bis 12 C-Atomen, Organometall-Substituenten, wie Silyl. Trimethylsilyl, Ferrocenyl sowie ein- oder zweifach durch D und A substituiert sein können, sodaß die reversible koordinative D→A-Bindung (i) zwischen D und A, die beide Teile des jeweiligen π-Systems oder des ankondensierten Ringsystems sind, oder (ii) von denen D oder A Teil des π-Systems und das jeweils andere Substituent des nicht kondensierten π-Systems oder des ankondensierten Ringsystems ist oder (iii) sowohl D als auch A solche Substituenten sind, wobei im Falle von (iii) mindestens ein zusätzliches D oder A oder beide Teile des π-Systems oder des ankondensierten Ringsystems ist (sind), ausgebildet wird,

M und X die obige Bedeutung haben und

n in Abhängigkeit von den Ladungen von M sowie denen von πI und πII die Zahl Null, Eins, Zwei, Drei oder Vier bedeutet,

eingesetzt werden.

**2.** Verfahren nach Anspruch 1, dadurch gekennzeichnet, daß die Metallocen-Verbindungen bzw. die π-Komplex-Verbindungen als Katalysatoren in einer Menge von $10^1$ bis $10^{12}$ mol Monomere pro mol Metallocen bzw. π-Komplex-Verbindung eingesetzt werden.

**3.** Verfahren nach Ansprüchen 1 und 2, dadurch gekennzeichnet, daß bei Gegenwart von Lösungsmitteln solche aus der Gruppe von gesättigten und aromatischen Kohlenwasserstoffen oder von gesättigten oder aromatischen Halogenkohlenwasserstoffen eingesetzt werden.

**4.** Verfahren nach Ansprüchen 1 bis 3, dadurch gekennzeichnet, daß in den Metallocen-Verbindungen die Carbanionen CpI und CpII bzw. das π-System πI ein Cyclopentadienylgerüst aus der Gruppe von Cyclopentadien, substituiertem Cyclopentadien, Inden, substituiertem Inden, Fluoren und substituiertem Fluoren bedeuten, in welchen je Cyclopentadien- bzw. ankondensiertem Benzolring 1 bis 4 Substituenten aus der Gruppe von $C_2$-$C_{20}$-AJkyl, $C_1$-$C_{20}$-Alkoxy, Halogen, $C_6$-$C_{12}$-Aryl, Halogenphenyl, D und A vorliegen, wobei D und A den in Anspruch 1 genannten Bedeutungsumfang haben und wobei ankondensierte aromatische Ringe teilweise oder vollständig hydriert sein können.

**5.** Verfahren nach Ansprüchen g bis 4, dadurch gekennzeichnet, daß in den Metallocen-Verbindungen als Donoratome D Elemente aus der Gruppe N, P, As, Sb, Bi, O, S, Se, Te, F, Cl, Br, I, bevorzugt N, P, O, S, vorliegen.

**6.** Verfahren nach Ansprüchen 1 bis 5, dadurch gekennzeichnet, daß in den Metallocen-Verbindungen als Akzeptoratome A Elemente aus der Gruppe B, Al, Ga, In, Tl, bevorzugt B, Al, Ga vorliegen.

**7.** Verfahren nach Ansprüchen 1 bis 6, dadurch gekennzeichnet, daß in den Metallocen-Verbindungen bzw. π-Komplex-Verbindungen Donor-Akzeptor-Brücken aus der Gruppe von

$$N\rightarrow B,\ N\rightarrow Al,\ P\rightarrow B,\ P\rightarrow Al,\ O\rightarrow B,\ O\rightarrow Al,\ Cl\rightarrow B,\ Cl\rightarrow Al,\ C{=}O\rightarrow B,\ C{=}O\rightarrow Al$$

vorliegen.

**8.** Verfahren nach Ansprüchen 1 bis 7, dadurch gekennzeichnet, daß in den Metallocen-Verbindungen M für Sc, Y, La, Sm, Nd, Lu, Ti. Zr, Hf, Th, V, Nb, Ta, Cr, bevorzugt für Ti, Zr, Hf, V, Nb oder Ta steht.

**9.** Verfahren nach Ansprüchen 1 bis 8, dadurch gekennzeichnet daß die Metallocen-Verbindungen bzw. die π-Komplex-Verbindungen gemeinsam mit einem Aluminoxan, einem Boran oder Borat und gegebenenfalls weiteren Cokatalysatoren und/oder Metallalkylen als Katalysatorsystem eingesetzt werden.

**10.** Verfahren nach Ansprüchen 1 bis 9, dadurch gekennzeichnet, daß Umlagerungsprodukte von Metallocen-Verbindungen bzw. π-Komplex-Verbindungen nach Anspruch 1 unter Selbstaktivierung, bei denen nach Öffnung der D/A-Bindung das Akzeptoratom A einen X-Liganden unter Ausbildung einer zwitterionischen Metallocen-Komplex-Struktur bzw. π-Komplex-Struktur bindet, wobei beim Übergangsmetall M eine positive Ladung und beim Akzeptoratom A eine negative Ladung erzeugt wird und wobei ein weiterer X-Ligand H oder substituiertes oder nicht substituiertes C darstellt, in dessen Bindung zum Übergangsmetall M die Olefin-Insertion zur Polymerisation erfolgt, wobei bevorzugt 2 X-Liganden zu einem Chelat-Liganden verknüpft sind.

**11.** Verfahren nach Ansprüchen 1 bis 10, dadurch gekennzeichnet, daß π-Komplex-Verbindungen nach Anspruch 1, in denen eines der Atome D bzw. A Teil des Ringes des zugehörigen p-Systems ist, bevorzugt daß D Teil des Ringes des zugehörigen p-Systems ist, eingesetzt werden.

**12.** Verfahren nach Ansprüchen 1 bis 11, dadurch gekennzeichnet, daß Reaktionsprodukte der Formel (XI) bzw. (XIa) von ionisierenden Agentien mit Metallocen-Verbindungen bzw. π-Komplexen gemäß Formel (I) bzw. (XIII)

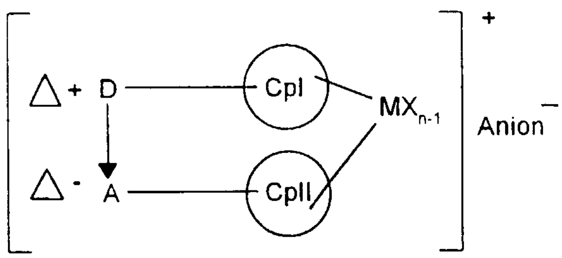

(XIa)

oder

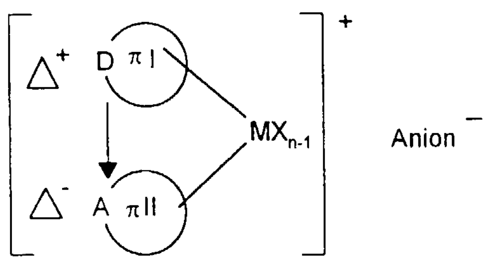

(XIb),

bzw.

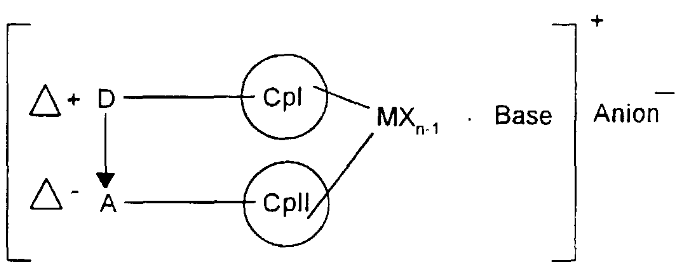

(XIc)

oder

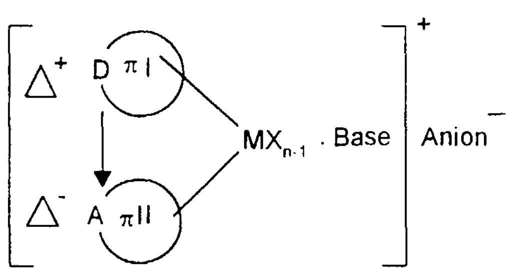

(XId),

in denen
Anion für das gesamte sperrige, schlecht koordinierende Anion und Base für eine Lewis-Base stehen,
eingesetzt werden.

**13.** Verfahren nach Ansprüchen 1 bis 12, dadurch gekennzeichnet, daß es auf die Herstellung von ePP gerichtet ist.

## Claims

**1.** Process for producing thermoplastic elastomers by (co)polymerisation of monomers from among the $C_2$-$C_8$ $\alpha$-olefins, the $C_4$-$C_{15}$ diolefins, the mono- or dihalogenated $C_4$-$C_{15}$ diolefins, the vinyl esters, (meth)acrylates and styrene in the bulk, solution, slurry or vapour phase in the presence of organometallic catalysts which can be activated by cocatalysts, characterised in that the compounds used as organometallic catalysts are metallocene compounds corresponding to the formula

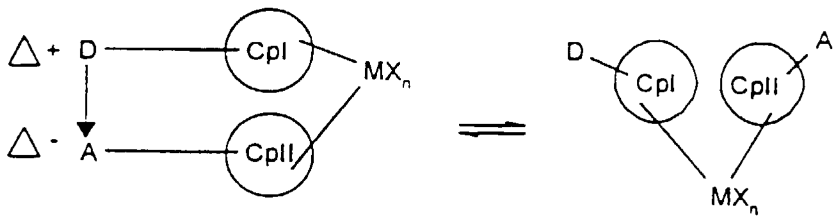

(I),

(1a) (1b)

wherein

| | |
|---|---|
| CpI and CpII | represent two identical or different carbanions having a cyclopentadienyl-containing structure, in which one to all of the H atoms can be substituted by identical or different groups from among linear or branched $C_1$-$C_{20}$ alkyl - which can be monosubstituted to completely substituted by halogen, mono- to trisubstituted by phenyl and mono- to trisubstituted by vinyl - $C_6$-$C_{12}$ aryl, haloaryl having 6 to 12 C atoms, organometallic substituents such as silyl, trimethylsilyl, ferrocenyl, and can be mono- or disubstituted by D and A, |
| D | denotes a donor atom which can in addition carry substituents and which in its respective bonding state has at least one free electron pair, |
| A | denotes an acceptor atom which can in addition carry substituents and which in its respective bonding state has an electron gap, |

and D and A are bonded together by a reversible coordinate bond in such a way that the donor group accepts a positive (partial) charge and the acceptor group accepts a negative (partial) charge,

M represents a transition metal of the subgroups III, IV, V or VI of the periodic system of the elements (Mendeleev), including the lanthanides and actinides,

x denotes an anion equivalent and

n denotes the number zero, one, two, three or four, depending upon the charge on M,

or
$\pi$-complex compounds and in particular metallocene compounds corresponding to the formula

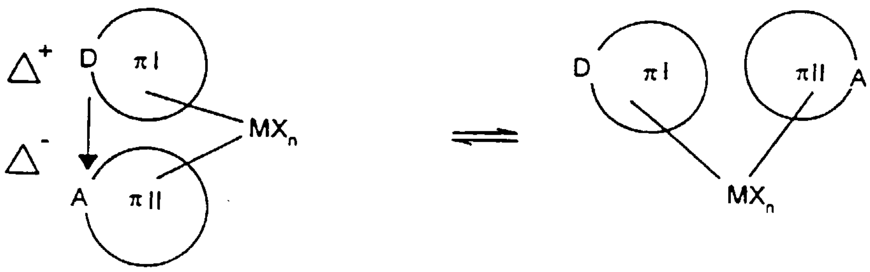

(XIII),

(XIIIa) (XIIIb)

wherein

- πI and πII represent charged or electrically neutral π-systems which differ from one another and can be singly or doubly condensed with unsaturated or saturated five-membered or six-membered rings,
- D denotes a donor atom which is a substituent of πI or part of the π-system of πI and which in its respective bonding state has at least one free electron pair,
- A denotes an acceptor atom which is a substituent of πII or part of the π-system of πII and which in its respective bonding state has an electron gap,

and D and A are bonded together by a reversible coordinate bond in such a way that the donor group accepts a positive (partial) charge and the acceptor group accepts a negative (partial) charge, and at least one of D and A are part of the respective associated π-system,
and D and A for their part can carry substituents,
and each π-system or each condensed ring system can contain one or more D or A or D and A and
wherein in πI and πII in the uncondensed or in the condensed form, independently of one another, one to all of the H atoms of the π-system can be substituted by identical or different groups from among linear or branched $C_1$-$C_{20}$ alkyl, which can be monosubstituted to completely substituted by halogen, mono- to trisubstituted by phenyl and mono- to trisubstituted by vinyl, $C_6$-$C_{12}$ aryl, haloaryl having 6 to 12 C atoms, organometallic substituents such as silyl, trimethylsilyl, ferrocenyl, and can be mono- or disubstituted by D and A, so that the reversible coordinate D→A bond is formed (i) between D and A, which are both parts of the respective π-system or of the condensed ring system, or (ii) of which D or A is part of the π-system and the respective other substituent is of the uncondensed π-system or of the condensed ring system or (iii) both D and A are substituents of such a kind that in the case of (iii) at least one additional D or A or both is (are) parts of the π-system or of the condensed ring system,

- M and X have the meanings given above and
- n denotes the number zero, one, two, three or four, depending upon the charges on M and on those on πI and πII.

**2.** Process according to claim 1, characterised in that the metallocene compounds or the π-complex compounds are used as catalysts in a quantity of from $10^1$ to $10^{12}$ mol monomers per mol metallocene or π-complex compound.

**3.** Process according to claims 1 and 2, characterised in that where solvents are present, those used are selected from saturated and aromatic hydrocarbons or from saturated or aromatic halogenated hydrocarbons.

**4.** Process according to claims 1 to 3, characterised in that in the metallocene compounds the carbanions CpI and CpII and the π-system πI respectively denote a cyclopentadienyl skeleton of the compounds cyclopentadiene, substituted cyclopentadiene, indene, substituted indene, fluorene and substituted fluorene, in each of which cyclopentadiene or condensed benzene rings 1 to 4 substituents from among $C_1$-$C_{20}$ alkyl, $C_1$-$C_{20}$ alkoxy, halogen, $C_6$-$C_{12}$ aryl, halophenyl, D and A are present, D and A having the range of meaning given above in claim 1 and condensed aromatic rings possibly being partially or completely hydrogenated.

**5.** Process according to claims 1 to 4, characterised in that elements from among N, P, As, Sb, Bi, O, S, Se, Te, F, Cl, Br, I, preferably N, P, O, S, are present as donor atoms D in the metallocene compounds.

**6.** Process according to claims 1 to 5, characterised in that elements from among B, Al, Ga, In, Tl, preferably B, Al, Ga, are present as acceptor atoms A in the metallocene compounds.

**7.** Process according to claims 1 to 6, characterised in that donor-acceptor bridges from among

$$N\rightarrow B,\ N\rightarrow Al,\ P\rightarrow B,\ P\rightarrow Al,\ O\rightarrow B,\ O\rightarrow Al,\ Cl\rightarrow B,\ Cl\rightarrow Al,\ C{=}O\rightarrow B,\ C{=}O\rightarrow Al$$

are present in the metallocene compounds or π-complex compounds.

**8.** Process according to claims 1 to 7, characterised in that in the metallocene compounds M denotes Sc, Y, La, Sm, Nd, Lu, Ti, Zr, Hf, Th, V, Nb, Ta, Cr, preferably Ti, Zr, Hf, V, Nb or Ta.

**9.** Process according to claims 1 to 8, characterised in that the metallocene compounds or the π-complex compounds are used together with an aluminoxane, a borane or borate and optionally additional cocatalysts and/or metal alkyls as a catalyst system.

**10.** Process according to claims 1 to 9, characterised in that rearrangement products of metallocene compounds or of π-complex compounds according to claim 1, with self-activation, during which after opening of the D/A bond the acceptor atom A binds an X ligand with formation of a zwitterionic metallocene complex structure or π-complex structure, a positive charge being produced on the transition metal M and a negative charge being produced on the acceptor atom A, and another X ligand represents H or substituted or unsubstituted C, in whose bonding to the transition metal M the olefin insertion for polymerisation takes place, preferably 2 X ligands being bonded together to form a chelate ligand.

**11.** Process according to claims 1 to 10, characterised in that π-complex compounds according to claim 1, wherein one of the atoms D or A is part of the ring of the associated π-system, preferably wherein D is part of the ring of the associated π-system, are used.

**12.** Process according to claims 1 to 11, characterised in that reaction products corresponding to the formula (XI) or (XIa) of ionising agents are used with metallocene compounds or π-complexes according to formula (I) or (XIII)

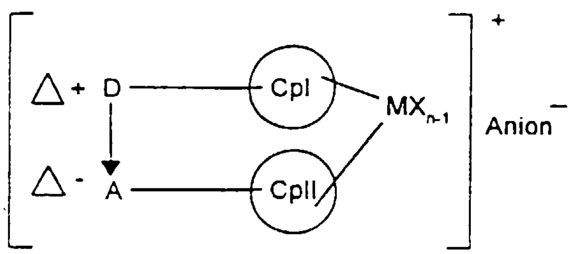

(XIa)

or

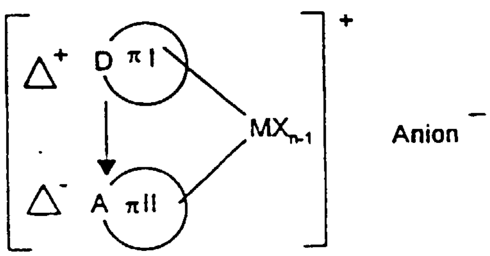

(XIb),

or

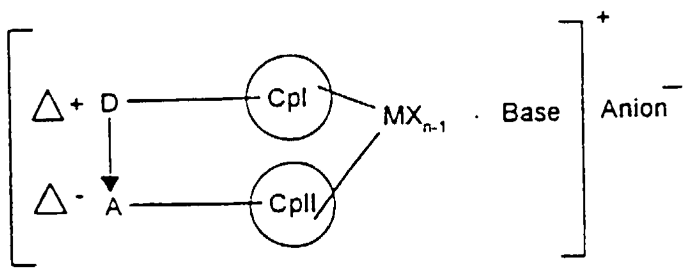

(XIc)

or

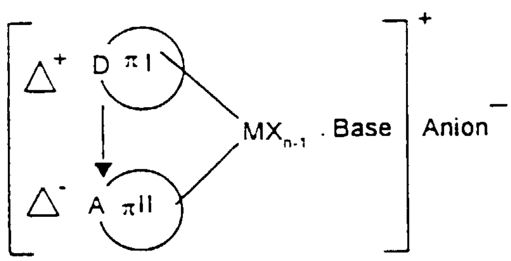

(XId),

wherein
Anion represents the entire bulky, poorly coordinating anion and Base represents a Lewis base.

**13.** Process according to claims 1 to 12, characterised in that its aim is the production of elastomeric PP.

**Revendications**

**1.** Procédé de préparation des élastomères thermoplastiques par (co)polymérisa'tion de monomères appartenant au groupe des α-oléfines en $C_2$-$C_8$, des dioléfines en $C_4$-$C_{15}$, des dioléfines en $C_4$-$C_{15}$ mono- ou dihalogénées, des esters vinyliques, des (méth)acrylates et du styrène, en masse, en solution, en pâte ou en phase gazeuse, en présence de catalyseurs organo-métalliques qui peuvent être activés par des cocatalyseurs, qui est caractérisé en ce que comme catalyseur organo-métallique, on met en oeuvre des composés métallocène de formule :

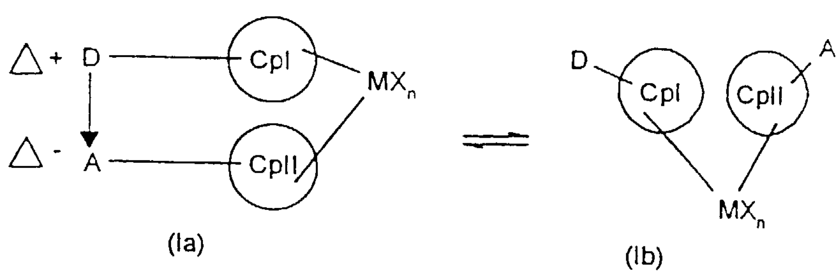

(Ia) (Ib) (I),

dans laquelle

Cpl et CpII représentent deux carbanions identiques ou différents, avec une structure contenant un cyclopentadiényle, dans laquelle l'un à tous les atomes H peuvent être substitués par des restes identiques ou différents appartenant au groupe des alcoyles en $C_1$-$C_{20}$ linéaires ou ramifiés, qui peuvent être substitués une fois à complètement par un halogène, une à trois fois par phényle ainsi que une à trois fois par vinyle, aryles en $C_6$-$C_{12}$, halogénoaryles ayant 6 à 12 atomes C, substituants organo-métalliques comme silyle, triméthylsilyle, ferrocényle ainsi que une ou deux fois par A et D,

D représente un atome donneur, qui peut porter, en outre, des substituants et qui dispose dans son état lié, d'au moins une paire d'électrons libres,

A représente un atome accepteur qui peut porter, en outre, des substituants et qui présente dans son état lié, un déficit en paire d'électrons,

où A et D sont reliés par une liaison coordinative réversible, de sorte que le radical donneur accepte une charge (partielle) positive et le radical accepteur une charge (partielle) négative,

M représente un métal de transition des groupes secondaires III, IV, V ou VI du système périodique des éléments (Mendelejef), y compris les lanthanides et les actinides,

X représente un équivalent anion, et n représente, en fonction de la charge de M,

le nombre 0, 1, 2, 3 ou 4,

ou des composés complexe π et, en particulier, des composés métallocène de formule

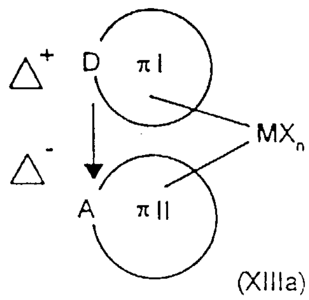
(XIIIa)

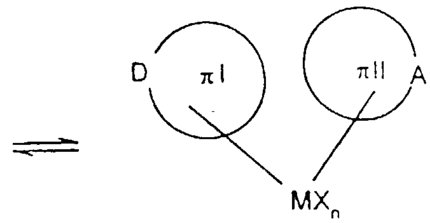
(XIIIb)

(XIII) ,

dans laquelle

πI et πII représentent des systèmes π chargés ou électriquement neutres, différents l'un de l'autre, qui peuvent être condensés une ou deux fois avec des cycles saturés ou insaturés à 5 ou 6 membres,

D représente un atome donneur qui est substituant de πI ou une partie du système π de πI et qui dispose, dans sont état lié, d'au moins une paire d'électrons libres,

A représente un atome accepteur qui est substituant de πII ou une partie du système π de πII et qui présente, dans son état lié, une déficience en paire d'électrons,

où A et D sont reliés par une liaison coordinative réversible, de sorte que le groupe donneur accepte une charge (partielle) positive et le groupe accepteur une charge (partielle) négative et où au moins l'un de D et de A est une partie du systèmes π respectif,

où A et D peuvent porter, pour leur part, des substituants, ou chacun des systèmes π ou chacun des systèmes cycliques condensés peut contenir un ou plusieurs D ou A ou D et A, et

où dans πI et πII, dans la forme non condensée ou dans la forme condensée, indépendamment l'un de l'autre, l'un à tous les atomes H du système π peuvent être substitués par des restes identiques ou différents appartenant au groupe des alcoyles en $C_1$-$C_{20}$ linéaires ou ramifiés, qui peuvent être substitués une fois à complètement par halogène, 1 à 3 fois par phényle ainsi que 1 à 3 fois par vinyle, aryles en $C_6$-$C_{12}$, halogénoaryle ayant 6 à 12 atomes C, substituants organo-métalliques comme silyle, triméthylsilyle, ferrocényle ainsi que une ou deux fois par D et A, de sorte que la liaison coordinative réversible D→A soit constituée (i) entre D et A, qui sont tous deux parties des systèmes π respectifs ou des systèmes cycliques condensés, ou (ii) dont D ou A est une partie du système π ou du système cyclique condensé et chaque autre, un substituant du système π non condensé ou du système cyclique condensé,

M et X ont la signification ci-dessus, et

n représente, en fonction de la charge de M ainsi que de celle de πI et de πII, le nombre 0, 1, 2, 3 ou 4.

**2.** Procédé suivant la revendication 1, caractérisé en ce que les composés métallocène ou les composés complexe π sont mis en oeuvre comme catalyseur en une quantité allant de $10^1$ à $10^{12}$ moles de monomère par mole de métallocène ou de composé complexe π.

**3.** Procédé suivant les revendications 1 et 2, caractérisé en ce que lors de la présence de solvants, on met en oeuvre ceux du groupe des hydrocarbures saturés et aromatiques ou des halogénohydrocarbures saturés ou aromatiques.

**4.** Procédé suivant les revendications 1 à 3, caractérisé en ce que dans les composés métallocène, les carbanions CpI et CpII ou le système $\pi$, $\pi$I représente un squelette cyclopentadiényle parmi le groupe du cyclopentadiène, cyclopentadiène substitué, indène, indène substitué, fluorène et fluorène substitué, dans lesquels chaque cyclopentadiène ou cycle benzène condensé présente 1 à 4 substituants parmi le groupe des alcoyles en $C_1$-$C_{20}$, alcoxy en $C_1$-$C_{20}$, halogène, aryle en $C_6$-$C_{12}$, halogénophényle, D et A, où D et A ont la signification citée à la revendication 1 et où les cycles aromatiques condensés peuvent être partiellement ou complètement hydrogénés.

**5.** Procédé suivant les revendications 1 à 4, caractérisé en ce que dans les composés métallocène, comme atomes donneur D, sont présents des éléments du groupe N, P, As, Sb, Bi, O, S, Se, Te, F, Cl, Br, I, de préférence N, P, O, S.

**6.** Procédé suivant les revendications 1 à 5, caractérisé en ce que dans les composés métallocène, comme atomes accepteur A, sont présents des éléments du groupe B, Al, Ga, In, Tl, de préférence, B, Al, Ga.

**7.** Procédé suivant les revendications 1 à 6, caractérisé en ce que dans les composés métallocène ou composés complexe $\pi$, sont présents des ponts donneur-accepteur parmi le groupe de : N→B, N→Al, P→B, P→Al, O→B, O→Al, Cl→B, Cl→Al, C=O→B, C=O→Al.

**8.** Procédé suivant les revendications 1 à 7, caractérisé en ce que dans les composés métallocène, M représente Sc, Y, La, Sn, Nd, Lu, Ti, Zr, Hf, Th, V, Nb, Ta, Cr, de préférence Ti, Zr, Hf, V, Nb ou Ta.

**9.** Procédé suivant les revendications 1 à 8, caractérisé en ce que les composés métallocène ou les composés complexe $\pi$ sont mis en oeuvre simultanément avec un aluminoxane, un borane ou un borate et facultativement, d'autres cocatalyseurs et/ou alcoyles métalliques comme systèmes catalytiques.

**10.** Procédé suivant les revendications 1 à 9, caractérisé en ce que le produit d'addition des composés métallocène ou des composés complexe $\pi$ suivant la revendication 1, par autoactivation, dans laquelle après ouverture de la liaison D/A, l'atome accepteur A se lie à un ligand X avec formation d'une structure complexe métallocène ou d'une structure complexe $\pi$ zwittérionique, où sur le métal de transition M, il se forme une charge positive et sur l'atome accepteur A, il se forme une charge négative et où un autre ligand X représente H ou un C substitué ou non substitué, dans cette liaison vers le métal de transition M, l'insertion d'oléfine se fait pour la polymérisation, où de préférence, deux ligands X sont liés à un ligand chélate.

**11.** Procédé suivant les revendications 1 à 10, caractérisé en ce qu'on met en oeuvre les composés complexe $\pi$ suivant la revendication 1, dans lesquels l'un des atomes D ou A est une partie du cycle du système $\pi$ respectif, de préférence, en ce que D est une partie du cycle du système $\pi$ respectif.

**12.** Procédé suivant les revendications 1 à 11, caractérisé en ce qu'on met en oeuvre les produits de réaction de formule (XI) ou (XIa) d'agents ionisés de composés métallocène ou de complexes $\pi$ suivant les formules (I) ou (XIII) :

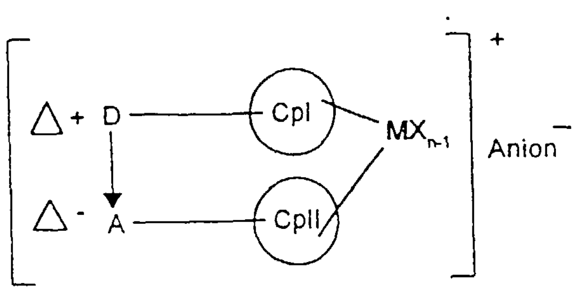

(XIa)

ou

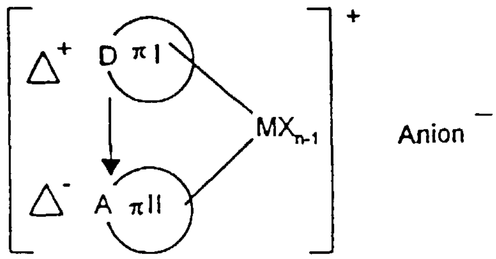

(XIb),

et respectivement

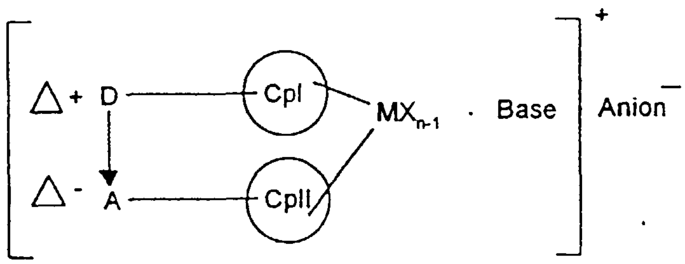

(XIc)

ou

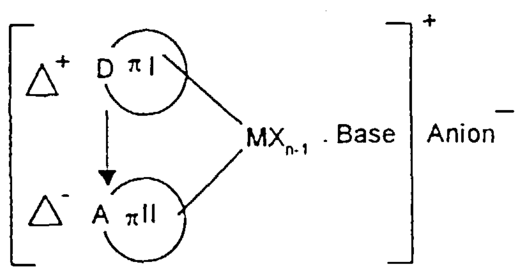

(XId),

dans lesquelles Anion représente l'anion complet encombré faiblement coordiné et Base représente une base de Lewis.

**13.** Procédé suivant les revendications 1 à 12, caractérisé en ce qu'il est destiné à la préparation de ePP.